(19) Europäisches Patentamt
European Patent Office
Office européen des brevets

(11) EP 0 659 758 B1

(12) **EUROPÄISCHE PATENTSCHRIFT**

(45) Veröffentlichungstag und Bekanntmachung des Hinweises auf die Patenterteilung:
**18.11.1998 Patentblatt 1998/47**

(51) Int Cl.[6]: **C08F 10/00**, C08F 4/642, C07F 17/00

(21) Anmeldenummer: **94120162.6**

(22) Anmeldetag: **20.12.1994**

(54) **Metallocene und ihre Verwendung als Katalysatoren**

Metallocenes and their use as catalysts

Metallocènes et leur utilisation comme catalyseurs

(84) Benannte Vertragsstaaten:
**AT BE CH DE DK ES FR GB GR IE IT LI NL PT SE**

(30) Priorität: **21.12.1993 DE 4343566**
**24.12.1993 DE 4344631**
**14.09.1994 DE 4432617**

(43) Veröffentlichungstag der Anmeldung:
**28.06.1995 Patentblatt 1995/26**

(73) Patentinhaber: **TARGOR GmbH**
**55116 Mainz (DE)**

(72) Erfinder:
- **Weller, Thomas Dr.**
  **D-55130 Mainz (DE)**
- **Aulbach, Michael Dr.**
  **D-65719 Hofheim (DE)**
- **Küber, Frank Dr.**
  **D-61440 Oberursel (DE)**
- **Erker, Gerhard Prof.Dr.**
  **D-48159 Münster (DE)**
- **Psiorz, Christian DCh.**
  **D-48161 Münster (DE)**
- **Bachmann, Bernd Dr.**
  **D-65817 Eppstein (DE)**
- **Osan, Frank Dr.**
  **D-65779 Kelkheim (DE)**

(56) Entgegenhaltungen:
**EP-A- 0 490 256**
**EP-A- 0 528 287**
**EP-A- 0 650 981**
**EP-A- 0 721 954**
**WO-A-93/20113**

- **CHEMISCHE BERICHTE, Bd.127, Nr.8, August 1994 Seiten 1551 - 1553 ERKER, G. ET AL. 'SYNTHESIS OF A NOVEL ANNULATED C1-BRIDGED ANSA-METALLOCENE SYSTEM'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 659 758 B1

## Beschreibung

Die vorliegende Erfindung betrifft eine stereorigide Metallocenverbindung, deren Liganden in spezieller Weise miteinander verbunden sind. Die erfindungsgemäße Verbindung kann vorteilhaft als Katalysatorkomponente bei der Herstellung von transparenten Cycloolefincopolymeren mit hohen Reißfestigkeiten eingesetzt werden.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt (EP 129 368, EP 351 392).

Im Tagungsband der 1st Journal of Organometallic Chemistry Conference on Applied Organometallic Chemistry, Seite 136 sind ansa-Metallocen-Komplexe beschrieben, die als Ligandsystem einen substituierten tricyclischen Kohlenwasserstoff aufweisen.

Aus der Literatur ist bekannt, daß mit Metallocen-Aluminoxan-Katalysatorsystemen Cycloolefinhomopolymere und -copolymere hergestellt werden können (EP 283 164, EP 407 870). Die Polymerisation der Cycloolefine verläuft dabei unter Erhalt der Cyclen und kann in Lösungsmitteln oder in Masse durchgeführt werden. Als Lösungsmittel werden z. B. Kohlenwasserstoffe eingesetzt.

Cycloolefincopolymere können mit einem hohen Gehalt an Cycloolefin hergestellt werden, und besitzen dann eine hohe Glastemperatur. Damit verbunden ist eine hohe thermische Formbeständigkeit, weswegen diese Polymere sich zur Verwendung als thermoplastische Formmassen eignen.

Bei Cycloolefincopolymeren, die mittels Metallocentechnologie hergestellt werden, kann man zwei Eigenschaftsreihen unterscheiden.
Cycloolefincopolymere, die mit spiegelsymmetrischen Metallocenen hergestellt werden, weisen relativ niedrige Reißspannungen auf. Cycloolefincopolymere, die durch Einsatz von $C_2$-symmetrischen oder unsymmetrischen Metallocenen hergestellt werden, zeichnen sich im Vergleich dazu durch hohe Reißspannungen aus. Alle bisher bekannten Metallocene, die sich zur Herstellung von Cycloolefincopolymeren mit hohen Reißspannungen eignen, weisen jedoch eine unbefriedigende Polymerisationsaktivität auf (EP 610 851). Entsprechend müssen bei der Polymerisation große Katalysatormengen eingesetzt werden, verbunden mit hohen Herstellungskosten für die angestrebten Cycloolefincopolymere. Außerdem entstehen bei der Verwendung von Ethylen als Comonomer häufig teilkristalline Ethylenpolymerisate als Nebenprodukte, welche die Transparenz der Cycloolefincopolymere deutlich beeinträchtigen können.

Es war daher Aufgabe der Erfindung, eine Metallocenverbindung zur Verfügung zu stellen, welche die Nachteile des Standes der Technik vermeidet und insbesondere bei hoher Katalysatoraktivität Cycloolefincopolymere liefert, die hohe Reißfestigkeiten aufweisen und zudem transparent sind.

Es wurde gefunden, daß durch die Verwendung einer speziell verbrückten Metallocenverbindung diese Aufgabe gelöst werden kann.

Die vorliegende Erfindung betrifft eine stereorigide Metallocenverbindung, die als Liganden zwei substituierte oder unsubstituierte Cyclopentadienylgruppen aufweist, die über ein mono- oder polycyclisches Ringsystem miteinander verbunden sind, wobei eine Cyclapentadienylgruppe an das mono- oder polycyclische Ringsystem anelliert ist und Metallocene ausgenommen sind, die ein 4-($\eta^5$-3'-alkyl-cyclopentadienyl)-4,6,6-trimethyl-($\eta^5$-2-alkyl-4,5-tetrahydropentalen) als Ligandsystem aufweisen.

Bei der Bestimmung der Anzahl der Ringatome des mono- oder polycyclischen Ringsystems werden diejenigen Kohlenstoffatome der an das Ringsystem anellierten Cyclopentadienylgruppe(n) mitgezählt, welche aufgrund der Anellierung Teile des Ringsystems sind. Substituenten an dem mono- oder polycyclischen Ringsystem werden nicht mitgezählt.

Erfindungsgemäß befindet sich eine Cyclopentadienylgruppe als Substituent an dem mono- oder polycyclischen Ringsystem (d.h. die Cyclopentadienylgruppe ist über eine kovalente Bindung an das Ringsystem gebunden), während die weitere Cyclopentadienylgruppe an das mono- oder polycyclische Ringsystem anelliert ist.

Das mono- oder polycyclische Ringsystem kann aromatisch, aliphatisch oder gemischt aromatisch und aliphatisch sein und kann auch Heteroatome wie Stickstoff, Sauerstoff, Schwefel, Silizium oder Germanium enthalten. Es weist bevorzugt 6-40, besonders bevorzugt 6-20 Ringatome, insbesondere Kohlenstoffringatome auf. Das mono- oder polycyclische Ringsystem kann auch Substituenten wie eine $C_1$-$C_{40}$-kohlenwasserstoffhaltige Gruppe tragen.

Anellierte Cyclopentadienylgruppen sind einfach (z.B. über die 1,2- oder 1,3-Position des Cyclopentadienylrings) oder mehrfach (z.B. über die 1,2,3- oder 1,2,3,4-Position des Cyclopentadienylrings), bevorzugt einfach an das mono- oder polycyclische Ringsystem anelliert.

Die Zentraleinheit $M^1R^x{}_n$ der erfindungsgemäßen Metallocenverbindung besteht bevorzugt aus einem Übergangsmetallatom $M^1$, insbesondere der Gruppe IIIb, IVb, Vb oder VIb des Periodensystems der Elemente, welches n Substituenten $R^x$ trägt, die gleich oder verschieden sind und vorzugsweise eine $C_1$-$C_{40}$-kohlenwasserstoffhaltige Gruppe, ein Halogenatom, eine OH-Gruppe oder ein Wasserstoffatom bedeuten. Die Summe aus der Anzahl der Substituenten $R^x$ und der Anzahl der substituierten oder unsubstituierten Cyclopentadienylgruppen (Liganden) entspricht der Wertigkeit des Übergangsmetallatoms $M^1$.

Bevorzugt sind Verbindungen der Formel I

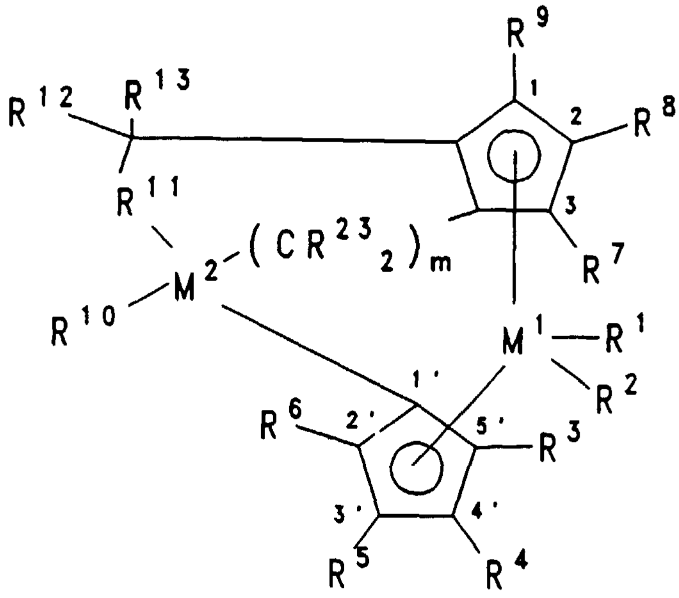

(I)

,worin

| | |
|---|---|
| $M^1$ | ein Metall der Gruppe IIIb, IVb, Vb oder VIb des Periodensystems ist, |
| $M^2$ | Kohlenstoff, Silizium oder Germanium ist, |
| $R^1$ und $R^2$ | gleich oder verschieden sind und ein Wasserstoffatom, eine $C_1$-$C_{40}$-kohlenwasserstoffhaltige Gruppe wie eine $C_1$-$C_{10}$-Alkyl-, eine $C_1$-$C_{10}$-Alkoxy, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^{14}_2$, worin $R^{14}$ ein Halogenatom, eine $C_1$-$C_{10}$-Alkylgruppe oder eine $C_6$-$C_{10}$-Arylgruppe ist, bedeuten, oder $R^1$ und $R^2$ zusammen mit den sie verbindenden Atomen ein Ringsystem bilden, |
| $R^3$, $R^4$, $R^5$, $R^6$, $R^7$, $R^8$ und $R^9$ | gleich oder verschieden sind und ein Wasserstoffatom, ein Halogenatom, eine $C_1$-$C_{20}$-kohlenwasserstoffhaltige Gruppe wie eine $C_1$-$C_{10}$-Alkylgruppe, die halogeniert sein kann, eine $C_6$-$C_{20}$-Arylgruppe, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe, einen $-R^{14}$-$SiR^{14}_3$-, $-NR^{14}_2$-, $-SiOR^{14}_3$-, $-SiSR^{14}_3$- oder $-PR^{14}_2$-Rest bedeuten, worin $R^{14}$ ein Halogenatom, eine $C_1$-$C_{10}$-Alkylgruppe oder eine $C_6$-$C_{10}$-Arylgruppe ist, oder zwei oder mehr benachbarte Reste $R^3$, $R^4$, $R^5$, $R^6$, $R^7$, $R^8$ und $R^9$ Zusammen mit den sie verbindenen Atomen ein Ringsystem bilden, welches bevorzugt 4-40, besonders bevorzugt 6-15 Kohlenstoffatome enthält, |
| $R^{10}$ | ein Wasserstoffatom, oder eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SiR^{14}_3$, $-SR^{14}_2$ oder $-OSiR^{14}_3$ tragen können, worin $R^{14}$ ein Halogenatom, eine $C_1$-$C_{10}$-Alkylgruppe oder eine $C_6$-$C_{10}$-Arylgruppe ist, oder $R^{10}$ mit einem oder mehreren der Reste $R^3$, $R^4$, $R^5$ und $R^6$ verbunden ist, |

$R^{11}$

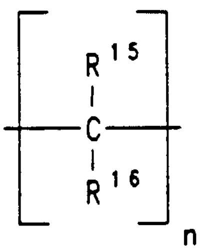 , 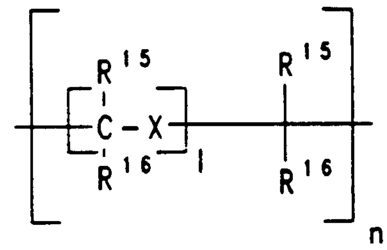 , 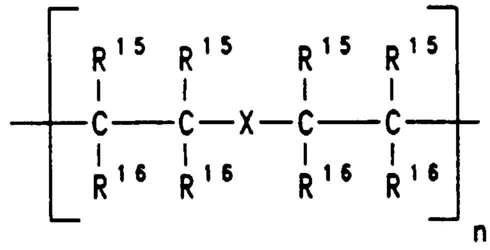 ,

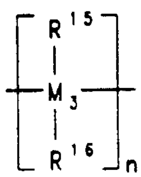 , 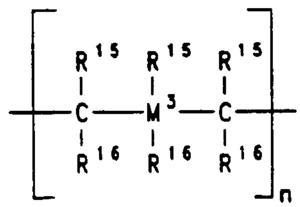 , 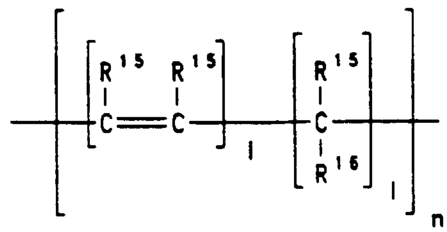

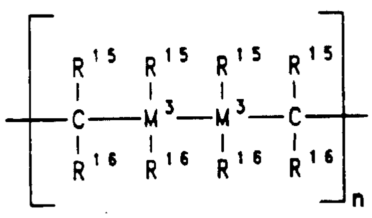 oder 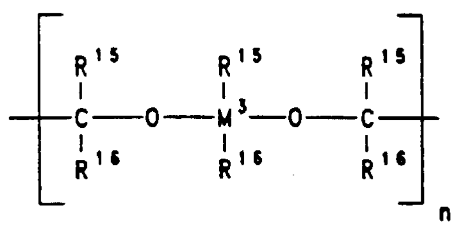

ist, wobei n eine ganze Zahl von 1 bis 20 ist, l ein ganze Zahl von 0 bis 20 ist, X gleich O, = $NR^{14}$, = CO, $=PR^{14}$, $=P(O)R^{14}$, =SO, $=SO_2$ oder -S- ist, worin

$R^{14}$ ein Halogenatom, eine $C_1$-$C_{10}$-Alkylgruppe oder eine $C_6$-$C_{10}$-Arylgruppe ist,

$R^{15}$ und $R^{16}$ gleich oder verschieden sind und ein Wasserstoffatom, ein Halogenatom, oder eine $C_1$-$C_{40}$-kohlenwasserstoffhaltige Gruppe wie eine $C_1$-$C_{10}$-Alkyl-, eine $C_1$-$C_{10}$-Fluoralkyl-, eine $C_1$-$C_{10}$-Alkoxy-, eine $C_6$-$C_{10}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl- oder eine $C_8$-$C_{40}$-Arylalkenylgruppe bedeuten, oder zwei Reste $R^{15}$, zwei Reste $R^{16}$, oder

$R^{15}$ und $R^{16}$ jeweils mit den sie verbindenen Atomen einen oder mehrere Ringe bilden, und $M^3$ Silizium, Germanium oder Zinn ist,

$R^{12}$ und $R^{13}$ gleich oder verschieden ist, und ein Wasserstoffatom, eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$Aryl-, eine $C_6$-$C_{20}$-Aryloxy, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SR^{14}_2$, $-SiR^{14}_3$, $-OSiR^{14}_3$, worin $R^{14}$ ein Halogenatom, eine $C_1$-$C_{10}$-Alkylgruppe oder eine $C_6$-$C_{10}$-Arylgruppe ist, oder Halogen tragen können,

$R^{23}$ gleich oder verschieden sind und ein Wasserstoffatom, ein Halogenatom oder eine $C_1$-$C_{40}$-kohlenwasserstoffhaltige Gruppe wie eine $C_1$-$C_{10}$-Alkylgruppe, eine $C_1$-$C_{10}$-Alkoxy-, eine $C_6$-$C_{10}$-Aryl, eine $C_6$-$C_{25}$-Aryloxy, eine $C_2$-$C_{10}$-Alkenyl-, eine $C_7$-$C_{40}$-Arylalkyl- oder eine $C_7$-$C_{40}$-Arylalkenylgruppe bedeuten, oder einer oder mehr Reste $R^{23}$ mit einem oder mehr Resten $R^{15}$ und $R^{16}$ und/oder einem oder mehr Resten $R^{10}$,

$R^{11}$, $R^{12}$ und $R^{13}$ verbunden sind, und m eine ganze Zahl von O bis 24 ist, wobei für den Fall, daß $M^2$ gleich C, m gleich 0 und $R^{11}$ gleich $CH_2$ ist, mindestens einer der Reste $R^4$, $R^8$, $R^{10}$, $R^{12}$, $R^{13}$ ungleich Alkyl und/oder mindestens einer der Reste $R^3$, $R^5$, $R^6$, $R^7$ und $R^9$ ungleich Wasserstoff ist.

Für Verbindungen der Formel I gilt bevorzugt, daß

| | |
|---|---|
| $M^1$ | Zirkonium oder Hafnium, insbesondere Zirkonium ist, |
| $R^1$ und $R^2$ | gleich sind und eine $C_1$-$C_3$-Alkylgruppe oder ein Halogenatom, insbesondere Chlor bedeuten, |
| $R^3$, $R^4$, $R^5$, $R^6$, $R^7$, $R^8$ und $R^9$ | gleich oder verschieden sind und ein Wasserstoffatom, eine $C_1$-$C_{10}$-Alkylgruppe oder eine $C_6$-$C_{24}$-Arylgruppe sind, oder zwei oder mehr benachbarte Reste zusammen mit den sie verbindenden Atomen ein aromatisches oder aliphatisches Kohlenwasserstoffringsystem bilden, |
| $R^{10}$ | ein Wasserstoffatom, eine $C_6$-$C_{24}$-Arylgruppe oder eine $C_1$-$C_{10}$-Alkylgruppe, insbesondere $C_1$-$C_4$-Alkylgruppe ist, |
| $R^{11}$ | 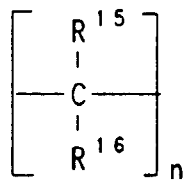 ist, wobei n eine ganze Zahl von 1 bis 8, insbesondere von 2 bis 4 ist, |
| $R^{15}$ und $R^{16}$ | gleich oder verschieden sind und Wasserstoff oder eine $C_1$-$C_{10}$-Alkylgruppe sind, oder zwei Reste $R^{15}$, zwei Reste $R^{16}$, oder $R^{15}$ und $R^{16}$ zusammen mit den sie verbindenden Atomen ein Kohlenwasserstoffringsystem bilden, |
| $M^2$ | Kohlenstoff ist, |
| $R^{12}$ und $R^{13}$ | gleich oder verschieden sind und ein Wasserstoffatom, eine $C_1$-$C_{10}$-Alkylgruppe, insbesondere eine $C_1$-$C_4$-Alkylgruppe, oder eine $C_6$-$C_{10}$-Arylgruppe sind und m = 0 ist. |

Besonders bevorzugt sind Verbindungen der Formel I, worin

| | |
|---|---|
| $M^1$ | Zirkonium ist, |
| $R^1$ und $R^2$ | gleich sind und ein Halogenatom, insbesondere Chlor bedeuten, |
| $R^3$, $R^4$, $R^5$, $R^6$, $R^7$, $R^8$ und $R^9$ | gleich oder verschieden sind und Wasserstoff oder eine $C_1$-$C_4$-Alkylgruppe wie Methyl, Ethyl, Propyl, Isopropyl, Butyl oder Isobutyl oder eine $C_6$-$C_{14}$-Arylgruppe wie Phenyl oder Naphthyl bedeuten, oder |
| $R^8$ und $R^9$ | sowie $R^3$ und $R^4$ und/oder $R^5$ und $R^6$ zusammen mit den sie verbindenden Atomen ein aromatisches Kohlenwasserstoffringsystem bilden, insbesondere einen Sechsring, der seinerseits substituiert sein kann, |
| $M^2$ | ein Kohlenstoffatom ist, |
| $R^{10}$ | eine $C_1$-$C_6$-Alkylgruppe, insbesondere Methyl ist, |

$R^{11}$ -$CH_2$-$CH_2$- ist,

$R^{12}$ und $R^{13}$ gleich oder verschieden sind und eine Methyl- oder Phenyl-Gruppe bedeuten und m = 0 ist.

Vorzugsweise mindestens einer der Reste $R^3$ bis $R^9$, insbesondere mindestens einer der Reste $R^4$, $R^5$ und $R^8$ von Wasserstoff verschieden, insbesondere dann, wenn $R^{11}$ gleich -$CH_2$-$CH_2$- ist.

Beispiele für erfindungsgemäße Metallocenverbindungen sind:

[4-($\eta^5$-Cyclopentadienyl)-4,7,7-trimethyl-($\eta^5$-4,5,6,7-tetrahydroindenyl)]dichlorotitan,
[4-($\eta^5$-Cyclopentadienyl)-4,7,7-trimethyl-($\eta^5$-4,5,6,7-tetrahydroindenyl)]dichlorozirconium,
[4-($\eta^5$-Cyclopentadienyl)-4,7,7-trimethyl-($\eta^5$-4,5,6,7-tetrahydroindenyl)]dichlorohafnium,
[4-($\eta^5$-Cyclopentadienyl)-4,7,7-triphenyl-($\eta^5$-4,5,6,7-tetrahydroindenyl)]dichlorotitan,
[4-($\eta^5$-Cyclopentadienyl)-4,7,7-triphenyl-($\eta^5$-4,5,6,7-tetrahydroindenyl)]dichlorozirconium,
[4-($\eta^5$-Cyclopentadienyl)-4,7-dimethyl-7-phenyl-($\eta^5$-4,5,6,7-tetrahydroindenyl)]dichlorotitan,
[4-($\eta^5$-Cyclopentadienyl)-4,7-dimethyl-7-phenyl-($\eta^5$-4,5,6,7-tetrahydroindenyl)]dichlorozirconium,
[4-($\eta^5$-Cyclopentadienyl)-4,7-dimethyl-7-naphthyl-($\eta^5$-4,5,6,7-tetrahydroindenyl)]dichlorotitan,
[4-($\eta^5$-Cyclopentadienyl)-4,7-dimethyl-7-naphthyl-($\eta^5$-4,5,6,7-tetrahydroindenyl)]dichlorozirconium,
[4-($\eta^5$-Cyclopentadienyl)-4,7-dimethyl-7-butyl-($\eta^5$-4,5,6,7-tetrahydroindenyl)]dichlorotitan,
[4-($\eta^5$-Cyclopentadienyl)-4,7-dimethyl-7-butyl-($\eta^5$-4,5,6,7-tetrahydroindenyl)]dichlorozirconium,
[4-($\eta^5$-3'-tert.Butyl-cyclopentadienyl)-4,7,7-trimethyl-($\eta^5$-4,5,6,7-tetrahydroindenyl)]dichlorotitan,
[4-($\eta^5$-3'-tert. Butyl-cyclopentadienyl)-4,7,7-trimethyl-($\eta^5$-4,5,6,7-tetrahydroindenyl)]dichlorozirconium,
[4-($\eta^5$-3'-tert. Butyl-cyclopentadienyl)-4,7,7-triphenyl-($\eta^5$-4,5,6,7-tetrahydroindenyl)]dichlorotitan,
[4-($\eta^5$-3'-tert. Butyl-cyclopentadienyl)-4,7,7-triphenyl-($\eta^5$-4,5,6,7-tetrahydroindenyl)]dichlorozirconium,
[4-($\eta^5$-3'-tert. Butyl-cyclopentadienyl)-4,7-dimethyl-7-phenyl-($\eta^5$-4,5,6,7-tetrahydroindenyl)]dichlorotitan,
[4-($\eta^5$-3'-tert. Butyl-cyclopentadienyl)-4,7-dimethyl-7-phenyl-($\eta^5$-4,5,6,7-tetrahydroindenyl)]dichlorozirconium,
[4-($\eta^5$-3'-tert. Butyl-cyclopentadienyl)-4,7-dimethyl-7-naphthyl-($\eta^5$-4,5,6,7-tetrahydroindenyl)]dichlorotitan,
[4-($\eta^5$-3'-tert. Butyl-cyclopentadienyl)-4,7-dimethyl-7-naphthyl-($\eta^5$-4,5,6,7-tetrahydroindenyl)]dichlorozirconium,
[4-($\eta^5$-3'-tert. Butyl-cyclopentadienyl)-4,7-dimethyl-7-butyl-($\eta^5$-4,5,6,7-tetrahydroindenyl)]dichlorotitan,
[4-($\eta^5$-3'-tert. Butyl-cyclopentadienyl)-4,7-dimethyl-7-butyl-($\eta^5$-4,5,6,7-tetrahydroindenyl)]dichlorozirconium,
[4-($\eta^5$-Indenyl)-4,7,7-trimethyl-($\eta^5$-4,5,6,7-tetrahydroindenyl)]dichlorotitan,
[4-($\eta^5$-Indenyl)-4,7,7-trimethyl-($\eta^5$-4,5,6,7-tetrahydroindenyl)]dichlorozirconium,
[4-($\eta^5$-Indenyl)-4,7,7-triphenyl-($\eta^5$-4,5,6,7-tetrahydroindenyl)]dichlorotitan,
[4-($\eta^5$-Indenyl)-4,7,7-triphenyl-($\eta^5$-4,5,6,7-tetrahydroindenyl)]dichlorozirconium,
[4-($\eta^5$-Indenyl)-4,7-dimethyl-7-phenyl-($\eta^5$-4,5,6,7-tetrahydroindenyl)]dichlorotitan,
[4-($\eta^5$-Indenyl)-4,7-dimethyl-7-phenyl-($\eta^5$-4,5,6,7-tetrahydroindenyl)]dichlorozirconium,
[4-($\eta^5$-Indenyl)-4,7-dimethyl-7-naphthyl-($\eta^5$-4,5,6,7-tetrahydroindenyl)]dichlorotitan,
[4-($\eta^5$-Indenyl)-4,7-dimethyl-7-naphthyl-($\eta^5$-4,5,6,7-tetrahydroindenyl)]dichlorozirconium,
[4-($\eta^5$-Indenyl)-4,7-dimethyl-7-butyl-($\eta^5$-4,5,6,7-tetrahydroindenyl)]dichlorotitan,
[4-($\eta^5$-Indenyl)-4,7-dimethyl-7-butyl-($\eta^5$-4,5,6,7-tetrahydroindenyl)]dichlorozirconium,
[4-($\eta^5$-Cyclopentadienyl)-4,7,7-trimethyl-($\eta^5$-4,5,6,7-tetrahydrofluorenyl)]dichlorotitan,
[4-($\eta^5$-Cyclopentadienyl)-4,7,7-trimethyl-($\eta^5$-4,5,6,7-tetrahydrofluorenyl)]dichlorozirconium,
[4-($\eta^5$-Cyclopentadienyl)-4,7,7-triphenyl-($\eta^5$-4,5,6,7-tetrahydrofluorenyl)]dichlorotitan,
[4-($\eta^5$-Cyclopentadienyl)-4,7,7-triphenyl-($\eta^5$-4,5,6,7-tetrahydrofluorenyl)]dichlorozirconium,
[4-($\eta^5$-Cyclopentadienyl)-4,7-dimethyl-7-phenyl-($\eta^5$-4,5,6,7-tetrahydrofluorenyl)dichlorotitan,
[4-($\eta^5$-Cyclopentadienyl)-4,7-dimethyl-7-phenyl-($\eta^5$-4,5,6,7-tetrahydrofluorenyl)]dichlorozirconium,
[4-($\eta^5$-Cyclopentadienyl)-4,7-dimethyl-7-naphthyl-($\eta^5$-4,5,6,7-tetrahydrofluorenyl)]dichlorotitan,
[4-($\eta^5$-Cyclopentadienyl)-4,7-dimethyl-7-naphthyl-($\eta^5$-4,5,6,7-tetrahydrofluorenyl)]dichlorozirconium,
[4-($\eta^5$-Cyclopentadienyl)-4,7-dimethyl-7-butyl-($\eta^5$-4,5,6,7-tetrahydrofluorenyl)]dichlorotitan,
[4-($\eta^5$-Cyclopentadienyl)-4,7-dimethyl-7-butyl-($\eta^5$-4,5,6,7-tetrahydrofluorenyl)]dichlorozirconium,
[4-($\eta^5$-3'-Methylcyclopentadienyl)-4,7,7-trimethyl-($\eta^5$-4,5,6,7-tetrahydroindenyl)]dichlorotitan,
[4-($\eta^5$-3'-Methylcyclopentadienyl)-4,7,7-trimethyl-($\eta^5$-4,5,6,7-tetrahydroindenyl)]dichlorozirconium,
[4-($\eta^5$-3'-Methylcyclopentadienyl)-4,7,7-triphenyl-($\eta^5$-4,5,6,7-tetrahydroindenyl)]dichlorotitan,
[4-($\eta^5$-3'-Methylcyclopentadienyl)-4,7,7-triphenyl-($\eta^5$-4,5,6,7-tetrahydroindenyl)]dichlorozirconium,
[4-($\eta^5$-3'-Methylcyclopentadienyl)-4,7-dimethyl-7-phenyl-($\eta^5$-4,5,6,7-tetrahydroindenyl)]dichlorotitan,
[4-($\eta^5$-3'-Methylcyclopentadienyl)-4,7-dimethyl-7-phenyl-($\eta^5$-4,5,6,7-tetrahydroindenyl)]dichlorozirconium,
[4-($\eta^5$-3'-Methylcyclopentadienyl)-4,7-dimethyl-7-naphthyl-($\eta^5$-4,5,6,7-tetrahydroindenyl)]dichlorotitan,
[4-($\eta^5$-3'-Methylcyclopentadienyl)-4,7-dimethyl-7-phenyl-($\eta^5$-4,5,6,7-tetrahydroindenyl)]dichlorozirconium,
[4-($\eta^5$-3'-Methylcyclopentadienyl)-4,7-dimethyl-7-butyl-($\eta^5$-4,5,6,7-tetrahydroindenyl)]dichlorotitan,

[4-($\eta^5$-3'-Methylcyclopentadienyl)-4,7-dimethyl-7-butyl-($\eta^5$-4,5,6,7-tetrahydroindenyl)]dichlorozirconium,
[4-($\eta^5$-Cyclopentadienyl)-4,7,7-trimethyl-($\eta^5$-2-methyl-4,5,6,7-tetrahydroindenyl)]dichlorotitan,
[4-($\eta^5$-Cyclopentadienyl)-4,7,7-trimethyl-($\eta^5$-2-methyl-4,5,6,7-tetrahydroindenyl)]dichlorozirconium,
[4-($\eta^5$-Cyclopentadienyl)-4,7,7-triphenyl-($\eta^5$-2-methyl-4,5,6,7-tetrahydroindenyl)]dichlorotitan,
[4-($\eta^5$-Cyclopentadienyl)-4,7,7-triphenyl-($\eta^5$-2-methyl-4,5,6,7-tetrahydroindenyl)]dichlorozirconium,
[4-($\eta^5$-Cyclopentadienyl)-4,7-dimethyl-7-phenyl-($\eta^5$-2-methyl-4,5,6,7-tetrahydroindenyl)]dichlorotitan,
[4-($\eta^5$-Cyclopentadienyl)-4,7-dimethyl-7-phenyl-($\eta^5$-2-methyl-4,5,6,7-tetrahydroindenyl)]dichlorozirconium,
[4-($\eta^5$-Cyclopentadienyl)-4,7-dimethyl-7-naphthyl-($\eta^5$-2-methyl-4,5,6,7-tetrahydroindenyl)]dichlorotitan,
[4-($\eta^5$-Cyclopentadienyl)-4,7-dimethyl-7-naphthyl-($\eta^5$-2-methyl-4,5,6,7-tetrahydroindenyl)]dichlorozirconium,
[4-($\eta^5$-Cyclopentadienyl)-4,7-dimethyl-7-butyl-($\eta^5$-2-methyl-4,5,6,7-tetrahydroindenyl)]dichlorotitan,
[4-($\eta^5$-Cyclopentadienyl)-4,7-dimethyl-7-butyl-($\eta^5$-2-methyl-4,5,6,7-tetrahydroindenyl)]dichlorozirconium,
[4-($\eta^5$-3'-Methylcyclopentadienyl)-4,7,7-trimethyl-($\eta^5$-2-methyl-4,5,6,7-tetrahydroindenyl)]dichlorotitan,
[4-($\eta^5$-3'-Methylcyclopentadienyl)-4,7,7-trimethyl-($\eta^5$-2-methyl-4,5,6,7-tetrahydroindenyl)]dichlorozirconium,
[4-($\eta^5$-3'-Methylcyclopentadienyl)-4,7,7-triphenyl-($\eta^5$-2-methyl-4,5,6,7-tetrahydroindenyl)]dichlorotitan,
[4-($\eta^5$-3'-Methylcyclopentadienyl)-4,7,7-triphenyl-($\eta^5$-2-methyl-4,5,6,7-tetrahydroindenyl)]dichlorozirconium,
[4-($\eta^5$-3'-Methylcyclopentadienyl)-4,7-dimethyl-7-phenyl-($\eta^5$-2-methyl-4,5,6,7-tetrahydroindenyl)]dichlorotitan,
[4-($\eta^5$-3'-Methylcyclopentadienyl)-4,7-dimethyl-7-phenyl-($\eta^5$-2-methyl-4,5,6,7-tetrahydroindenyl)]dichlorozirconium,
[4-($\eta^5$-3'-Methylcyclopentadienyl)-4,7-dimethyl-7-naphthyl-($\eta^5$-2-methyl-4,5,6,7-tetrahydroindenyl)]dichlorotitan,
[4-($\eta^5$-3'-Methylcyclopentadienyl)-4,7-dimethyl-7-naphthyl-($\eta^5$-2-methyl-4,5,6,7-tetrahydroindenyl)]dichlorozirconium,
[4-($\eta^5$-3'-Methylcyclopentadienyl)-4,7-dimethyl-7-butyl-($\eta^5$-2-methyl-4,5,6,7-tetrahydroindenyl)]dichlorotitan,
[4-($\eta^5$-3'-Methylcyclopentadienyl)-4,7-dimethyl-7-butyl-($\eta^5$-2-methyl-4,5,6,7-tetrahydroindenyl)]dichlorozirconium,
[4-($\eta^5$-Fluorenyl)-4,7,7-trimethyl-($\eta^5$-4,5,6,7-tetrahydroindenyl)]dichlorotitan,
[4-($\eta^5$-Fluorenyl)-4,7,7-trimethyl-($\eta^5$-4,5,6,7-tetrahydroindenyl)]dichlorozirconium,
[4-($\eta^5$-Fluorenyl)-4,7,7-triphenyl-($\eta^5$-4,5,6,7-tetrahydroindenyl)]dichlorotitan,
[4-($\eta^5$-Fluorenyl)-4,7,7-triphenyl-($\eta^5$-4,5,6,7-tetrahydroindenyl)]dichlorozirconium,
[4-($\eta^5$-Fluorenyl)-4,7-dimethyl-7-phenyl-($\eta^5$-4,5,6,7-tetrahydroindenyl)]dichlorotitan,
[4-($\eta^5$-Fluorenyl)-4,7-dimethyl-7-phenyl-($\eta^5$-4,5,6,7-tetrahydroindenyl)]dichlorozirconium,
[4($\eta^5$-Fluorenyl)-4,7-dimethyl-7-naphthyl-($\eta^5$-4,5,6,7-tetrahydroindenyl)]dichlorotitan,
[4-($\eta^5$-Fluorenyl)-4,7-dimethyl-7-naphthyl-($\eta^5$-4,5,6,7-tetrahydroindenyl)]dichlorozirconium,
[4-($\eta^5$-Fluorenyl)-4,7-dimethyl-7-butyl-($\eta^5$-4,5,6,7-tetrahydroindenyl)]dichlorotitan,
[4-($\eta^5$-Fluorenyl)-4,7-dimethyl-7-butyl-($\eta^5$-4,5,6,7-tetrahydroindenyl)]dichlorozirconium,
[4-($\eta^5$-Cyclopentadienyl)-4,7,7-trimethyl-4,5,6,7,10,11,12,13-octahydro-5,6-benzoindenyl)]dichlorozirconium,
[5-($\eta^5$-Cyclopentadienyl)-4,7,7-trimethyl-($\eta^5$-4,5,6,7-tetrahydroindenyl)]dichlorotitan,
[5-($\eta^5$-Cyclopentadienyl)-4,7,7-trimethyl-($\eta^5$-4,5,6,7-tetrahydroindenyl)]dichlorozirconium,
[5-($\eta^5$-Cyclopentadienyl)-4,7,7-trimethyl-($\eta^5$-4,5,6,7-tetrahydroindenyl)]dichlorotitan,
[5-($\eta^5$-Cyclopentadienyl)-4,7,7-triphenyl-($\eta^5$-4,5,6,7-tetrahydroindenyl)]dichlorozirconium,
[5-($\eta^5$-Cyclopentadienyl)-4,7-dimethyl-7-phenyl-($\eta^5$-4,5,6,7-tetrahydroindenyl)]dichlorotitan,
[5-($\eta^5$-Cyclopentadienyl)-4,7-dimethyl-7-phenyl-($\eta^5$-4,5,6,7-tetrahydroindenyl)]dichlorozirconium,
[5-($\eta^5$-Cyclopentadienyl)-4,7-dimethyl-7-naphthyl-($\eta^5$-4,5,6,7-tetrahydroindenyl)]dichlorotitan,
[5-($\eta^5$-Cyclopentadienyl)-4,7-dimethyl-7-naphthyl-($\eta^5$-4,5,6,7-tetrahydroindenyl)]dichlorozirconium,
[5-($\eta^5$-Cyclopentadienyl)-4,7-dimethyl-7-butyl-($\eta^5$-4,5,6,7-tetrahydroindenyl)]dichlorotitan,
[5-($\eta^5$-Cyclopentadienyl)-4,7-dimethyl-7-butyl-($\eta^5$-4,5,6,7-tetrahydroindenyl)]dichlorozirconium,
[5-($\eta^5$-3'-tert.Butyl-cyclopentadienyl)-4,7,7-trimethyl-($\eta^5$-4,5,6,7-tetrahydroindenyl)]dichlorotitan,
[5-($\eta^5$-3'-tert.Butyl-Cyclopentadienyl)-4,7,7-trimethyl-($\eta^5$-4,5,6,7-tetrahydroindenyl)]dichlorozirconium,
[5-($\eta^5$-3'-tert.Butyl-cyclopentadienyl)-4,7,7-trimethyl-($\eta^5$-4,5,6,7-tetrahydroindenyl)]dichlorotitan,
[5-($\eta^5$-3'-tert.Butyl-cyclopentadienyl)-4,7,7-triphenyl-($\eta^5$-4,5,6,7-tetrahydroindenyl)]dichlorozirconium,
[5-($\eta^5$-3'-tert.Butyl-cyclopentadienyl)-4,7-dimethyl-7-phenyl-($\eta^5$-4,5,6,7-tetrahydroindenyl)]dichlorotitan,
[5-($\eta^5$-3'-tert.Butyl-cyclopentadienyl)-4,7-dimethyl-7-phenyl-($\eta^5$-4,5,6,7-tetrahydroindenyl)]dichlorozirconium,
[5-($\eta^5$-3'-tert. Butyl-cyclopentadienyl)-4,7-dimethyl-7-naphthyl-($\eta^5$-4,5,6,7-tetrahydroindenyl)]dichlorotitan,
[5-($\eta^5$-3'-tert. Butyl-cyclopentadienyl)-4,7-dimethyl-7-naphthyl-($\eta^5$-4,5,6,7-tetrahydroindenyl)]dichlorozirconium,
[5-($\eta^5$-3'-tert. Butyl-cyclopentadienyl)-4,7-dimethyl-7-butyl-($\eta^5$-4,5,6,7-tetrahydroindenyl)]dichlorotitan,
[5-($\eta^5$-3'-tert. Butyl-cyclopentadienyl)-4,7-dimethyl-7-butyl-($\eta^5$-4,5,6,7-tetrahydroindenyl)]dichlorozirconium,
[5-($\eta^5$-Indenyl)-4,7,7-trimethyl-($\eta^5$-4,5,6,7-tetrahydroindenyl)]dichlorotitan,
[5-($\eta^5$-Indenyl)-4,7,7-trimethyl-($\eta^5$-4,5,6,7-tetrahydroindenyl)]dichlorozirconium,
[5-($\eta^5$-Indenyl)-4,7,7-triphenyl-($\eta^5$-4,5,6,7-tetrahydroindenyl)]dichlorotitan,
[5-($\eta^5$-Indenyl)-4,7,7-triphenyl-($\eta^5$-4,5,6,7-tetrahydroindenyl)]dichlorozirconium,
[5-($\eta^5$-Indenyl)-4,7-dimethyl-7-phenyl-($\eta^5$-4,5,6,7-tetrahydroindenyl)]dichlorotitan,
[5-($\eta^5$-Indenyl)-4,7-dimethyl-7-phenyl-($\eta^5$-4,5,6,7-tetrahydroindenyl)]dichlorozirconium,

[5-($\eta^5$-Indenyl)-4,7-dimethyl-7-naphthyl-($\eta^5$-4,5,6,7-tetrahydroindenyl)]dichlorotitan,
[5-($\eta^5$-Indenyl)-4,7-dimethyl-7-naphthyl-($\eta^5$-4,5,6,7-tetrahydroindenyl)]dichlorozirconium,
[5-($\eta^5$-Indenyl)-4,7-dimethyl-7-butyl-($\eta^5$-4,5,6,7-tetrahydroindenyl)]dichlorotitan,
[5-($\eta^5$-Indenyl)-4,7-dimethyl-7-butyl-($\eta^5$-4,5,6,7-tetrahydroindenyl)]dichlorozirconium,
[5-($\eta^5$-Cyclopentadienyl)-4,7,7-trimethyl-($\eta^5$-4,5,6,7-tetrahydrofluorenyl)]dichlorotitan,
[5-($\eta^5$-Cyclopentadienyl)-4,7,7-trimethyl-($\eta^5$-4,5,6,7-tetrahydrofluorenyl)]dichlorozirconium,
[5-($\eta^5$-Cyclopentadienyl)-4,7,7-triphenyl-($\eta^5$-4,5,6,7-tetrahydrofluorenyl)]dichlorotitan,
[5-($\eta^5$-Cyclopentadienyl)-4,7,7-triphenyl-($\eta^5$-4,5,6,7-tetrahydrofluorenyl)]dichlorozirconium,
[5-($\eta^5$-Cyclopentadienyl)-4,7-dimethyl-7-phenyl-($\eta^5$-4,5,6,7-tetrahydrofluorenyl)]dichlorotitan,
[5-($\eta^5$-Cyclopentadienyl)-4,7-dimethyl-7-phenyl-($\eta^5$-4,5,6,7-tetrahydrofluorenyl)]dichlorozirconium,
[5-($\eta^5$-Cyclopentadienyl)-4,7-dimethyl-7-naphthyl-($\eta^5$-4,5,6,7-tetrahydrofluorenyl)]dichlorotitan,
[5-($\eta^5$-Cyclopentadienyl)-4,7-dimethyl-7-naphthyl-($\eta^5$-4,5,6,7-tetrahydrofluorenyl)]dichlorozirconium,
[5-($\eta^5$-Cyclopentadienyl)-4,7-dimethyl-7-butyl-($\eta^5$-4,5,6,7-tetrahydrofluorenyl)]dichlorotitan,
[5-($\eta^5$-Cyclopentadienyl)-4,7-dimethyl-7-butyl-($\eta^5$-4,5,6,7-tetrahydrofluorenyl)]dichlorozirconium,
[5-($\eta^5$-Fluorenyl)-4,7,7-trimethyl-($\eta^5$-4,5,6,7-tetrahydroindenyl)]dichlorotitan,
[5-($\eta^5$-Fluorenyl)-4,7,7-trimethyl-($\eta^5$-4,5,6,7-tetrahydroindenyl)]dichlorozirconium,
[5-($\eta^5$-Fluorenyl)-4,7,7-triphenyl-($\eta^5$-4,5,6,7-tetrahydroindenyl)]dichlorotitan,
[5-($\eta^5$-Fluorenyl)-4,7,7-triphenyl-($\eta^5$-4,5,6,7-tetrahydroindenyl)]dichlorozirconium,
[5-($\eta^5$-Fluorenyl)-4,7-dimethyl-7-phenyl-($\eta^5$-4,5,6,7-tetrahydroindenyl)]dichlorotitan,
[5-($\eta^5$-Fluorenyl)-4,7-dimethyl-7-phenyl-($\eta^5$-4,5,6,7-tetrahydroindenyl)]dichlorozirconium,
[4-($\eta^5$-3'-Isopropyl-cyclopentadienyl)-4,7,7-trimethyl-$\eta^5$-4,5,6,7-tetrahydroindenyl]dichlorozirkonium
[4-($\eta^5$-4'-Isopropyl-cyclopentadienyl)-4,7,7-trimethyl-$\eta^5$-4,5,6,7-tetrahydroindenyl]dichlorozirkonium
[4-($\eta^5$-3'-Isopropyl-cyclopentadienyl)-2-isopropyl-4,7,7-trimethyl-$\eta^5$-4,5,6,7-tetrahydroindenyl]dichlorozirkonium
[4-($\eta^5$-4'-Isopropyl-cyclopentadienyl)-2-isopropyl-4,7,7-trimethyl-$\eta^5$-4,5,6,7-tetrahydroindenyl]dichlorozirkonium
[4-($\eta^5$-3'-Isopropyl-cyclopentadienyl)-4,7-dimethyl-7-phenyl-$\eta^5$-4,5,6,7-tetrahydroindenyl]dichlorozirkonium
[4-($\eta^5$-4'-Isopropyl-cyclopentadienyl)-4,7-dimethyl-7-phenyl-$\eta^5$-4,5,6,7-tetrahydroindenyl]dichlorozirkonium
[4-($\eta^5$-3'-Isopropyl-cyclopentadienyl)-2-isopropyl-4,7-dimethyl-7-phenyl-$\eta^5$-4,5,6,7-tetrahydroindenyl]dichlorozirkonium
[4-($\eta^5$-4'-Isopropyl-cyclopentadienyl)-2-isopropyl-4,7-dimethyl-7-phenyl-$\eta^5$-4,5,6,7-tetrahydroindenyl]dichlorozirkonium
[4-($\eta^5$-3'-Trimethylsilyl-cyclopentadienyl)-4,7,7-trimethyl-$\eta^5$-4,5,6,7-tetrahydroindenyl)dichlorozirkonium
[4-($\eta^5$-4'-Trimethylsilyl-cyclopentadienyl)-4,7,7-trimethyl-$\eta^5$-4,5,6,7-tetrahydroindenyl]dichlorozirkonium
[4-($\eta^5$-3'-Trimethylsilyl-cyclopentadienyl)-2-trimethylsilyl-4,7,7-trimethyl-$\eta^5$-4,5,6,7-tetrahydroindenyl]dichlorozirkonium
[4-($\eta^5$-4'-Trimethylsilyl-cyclopentadienyl)-2-trimethylsilyl-4,7,7-trimethyl-$\eta^5$-4,5,6,7-tetrahydroindenyl]dichlorozirkonium
[4-($\eta^5$-3'-(tert.-Butyl-dimethylsilyl)-cyclopentadienyl)-4,7,7-trimethyl-$\eta^5$-4,5,6,7-tetrahydroindenyl]dichlorozirkonium
[4-($\eta^5$-4'-(tert.-Butyl-dimethylsilyl)-cyclopentadienyl)-4,7,7-trimethyl-$\eta^5$-4,5,6,7-tetrahydroindenyl]dichlorozirkonium
[4-($\eta^5$-3'-(tert.-Butyl-dimethylsilyl)-cyclopentadienyl)-2-(tert.-butyl-dimethylsilyl)-4,7,7-trimethyl-$\eta^5$-4,5,6,7-tetrahydroindenyl]dichlorozirkonium
[4-($\eta^5$-4'-(tert.-Butyl-dimethylsilyl)-cyclopentadienyl)-2-(tert.-butyl-dimethylsilyl)-4,7,7-trimethyl-$\eta^5$-4,5,6,7-tetrahydroindenyl]dichlorozirkonium
[4-($\eta^5$-3'-Trimethylsilyl-cyclopentadienyl)-4,7-dimethyl-7-phenyl-$\eta^5$-4,5,6,7-tetrahydroindenyl]dichlorozirkonium
[4-($\eta^5$-4'-Trimethylsilyl-cyclopentadienyl)-4,7-dimethyl-7-phenyl-$\eta^5$-4,5,6,7-tetrahydroindenyl]dichlorozirkonium
[4-($\eta^5$-3'-Trimethylsilyl-cyclopentadienyl)-2-trimethylsilyl-4,7-dimethyl-7-phenyl-$\eta^5$-4,5,6,7-tetrahydroindenyl]dichlorozirkonium
[4-($\eta^5$-4'-Trimethylsilyl-cyclopentadienyl)-2-trimethylsilyl-4,7-dimethyl-7-phenyl-$\eta^5$-4,5,6,7-tetrahydroindenyl]dichlorozirkonium
[4-($\eta^5$-3'-Phenyl-cyclopentadienyl)-4,7,7-trimethyl-$\eta^5$-4,5,6,7-tetrahydroindenyl]dichlorozirkonium
[4-($\eta^5$-4'-Phenyl-cyclopentadienyl)-4,7,7-trimethyl-$\eta^5$-4,5,6,7-tetrahydroindenyl]dichlorozirkonium
[4-($\eta^5$-3'-Phenyl-cyclopentadienyl)-2-phenyl-4,7,7-trimethyl-$\eta^5$-4,5,6,7-tetrahydroindenyl]dichlorozirkonium
[4-($\eta^5$-4'-Phenyl-cyclopentadienyl)-2-phenyl-4,7,7-trimethyl-$\eta^5$-4,5,6,7-tetrahydroindenyl]dichlorozirkonium
[4-($\eta^5$-3'-Phenyl-cyclopentadienyl)-4,7-dimethyl-7-phenyl-$\eta^5$-4,5,6,7-tetrahydroindenyl]dichlorozirkonium
[4-($\eta^5$-4'-Phenyl-cyclopentadienyl)-4,7-dimethyl-7-phenyl-$\eta^5$-4,5,6,7-tetrahydroindenyl]dichlorozirkonium
[4-($\eta^5$-3'-Phenyl-cyclopentadienyl)-2-phenyl-4,7-dimethyl-7-phenyl-$\eta^5$-4,5,6,7-tetrahydroindenyl]dichlorozirkonium
[4-($\eta^5$-4'-Phenyl-cyclopentadienyl)-2-phenyl-4,7-dimethyl-7-phenyl-$\eta^5$-4,5,6,7-tetrahydroindenyl]dichlorozirkonium
[4-($\eta^5$-4'-Methyl-cyclopentadienyl)-4,7,7-trimethyll-$\eta^5$-4,5,6,7-tetrahydroindenyl]dichlorozirkonium
[4-($\eta^5$-4'-Methyl-cyclopentadienyl)-2-methyl-4,7,7-trimethyl-$\eta^5$-4,5,6,7-tetrahydroindenyl]dichlorozirkonium

[4-($\eta^5$-4'-Methyl-cyclopentadienyl)-2-methyl-4,7-dimethyl-7-phenyl-$\eta^5$-4,5,6,7-tetrahydroindenyl]dichlorozirkonium
[4-($\eta^5$-4'-tert.-Butyl-cyclopentadienyl)-2-tert.-butyl-4,7,7-trimethyl-$\eta^5$-4,5,6,7-tetrahydroindenyl]dichlorozirkonium
[4-($\eta^5$-3'-tert.-Butyl-cyclopentadienyl)-2-tert.-butyl-4,7,7-trimethyl-$\eta^5$-4,5,6,7-tetrahydroindenyl]dichlorozirkonium
[4-($\eta^5$-4'-tert.-Butyl-cyclopentadienyl)-4,7,7-trimethyl-$\eta^5$-4,5,6,7-tetrahydroindenyl]dichlorozirkonium
[4-($\eta^5$-3'-Benzyl-cyclopentadienyl)-4,7,7-trimethyl-$\eta^5$-4,5,6,7-tetrahydroindenyl]dichlorozirkonium
[4-($\eta^5$-4'-Benzyl-cyclopentadienyl)-4,7,7-trimethyl-$\eta^5$-4,5,6,7-tetrahydroindenyl]dichlorozirkonium
[4-($\eta^5$-3'-Benzyl-cyclopentadienyl)-2-benzyl-4,7,7-trimethyl-$\eta^5$-4,5,6,7-tetrahydroindenyl]dichlorozirkonium
[4-($\eta^5$-4'-Benzyl-cyclopentadienyl)-2-benzyl-4,7,7-trimethyl-$\eta^5$-4,5,6,7-tetrahydroindenyl]dichlorozirkonium
[4-($\eta^5$-Cyclopentadienyl)-4-butyl-7,7-dimethyl-$\eta^5$-4,5,6,7-tetrahydroindenyl]dichlorozirkonium
[4-($\eta^5$-Cyclopentadienyl)-4-butyl-7-methyl-7-butyl-$\eta^5$-4,5,6,7-tetrahydroindenyl]dichlorozirkonium
[4-($\eta^5$-Cyclopentadienyl)-4-butyl-7,7-methyl-$\eta^5$-4,5,6,7-tetrahydroindenyl]dichlorozirkonium
[4-($\eta^5$-Cyclopentadienyl)-4-methyl-7-butyl-7-phenyl-$\eta^5$-4,5,6,7-tetrahydroindenyl]dichlorozirkonium
[4-($\eta^5$-Cyclopentadienyl)-4-butyl-7-methyl-7-phenyl-$\eta^5$-4,5,6,7-tetrahydroindenyl]dichlorozirkonium
[4-($\eta^5$-3'-Isopropyl-cyclopentadienyl)-2-isopropyl-4-butyl-7,7-dimethyl-$\eta^5$-4,5,6,7-tetrahydroindenyl]dichlorozirkonium
[4-($\eta^5$-4'-Isopropyl-cyclopentadienyl)-2-isopropyl-4-butyl-7,7-dimethyl-$\eta^5$-4,5,6,7-tetrahyrdroindenyl]dichlorozirkonium
[4-($\eta^5$-3'-Isopropyl-cyclopentadienyl)-2-isopropyl-4-butyl-7-butyl-7-methyl-$\eta^5$-4,5,6,7-tetrahydroindenyl]dichlorozirkonium
[4-($\eta^5$-4'-Isopropyl-cyclopentadienyl)-2-isopropyl-4-butyl-7-methyl-7-phenyl-$\eta^5$-4,5,6,7-tetrahydroindenyl]dichlorozirkonium
[4-($\eta^5$-3'-Isopropyl-cyclopentadienyl)-4-butyl-7-butyl-7-methyl-$\eta^5$-4,5,6,7-tetrahydroindenyl]dichlorozirkonium
[4-($\eta^5$-4'-Isopropyl-cyclopentadienyl)-4-butyl-7-methyl-7-phenyl-$\eta^5$-4,5,6,7-tetrahydroindenyl]dichlorozirkonium
[4-($\eta^5$-Cyclopentadienyl)-4,7-dimethyl-7-(2-propen-1-yl)-($\eta^5$-4,5,6,7-tetrahydroindenyl]dichiorozirkonium
[4-($\eta^5$-3'-Isopropylcyclopentadienyl)-4,7-dimethyl-7-(2-propen-1-yl)-($\eta^5$-4,5,6,7-tetrahydroindenyl]dichlorozirkonium
[4-($\eta^5$-Cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-3'-Isopropyl-cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-4'-Isopropyl-cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-3'-tert.-Butyl-cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-4'-tert.-Butyl-cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-3'-Methyl-cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-3'-Isopropyl-cyclopentadienyl)-2-isopropyl-4,7-dimethyl-7-(3-(9-borabicyclo{3,3,1}nonyl-B)propyl)-($\eta^5$-4,5,6,7-tetrahydroindenyl]dichlorozirkonium
[4-($h^5$-4'-Isopropyl-cyclopentadienyl)-2-isopropyl-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-3'-Ethyl-cyclopentadienyl)-4,7,7-trimethyl-$\eta^5$-4,5,6,7-tetrahydroindenyl]dichlorozirkonium
[4-($\eta^5$-4'-Ethyl-cyclopentadienyl)-4,7,7-trimethyl-$\eta^5$-4,5,6,7-tetrahydroindenyl]dichlorozirkonium
[4-($\eta^5$-3'-Ethyl-cyclopentadienyl)-2-ethyl-4,7,7-trimethyl-$\eta^5$-4,5,6,7-tetrahydroindenyl]dichlorozirkonium
[4-($\eta^5$-4'-Ethyl-cyclopentadienyl)-2-ethyl-4,7,7-trimethyl-$\eta^5$-4,5,6,7-tetrahydroindenyl]dichlorozirkonium
[4-($\eta^5$-3'-Isopropyl-cyclopentadienyl)-2-phenyl-4,7,7-trimethyl-$\eta^5$-4,5,6,7-tetrahydroindenyl]dichlorozirkonium
[4-($\eta^5$-4'-Isopropyl-cyclopentadienyl)-2-phenyl-4,7,7-trimethyl-$\eta^5$-4,5,6,7-tetrahydroindenyl]dichlorozirkonium
[4-($\eta^5$-3'-Isopropyl-cyclopentadienyl)-2-methyl-4,7,7-trimethyl-$\eta^5$-4,5,6,7-tetrahydroindenyl]dichlorozirkonium
[4-($\eta^5$-4'-Isopropyl-cyclopentadienyl)-2-methyl-4,7,7-trimethyl-$\eta^5$-4,5,6,7-tetrahydroindenyl]dichlorozirkonium
[4-($\eta^5$-3'-Isopropyl-cyclopentadienyl)-2-phenyl-4,7,7-trimethyl-$\eta^5$-4,5,6,7-tetrahydroindenyl]dichlorozirkonium
[4-($\eta^5$-4'-Isopropyl-cyclopentadienyl)-2-phenyl-4,7,7-trimethyl-$\eta^5$-4,5,6,7-tetrahydroindenyl]dichlorozirkonium
[4-($\eta^5$-2-Indenyl)-4,7,7-trimethyl-$\eta^5$-4,5,6,7-tetrahydroindenyl]dichlorozirkonium [4-($\eta^5$-2-(4,5,6,7-tetrahydro)-indenyl)-4,7,7-trimethyl-$\eta^5$-4,5,6,7-tetrahydroindenyldichlorozirkonium
[4-($\eta^5$-2-Indenyl)-2-methyl-4,7,7-trimethyl-$\eta^5$-4,5,6,7-tetrahydroindenyl]dichlorozirkonium
[4-($\eta^5$-2-(4,5,6,7-tetrahydro)-indenyl)-2-isopropyl-4,7,7-trimethyl-$\eta^5$-4,5,6,7-tetrahydroindenyl]dichlorozirkonium
[4-($\eta^5$-2-Indenyl)-2-phenyl-4,7,7-trimethyl-$\eta^5$-4,5,6,7-tetrahydroindenyl]dichlorozirkonium
[4-($\eta^5$-2-(4,5,6,7-tetrahydro)-indenyl)-2-butyl-4,7,7-trimethyl-$\eta^5$-4,5,6,7-tetrahydroindenyl]dichlorozirkonium
[4-($\eta^5$-2-Indenyl)-2-trimethylsilyl-4,7,7-trimethyl-$\eta^5$-4,5,6,7-tetrahydroindenyl]dichlorozirkonium
[4-($\eta^5$-2-(4,5,6,7-tetrahydro)-indenyl)-2-trimethylsilyl-4,7,7-trimethyl-$n^5$-4,5,6,7-tetrahydroindenyl]dichlorozirkonium

[4-($\eta^5$-2-Indenyl)-2-isopropyl-4,7,7-trimethyl-$\eta^5$-4,5,6,7-tetrahydroindenyl]dichlorozirkonium
[4-($\eta^5$-2-(4,5,6,7-tetrahydro)-indenyl)-2-methyl-4,7,7-trimethyl-$\eta^5$-4,5,6,7-tetrahydroindenyl]dichlorozirkonium
[4-($\eta^5$-2-Indenyl)-2-butyl-4,7,7-trimethyl-$\eta^5$-4,5,6,7-tetrahydroindenyl]dichlorozirkonium [4-($\eta^5$-2-(4,5,6,7-tetrahydro)-indenyl)-2-phenyl-4,7,7-trimethyl-$\eta^5$-4,5,6,7-tetrahydroindenyl]dichlorozirkonium
[4-($\eta^5$-3'-Isopropyl-cyclopentadienyl)-2-methyl-4,7,7-trimethyl-$\eta^5$-4,5,6,7-tetrahydroindenyl]dichlorozirkonium
[4-($\eta^5$-4'-Isopropyl-cyclopentadienyl)-2-methyl-4,7,7-trimethyl-$\eta^5$-4,5,6,7-tetrahydroindenyl]dichlorozirkonium
[4-($\eta^5$-3'-Isopropyl-cyclopentadienyl)-4,7,7-trimethyl-$\eta^5$-4,5,6,7-tetrahydrofluorenyl]dichlorozirkonium
[4-($\eta^5$-4'-Isopropyl-cyclopentadienyl)-4,7,7-trimethyl-$\eta^5$-4,5,6,7-tetrahydrofluorenyl]dichlorozirkonium
[4-($\eta^5$-3'-Isopropyl-cyclopentadienyl)-2-isopropyl-4,7,7-trimethyl-$\eta^5$-4,5,6,7-tetrahydrofluorenyl]dichlorozirkonium
[4-($\eta^5$-4'-Isopropyl-cyclopentadienyl)-2-isopropyl-4,7,7-trimethyl-$\eta^5$-4,5,6,7-tetrahydrofluorenyl]dichlorozirkonium
[4-($\eta^5$-3'-Butyl-cyclopentadienyl)-4,7,7-trimethyl-$\eta^5$-4,5,6,7-tetrahydroindenyl]dichlorozirkonium
[4-($\eta^5$-4'-Butyl-cyclopentadienyl)-4,7,7-trimethyl-$\eta^5$-4,5,6,7-tetrahydroindenyl]dichlorozirkonium
[4-($\eta^5$-3'-Butyl-cyclopentadienyl)-2-isopropyl-4,7,7-trimethyl-$\eta^5$-4,5,6,7-tetrahydroindenyl]dichlorozirkonium
[4-($\eta^5$-4'-Butyl-cyclopentadienyl)-2-isopropyl-4,7,7-trimethyl-$\eta^5$-4,5,6,7-tetrahydroindenyl]dichlorozirkonium
[4-($\eta^5$-3'-Butyl-cyclopentadienyl)-2-butyl-4,7,7-trimethyl-$\eta^5$-4,5,6,7-tetrahydroindenyl]dichlorozirkonium
[4-($\eta^5$-4'-Butyl-cyclopentadienyl)-2-butyl-4,7,7-trimethyl-$\eta^5$-4,5,6,7-tetrahydroindenyl]dichlorozirkonium
[4-($\eta^5$-3',4'-Dimethyl-cyclopentadienyl)-4,7,7-trimethyl-$\eta^5$-4,5,6,7-tetrahydroindenyl]dichlorozirkonium
[4-($\eta^5$-3',4'-Diisopropyl-cyclopentadienyl)-4,7,7-trimethyl-$\eta^5$-4,5,6,7-tetrahydroindenyl]dichlorozirkonium
[4-($\eta^5$-3',4'-Diphenyl-cyclopentadienyl)-2-isopropyl-4,7,7-trimethyl-$\eta^5$-4,5,6,7-tetrahydroindenyl]dichlorozirkonium
[4-($\eta^5$-3',4'-Diethyl-cyclopentadienyl)-2-isopropyl-4,7,7-trimethyl-$\eta^5$-4,5,6,7-tetrahydroindenyl]dichlorozirkonium
[4-($\eta^5$-3',4'-Dibutyl-cyclopentadienyl)-2-isopropyl-4,7,7-trimethyl-$\eta^5$-4,5,6,7-tetrahydroindenyl]dichlorozirkonium
[4-($\eta^5$-3'-Methyl-4'-phenyl-cyclopentadienyl)-4,7,7-trimethyl-$\eta^5$-4,5,6,7-tetrahydroindenyl]dichlorozirkonium
[4-($\eta^5$-3'-Ethyl-4'-phenyl-cyclopentadienyl)-4,7,7-trimethyl-$\eta^5$-4,5,6,7-tetrahydroindenyl]dichlorozirkonium
[4-($\eta^5$-3'-Isopropyl-4'-phenyl-cyclopentadienyl)-4,7,7-trimethyl-$\eta^5$-4,5,6,7-tetrahydroindenyl]dichlorozirkonium
[4-($\eta^5$-3'-Methyl-4'-isopropyl-cyclopentadienyl)-4,7,7-trimethyl-$\eta^5$-4,5,6,7-tetrahydroindenyl]dichlorozirkonium
[4-($\eta^5$-3'-Methyl-4'-napthyl-cyclopentadienyl)-4,7,7-trimethyl-$\eta^5$-4,5,6,7-tetrahydroindenyl]dichlorozirkonium
[4-($\eta^5$-3'-Methyl-4'-butyl-cyclopentadienyl)-4,7,7-trimethyl-$\eta^5$-4,5,6,7-tetrahydroindenyl]dichlorozirkonium

Die Benennung der voranstehend genannten erfindungsgemäßen Verbindungen soll anhand der Verbindung [4-($\eta^5$-4'-Methyl-cyclopentadienyl)-4,7,7-trimethyl-($\eta^5$-4,5,6,7-tetrahydroindenyl)]dichlorozirconium veranschaulicht werden. Das Ringsystem, welches die beiden Cyclopentadienylliganden dieser Verbindung verbrückt, weist sechs Kohlenstoffringatome (C4, C5, C6, C7, C8, C9) und drei Methylsubstituenten auf. Eine Cyclopentadienylgruppe ist an das Ringsystem einfach anelliert, die zweite befindet sich als Substituent an dem Ringsystem.

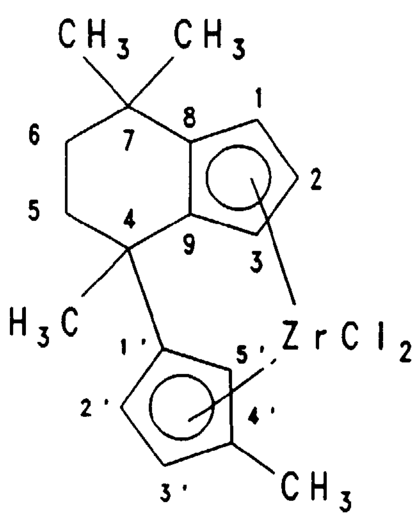

Die nachfolgend genannten Verbindungen sind nach IUPAC-Nomenklatur benannt.
[$\eta^5$-9-($\eta^5$-cyclopentadienyl)tricyclo[6.1.1.0$^{2,6}$]deca-2,5-dienyl]dichlorotitan,
[$\eta^5$-9-($\eta^5$-cyclopentadienyl)tricyclo[6.1.1.0$^{2,6}$]deca-2,5-dienyl]dichlorozirconium,
[$\eta^5$-7-methyl-9-($\eta^5$-cyclopentadienyl)tricyclo[6.1.1.0$^{2,6}$]deca-2,5-dienyl]dichlorotitan,
[$\eta^5$-7-methyl-9-($\eta^5$-cyclopentadienyl)tricyclo[6.1.1.0$^{2,6}$]deca-2,5-dienyl]dichlorozirconium,
[$\eta^5$-9-methyl-9-($\eta^5$-cyclopentadienyl)tricyclo[6.1.1.0$^{2,6}$]deca-2,5-dienyl]dichlorotitan,

[$\eta^5$-9-methyl-9-($\eta^5$-cyclopentadienyl)tricyclo[6.1.1.$0^{2,6}$]deca-2,5-dienyl]dichlorozirconium,
[$\eta^5$-10-($\eta^5$-cyclopentadienyl)tricyclo[5.2.1.$0^{2,6}$]deca-2,5-dienyl]dichlorotitan,
[$\eta^5$-10-($\eta^5$-cyclopentadienyl)tricyclo[5.2.1.$0^{2,6}$]deca-2,5-dienyl]dichlorozirconium,
[$\eta^5$-10-methyl-10-($\eta^5$-cyclopentadienyl)tricyclo[5.2.1.$0^{2,6}$]deca-2,5-dienyl]dichlorotitan,
[$\eta^5$-10-methyl-10-($\eta^5$-cyclopentadienyl)tricyclo[5.2.1.$0^{2,6}$]deca-2,5-dienyl]dichlorozirconium,
[$\eta^5$-9-($\eta^5$-cyclopentadienyl)tricyclo[5.2.2.$0^{2,6}$]undeca-2,5-dienyl]dichlorotitan,
[$\eta^5$-9-($\eta^5$-cyclopentadienyl)tricyclo[5.2.2.$0^{2,6}$]undeca-2,5-dienyl]dichlorozirconium,
[$\eta^5$-9-methyl-9-($\eta^5$-cyclopentadienyl)tricyclo[5.2.2.$0^{2,6}$]undeca-2,5-dienyl]dichlorotitan,
[$\eta^5$-9-methyl-9-($\eta^5$-cyclopentadienyl)tricyclo[5.2.2.$0^{2,6}$]undeca-2,5-dienyl]dichlorozirconium,
[$\eta^5$-10-($\eta^5$-3'-methyl-cyclopentadienyl)tricyclo [5.2.1.$0^{2,6}$]deca-2,5-dienyl]dichlorotitan, [$\eta^5$-10-($\eta^5$-3'-methyl-cyclopentadienyl)tricyclo [5.2.1.$0^{2,6}$]deca-2,5-dienyl]dichlorozirconium,
[$\eta^5$-10-methyl-10-($\eta^5$-3'-methyl-cyclopentadienyl)tricyclo[5.2.1.$0^{2,6}$]deca-2,5-dienyl]dichlorotitan,[$\eta^5$-10-methyl-10-($\eta^5$-3'-methyl-cyclopentadienyl) tricyclo[5.2.1.$0^{2,6}$]deca-2,5-dienyl]dichlorozirconium,
[$\eta^5$-4-methyl-10-($\eta^5$-3'-methyl-cyclopentadienyl)tricyclo[5.2.1.$0^{2,6}$]deca-2,5-dienyl]dichlorotitan,
[$\eta^5$-4-methyl-10-($\eta^5$-3'-methyl-cyclopentadienyl) tricyclo[5.2.1.$0^{2,6}$]deca-2,5-dienyl]dichlorozirconium,
[$\eta^5$-4,10-dimethyl-10-($\eta^5$-3'-methyl-cyclopentadienyl)tricyclo [5.2.1.$0^{2,6}$]deca-2,5-dienyl]dichlorotitan,
[$\eta^5$-4,10-dimethyl-10-($\eta^5$-3'-methyl-cyclopentadienyl) tricyclo[5.2.1.$0^{2,6}$]deca-2,5-dienyl]dichlorozirconium,
[$\eta^5$-5-methyl-10-($\eta^5$-3'-methyl-cyclopentadienyl)tricyclo[5.2.1.$0^{2,6}$]deca-2,5-dienyl]dichlorotitan,
[$\eta^5$-5-methyl-10-($\eta^5$-3'-methyl-cyclopentadienyl) tricyclo [5.2.1.$0^{2,6}$]deca-2,5-dienyl]dichlorozirconium,
[$\eta^5$-5,10-dimethyl-10-($\eta^5$-3'-methyl-cyclopentadienyl) tricyclo[5.2.1.$0^{2,6}$]deca-2,5-dienyl]dichlorotitan,
[$\eta^5$-5,10-dimethyl-10-($\eta^5$-3'-methyl-cyclopentadienyl)tricyclo[5.2.1.$0^{2,6}$]deca-2,5-dienyl]dichlorozirconium.

Die Herstellung der erfindungsgemäßen Metallocene soll durch das nachfolgende Reaktionsschema anhand von Metallocenen der Formel VI veranschaulicht werden. Dabei bedeutet $M^4$ ein Metall der Hauptgruppe Ia, IIa oder IIIa.

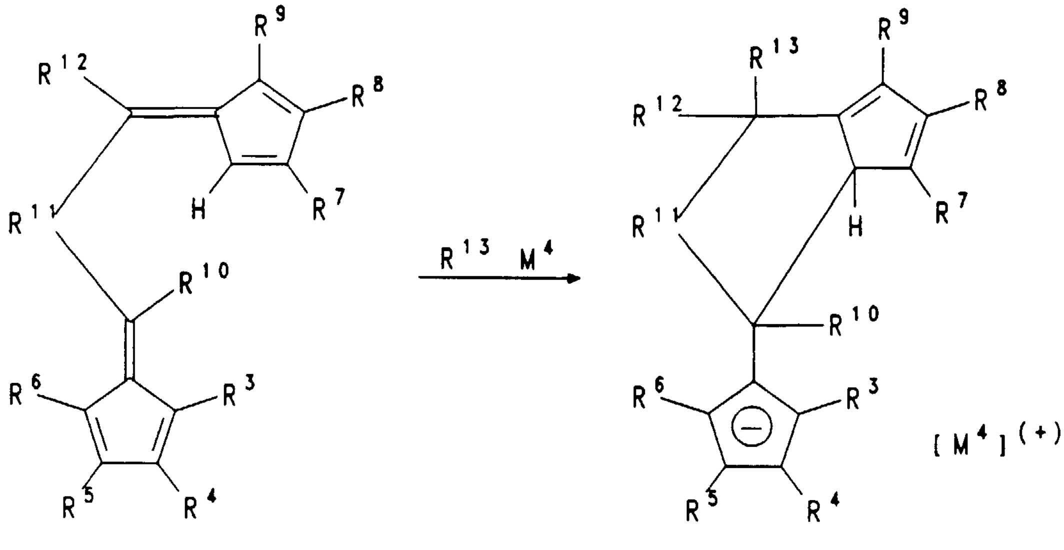


(II) (III)

(III) + $H_2O$

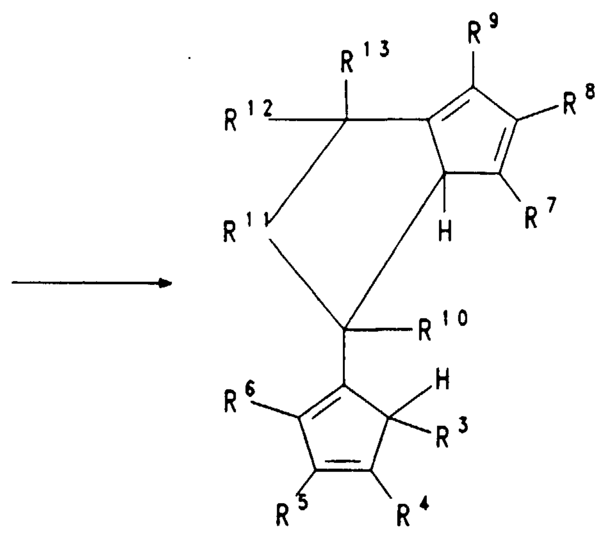

(IV)

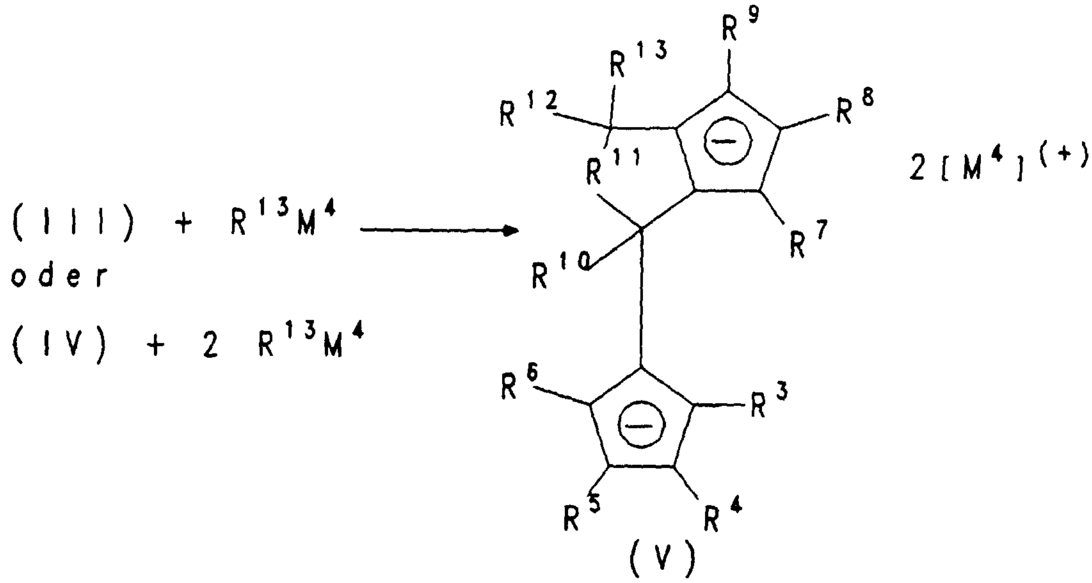


(V)

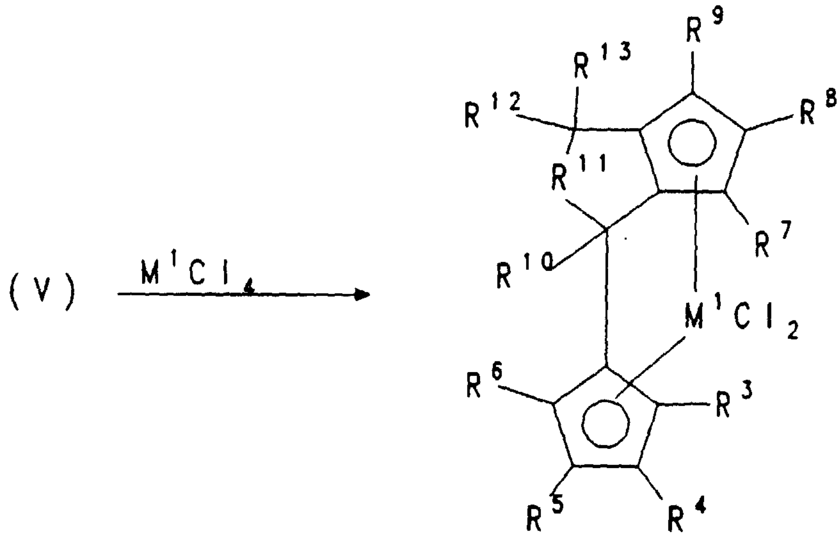


(VI)

Die Difulvene der Formel II werden aus Diketonen (Chem. Ber. 114, 1226 (1981); ibid 109, 3426 (1976); ibid 107, 2453 (1974)) bzw. Ketoaldehyden nach literaturbekannten Methoden hergestellt (J.Org. Chem. 57 (1992) 2504; ibid, 49 (1984) 1849; Chimia, 46 (1992) 377).

Die Umsetzung des Difulvens II zu dem Ligandsystem der Formel III erfolgt durch Umsetzung mit einer metallorganischen Verbindung (wie z.B. Methyllithium, Butyllithium, Phenyllithium) oder Grignardreagenzien.

Die Salze der Formel III können direkt zu den entsprechenden Dianion-Verbindungen der Formel V durch Deprotonierung mit beispielsweise Butyllithium umgesetzt werden. Die Hydrolyse von Verbindung III führt zur Bildung der Biscyclopentadien-Verbindung IV, welche als Konstitutionsisomerengemisch anfällt und chromatographisch gereinigt werden kann. Durch zweifache Deprotonierung von IV mit beispielsweise Butyllithium wird die Dianion-Verbindung der Formel V gebildet.

Die Umsetzung zu den verbrückten Metallocenen der Formel VI sowie die Isolierung der gewünschten Komplexe ist im Prinzip bekannt. Hierzu wird das Dianion der Formel V in einem inerten Lösungsmittel mit dem entsprechenden

Metallhalogenid wie z.B. Zirkoniumtetrachlorid umgesetzt. Die Metallocene der Formel VI können auch direkt aus den Difulvenen der Struktur II ohne Isolierung der Zwischenstufen synthetisiert werden.

Geeignete Lösungsmittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Die Biscyclopentadienyl-Verbindungen der Formel IV, bei welchen mindestens einer der Reste $R^3$ bis $R^6$ sowie mindestens einer der Reste $R^7$ bis $R^9$ Wasserstoff ist, und mindestens einer der Reste $R^3$ bis $R^9$ von Wasserstoff verschieden ist, können durch literaturbekannte Methoden zu den Fulvenen der Formel IVa bzw. IVb umgesetzt werden. Dies soll durch das nachfolgende Reaktionsschema veranschaulicht werden, wobei

$R^{17}$, $R^{18}$, $R^{20}$ und $R^{21}$ gleich oder verschieden sind und wie $R^{10}$ definiert sind:

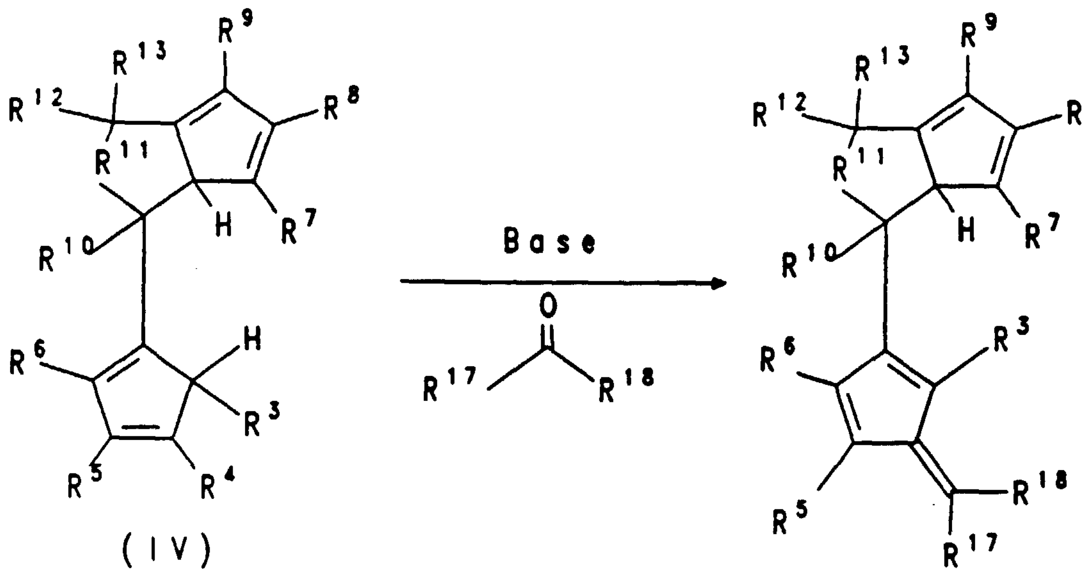


(IV)

(IVa)

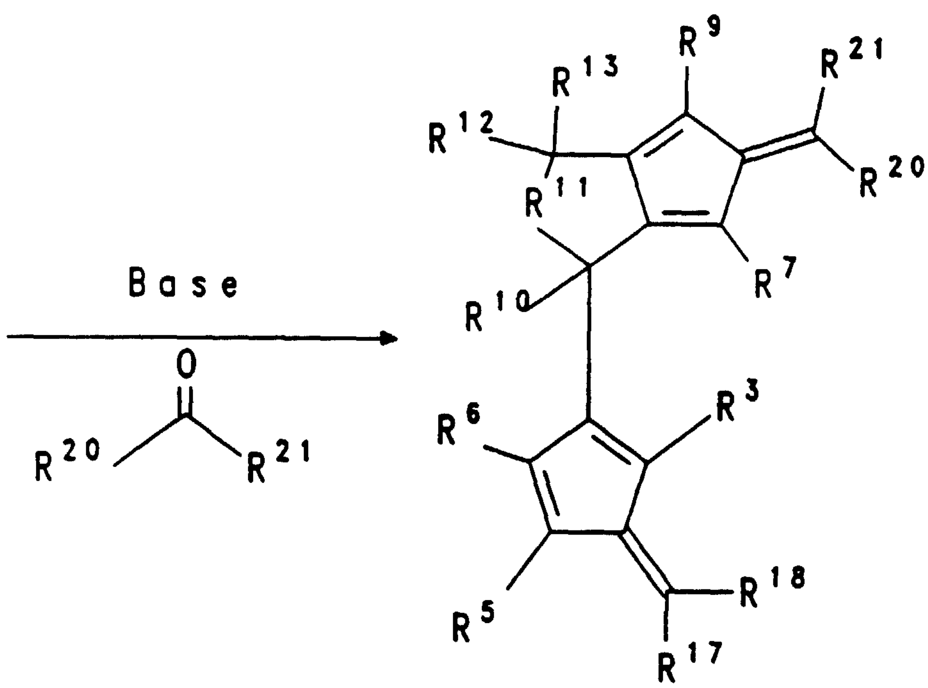


(IVb)

Durch Umsetzung des Fulvens IVa mit metallorganischen Verbindungen der Formel $R^{19}M^5$ (wobei $R^{17}$, $R^{18}$, $R^{19}$, $R^{20}$ und $R^{21}$ gleich oder verschieden sind und wie $R^{10}$ definiert sind; $M^5$ wie $M^4$ definiert ist) führt zur Bildung der Monoanion-Verbindung IIIa. Die Verwendung von zwei Äquivalenten $R^{19}M^5$ führt direkt zur Bildung der Dianion-Verbindung Va:

(IVa)

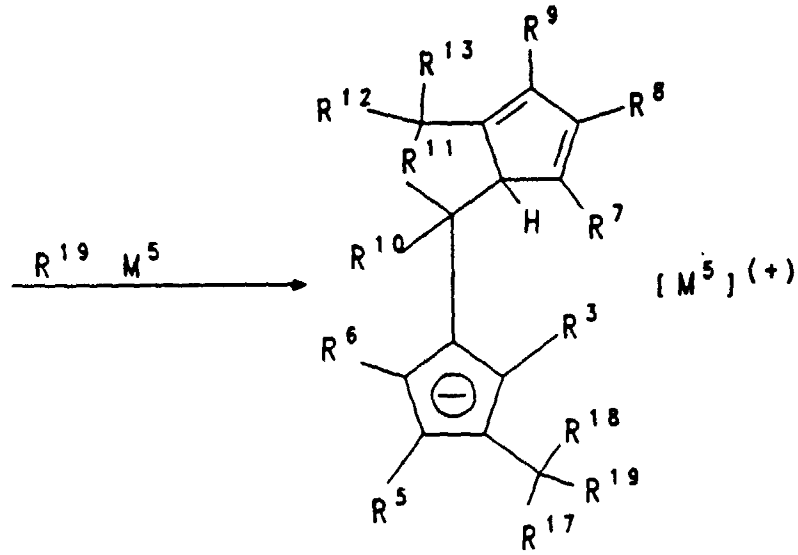


(IIIa)

(IIIa)

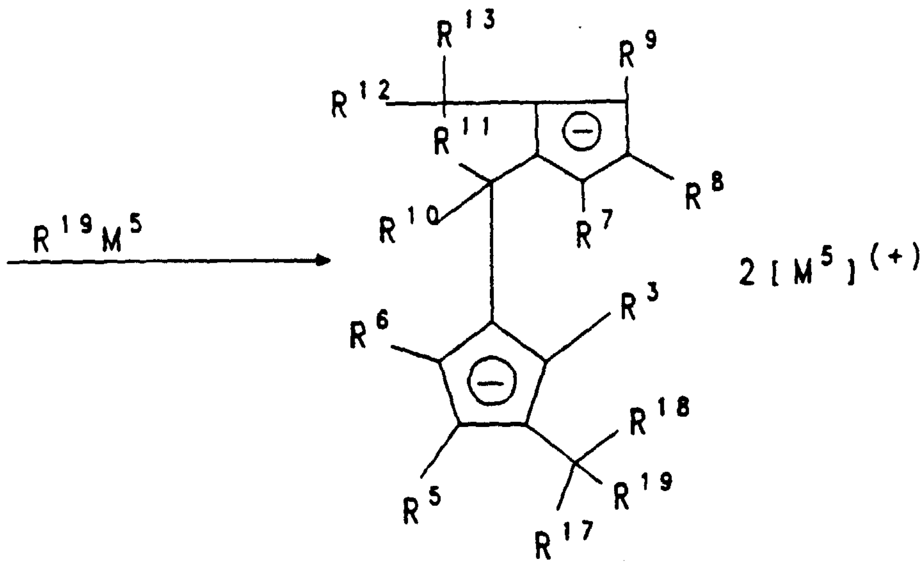


(Va)

Die Umsetzung des Fulvens IVb führt entsprechend der Umsetzung von IVa zur Bildung der Dianion-Verbindung Vb

(IVb)

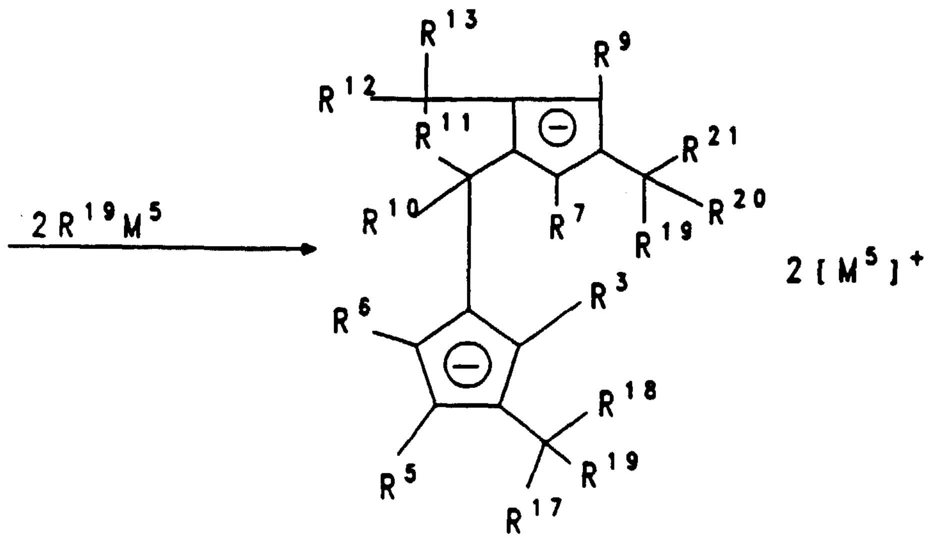


(Vb)

Die Biscyclopentadienyl-Anionen der Formel V, können mit Verbindungen $R^{22}{}_pM^6X$ umgesetzt werden, worin

$M^6$ ein Element der III.-V. Hauptgruppe ist,

X eine Abgangsgruppe wie Halogen, Tosylat, Triflat ist,

$R^{22}$ wie $R^{10}$ definiert ist, und

p eine ganze Zahl von 1 bis 5 ist.

Dies soll durch das nachfolgende Reaktionsschema veranschaulicht werden:

(V)

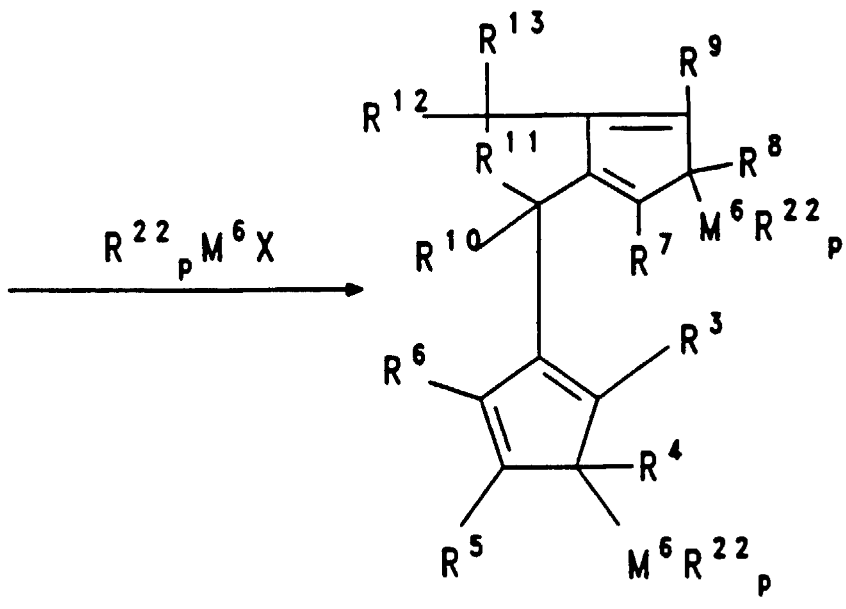


(VII)

Die Verbindungen der Formel VII, bei welchen mindestens einer der Reste $R^3$ bis $R^6$ sowie mindestens einer der Reste $R^7$ bis $R^9$ Wasserstoff ist, können zu den erfindungsgemäßen Metallocenen umgesetzt werden.

Die Salze der Formel IIIa können direkt zu den entsprechenden Dianion-Verbindungen der Formel Va durch Deprotonierung mit beispielsweise Butyllithium umgesetzt werden. Die Umsetzung zu den verbrückten Metallocenen der Formel I erfolgt entsprechend der Reaktion von V nach VI.

Eine weitere Möglichkeit zur Darstellung der erfindungsgemäßen Metallocen-Verbindungen besteht in der Umsetzung von mono- oder polycyclischen Ringsystemen, an denen eine Cyclopentadienylgruppe anelliert ist, wobei diese mono- oder polycyclischen Ringsysteme funktionelle Gruppen tragen, die als Abgangsgruppen in Substitutionsreaktionen dienen können (wie z.B. Bromid oder Tosylat), mit beispielsweise Cyclopentadienyl- oder Indenyllithiumverbindungen.

Die erfindungsgemäße Metallocenverbindung eignet sich als hochaktive Katalysatorkomponente zur Herstellung von Cycloolefincopolymeren.

Die vorliegende Erfindung betrifft somit auch ein Verfahren zur Herstellung eines Cycloolefincopolymers durch Polymerisation, mindestens eines polycyclischen Olefins, mindestens eines acyclischen 1-Olefins und gegebenenfalls eines oder mehrerer monocyclischer Olefine, in Gegenwart eines Katalysators, welcher aus mindestens einem Cokatalysator und mindestens einer stereorigiden Metallocenverbindung besteht, wobei die stereorigide Metallocenverbindung als Liganden mindestens zwei substituierte oder unsubstituierte Cyclopentadienylgruppen aufweist, die über ein mono- oder polycyclisches Ringsystem miteinander verbunden sind, wobei mindestens eine Cyclopentadienylgruppe an das mono- oder polycyclische Ringsystem anelliert ist.

Bei der Bestimmung der Anzahl der Ringatome des mono- oder polycyclischen Ringsystems werden diejenigen Kohlenstoffatome der an das Ringsystem anellierten Cyclopentadienylgruppe(n) mitgezählt, welche aufgrund der Anellierung Teile des Ringsystems sind. Substituenten an dem mono- oder polycyclischen Ringsystem werden nicht mitgezählt.

Bevorzugt befindet sich eine Cyclopentadienylgruppe als Substituent an dem mono- oder polycyclischen Ringsystem (d.h. die Cyclopentadienylgruppe ist über eine kovalente Bindung an das Ringsystem gebunden), während eine weitere Cyclopentadienylgruppe an das mono- oder polycyclische Ringsystem anelliert ist.

Das mono- oder polycyclische Ringsystem kann aromatisch, aliphatisch oder gemischt aromatisch und aliphatisch sein und kann auch Heteroatome wie Stickstoff, Sauerstoff, Schwefel, Silizium oder Germanium enthalten. Es weist bevorzugt 6-40, besonders bevorzugt 6-20 Ringatome, insbesondere Kohlenstoffringatome auf. Das mono- oder polycyclische Ringsystem kann auch Substituenten wie eine $C_1$-$C_{40}$-kohlenwasserstoffhaltige Gruppe tragen.

Anellierte Cyclopentadienylgruppen sind einfach (z.B. über die 1,2- oder 1,3-Position des Cyclopentadienylrings)

oder mehrfach (z.B. über die 1,2,3- oder 1,2,3,4-Position des Cyclopentadienylrings), bevorzugt einfach an das mono- oder polycyclische Ringsystem anelliert.

Die Zentraleinheit $M^1R^x{}_n$ der erfindungsgemäßen Metallocenverbindung besteht bevorzugt aus einem Übergangsmetallatom $M^1$, insbesondere der Gruppe IIIb, IVb, Vb oder VIb des Periodensystems der Elemente, welches n Substituenten $R^x$ trägt, die gleich oder verschieden sind und vorzugsweise eine $C_1$-$C_{40}$-kohlenwasserstoffhaltige Gruppe, ein Halogenatom, eine OH-Gruppe oder ein Wasserstoffatom bedeuten. Die Summe aus der Anzahl der Substituenten $R^x$ und der Anzahl der substituierten oder unsubstituierten Cyclopentadienylgruppen (Liganden) entspricht der Wertigkeit des Übergangsmetallatoms $M^1$.

Bevorzugt werden Verbindungen der Formel I eingesetzt

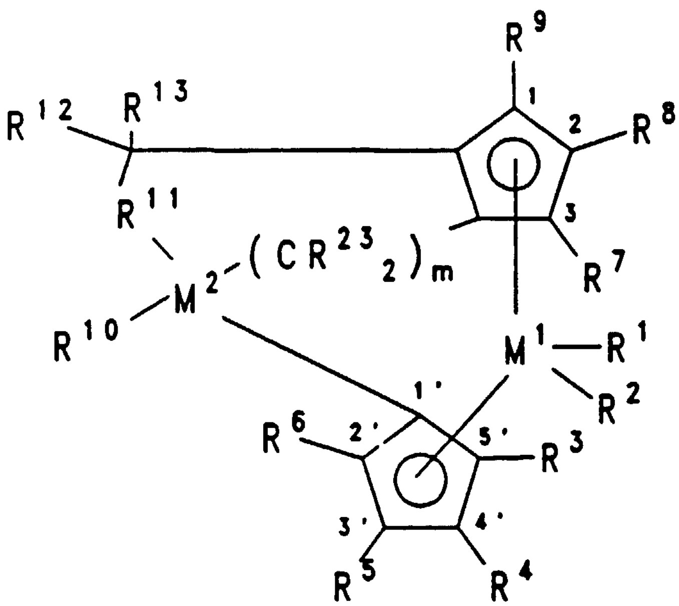

(I),

worin

| | |
|---|---|
| $M^1$ | ein Metall der Gruppe IIIb, IVb, Vb oder VIb des Periodensystems ist, |
| $M^2$ | Kohlenstoff, Silizium oder Germanium ist, |
| $R^1$ und $R^2$ | gleich oder verschieden sind und ein Wasserstoffatom, eine $C_1$-$C_{40}$-kohlenwasserstoffhaltige Gruppe wie eine $C_1$-$C_{10}$-Alkyl-, eine $C_1$-$C_{10}$-Alkoxy, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^{14}{}_2$, worin $R^{14}$ ein Halogenatom, eine $C_1$-$C_{10}$-Alkylgruppe oder eine $C_6$-$C_{10}$-Arylgruppe ist, bedeuten, oder $R^1$ und $R^2$ zusammen mit den sie verbindenden Atomen ein Ringsystem bilden, |
| $R^3$, $R^4$, $R^5$, $R^6$, $R^7$, $R^8$ und $R^9$ | gleich oder verschieden sind und ein Wasserstoffatom, ein Halogenatom, eine $C_1$-$C_{20}$-kohlenwasserstoffhaltige Gruppe wie eine $C_1$-$C_{10}$-Alkylgruppe, die halogeniert sein kann, eine $C_6$-$C_{20}$-Arylgruppe, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe, einen, $-R^{14}$-$SiR^{14}{}_3$-, $-NR^{14}{}_2$-, $-SiOR^{14}{}_3$-, $-SiSR^{14}{}_3$- oder $-PR^{14}{}_2$-Rest bedeuten, worin $R^{14}$ ein Halogenatom, eine $C_1$-$C_{10}$-Alkylgruppe oder eine $C_6$-$C_{10}$-Arylgruppe ist, oder zwei oder mehr benachbarte Reste $R^3$, $R^4$, $R^5$, $R^6$, $R^7$, $R^8$ und $R^9$ zusammen mit den sie verbindenen Atomen ein Ringsystem bilden, welches bevorzugt 4-40, besonders bevorzugt 6-15 Kohlenstoffatome enthält, |
| $R^{10}$ | ein Wasserstoffatom, oder eine $C_1$-$C_{40}$-kohlenwasserstoffhaltige Gruppe wie |

eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SiR^{14}_3$,-$SR^{14}_2$ oder $-OSiR^{14}_3$ tragen können, worin $R^{14}$ ein Halogenatom, eine $C_1$-$C_{10}$-Alkylgruppe oder eine $C_6$-$C_{10}$-Arylgruppe ist, oder $R^{10}$ mit einem oder mehreren der Reste $R^3$, $R^4$, $R^5$ und $R^6$ verbunden ist.

$R^{11}$

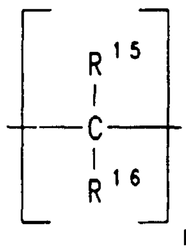 , 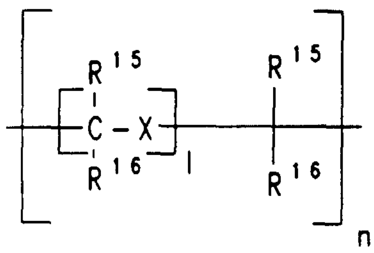 , 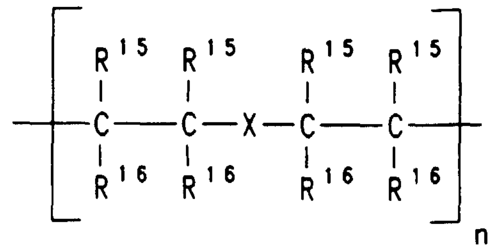 ,

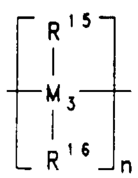 , 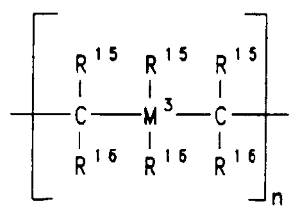 , 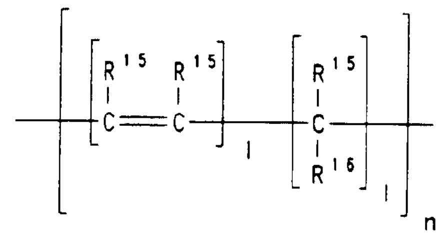

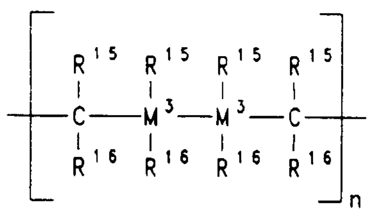 oder 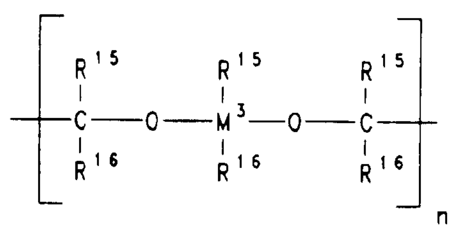

ist, wobei n eine ganze Zahl von 1 bis 20 ist, l ein ganze Zahl von 0 bis 20 ist, X gleich O, $=NR^{14}$, =CO, $=PR^{14}$, $=P(O)R^{14}$, =SO, $=SO_2$ oder -S- ist, worin

$R^{14}$ ein Halogenatom, eine $C_1$-$C_{10}$-Alkylgruppe oder eine $C_6$-$C_{10}$-Arylgruppe ist,

$R^{15}$ und $R^{16}$ gleich oder verschieden sind und ein Wasserstoffatom, ein Halogenatom, oder eine $C_1$-$C_{40}$-kohlenwasserstoffhaltige Gruppe wie eine $C_1$-$C_{10}$-Alkyl-, eine $C_1$-$C_{10}$-Fluoralkyl-, eine $C_1$-$C_{10}$-Alkoxy-, eine $C_6$-$C_{10}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl- oder eine $C_8$-$C_{40}$-Arylalkenylgruppe bedeuten, oder zwei Reste $R^{15}$, zwei Reste $R^{16}$, oder

$R^{15}$ und $R^{16}$ jeweils mit den sie verbindenen Atomen einen oder mehrere Ringe bilden, und $M^3$ Silizium, Germanium oder Zinn ist,

$R^{12}$ und $R^{13}$ gleich oder verschieden ist, und ein Wasserstoffatom, eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SR^{14}_2$, $-SiR^{14}_3$, $-OSiR^{14}_3$, worin $R^{14}$ ein Halogenatom, ei-

ne $C_1$-$C_{10}$-Alkylgruppe oder eine $C_6$-$C_{10}$-Arylgruppe ist, oder Halogen tragen können,

$R^{23}$ gleich oder verschieden sind und ein Wasserstoffatom, ein Halogenatom oder eine $C_1$-$C_{40}$-kohlenwasserstoffhaltige Gruppe wie eine $C_1$-$C_{10}$-Alkylgruppe, eine $C_1$-$C_{10}$-Alkoxy-, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe bedeuten, oder einer oder mehr Reste $R^{23}$ mit einem oder mehr Resten $R^{15}$ und $R^{16}$ und/oder einem oder mehr Resten $R^{10}$, $R^{11}$, $R^{12}$ und $R^{13}$ verbunden sind, und m eine ganze Zahl von O bis 24 ist.

Für den Fall, daß $M^2$ gleich C, m gleich 0 und $R^{11}$ gleich $CH_2$ ist, ist es bevorzugt, daß mindestens einer der Reste $R^4$, $R^8$, $R^{10}$, $R^{12}$, $R^{13}$ ungleich Alkyl und/oder mindestens einer der Reste $R^3$, $R^5$, $R^6$, $R^7$ und $R^9$ ungleich Wasserstoff ist.

Für Verbindungen der Formel I gilt bevorzugt, daß

$M^1$ Zirkonium oder Hafnium, insbesondere Zirkonium ist,

$R^1$ und $R^2$ gleich sind und eine $C_1$-$C_3$-Alkylgruppe oder ein Halogenatom, insbesondere Chlor bedeuten,

$R^3$, $R^4$, $R^5$, $R^6$, $R^7$, $R^8$ und $R^9$ gleich oder verschieden sind und ein Wasserstoffatom, eine $C_1$-$C_{10}$-Alkylgruppe oder eine $C_6$-$C_{24}$-Arylgruppe sind, oder zwei oder mehr benachbarte Reste zusammen mit den sie verbindenden Atomen ein aromatisches oder aliphatisches Kohlenwasserstoffringsystem bilden,

$R^{10}$ ein Wasserstoffatom, eine $C_6$-$C_{24}$-Arylgruppe oder eine $C_1$-$C_{10}$-Alkylgruppe, insbesondere $C_1$-$C_4$-Alkylgruppe ist,

$R^{11}$

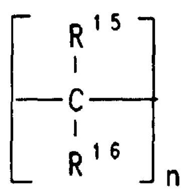

ist, wobei n eine ganze Zahl von 1 bis 8, insbesondere von 2 bis 4 ist,

$R^{15}$ und $R^{16}$ gleich oder verschieden sind und Wasserstoff oder eine $C_1$-$C_{10}$-Alkylgruppe sind, oder zwei Reste $R^{15}$, zwei Reste $R^{16}$, oder $R^{15}$ und $R^{16}$ zusammen mit den sie verbindenden Atomen ein Kohlenwasserstoffringsystem bilden,

$M^2$ Kohlenstoff ist,

$R^{12}$ und $R^{13}$ gleich oder verschieden sind und ein Wasserstoffatom, eine $C_1$-$C_{10}$-Alkylgruppe, insbesondere eine $C_1$-$C_4$-Alkylgruppe, oder eine $C_6$-$C_{10}$-Arylgruppe sind und m = 0 ist.

Besonders bevorzugt sind Verbindungen der Formel I, worin

$M^1$ Zirkonium ist,

$R^1$ und $R^2$ gleich sind und ein Halogenatom, insbesondere Chlor bedeuten,

$R^3$, $R^4$, $R^5$, $R^6$, $R^7$, $R^8$ und $R^9$ gleich oder verschieden sind und Wasserstoff oder eine $C_1$-$C_4$-Alkylgruppe wie Methyl, Ethyl, Propyl, Isopropyl, Butyl oder Isobutyl oder eine $C_6$-$C_{14}$-Arylgruppe wie Phenyl oder Naphtyl bedeuten, oder

| | |
|---|---|
| $R^8$ und $R^9$ | sowie $R^3$ und $R^4$ und/oder $R^5$ und $R^6$ zusammen mit den sie verbindenden Atomen ein aromatisches Kohlenwasserstoffringsystem bilden, insbesondere einen Sechsring, der seinerseits substituiert sein kann, |
| $M^2$ | ein Kohlenstoffatom ist, |
| $R^{10}$ | eine $C_1$-$C_6$-Alkylgruppe, insbesondere Methyl ist, |
| $R^{11}$ | $-CH_2-CH_2-$ ist, |
| $R^{12}$ und $R^{13}$ | gleich oder verschieden sind und eine Methyl- oder Phenyl-Gruppe bedeuten und m = 0 ist. |

Vorzugsweise mindestens einer der Reste $R^3$ bis $R^9$, insbesondere mindestens einer der Reste $R^4$, $R^5$ und $R^8$ von Wasserstoff verschieden, insbesondere dann, wenn $R^{11}$ gleich $-CH_2-CH_2-$ ist.

Beispiele für in dem erfindungsgemäßen Verfahren einsetzbare Metallocene sind in der oben angegebenen Liste genannt. Außerdem können auch Verbindungen eingesetzt werden wie (4-($\eta^5$-3-t-butyl-cyclopentadienyl)-4,6,6-trimethyl-($\eta^5$-2-t-butyl-4,5- tetrahydropentalen))dichlorozirconium, (4-($\eta^5$-cyclopentadienyl)-4,6,6-trimethyl-($\eta^5$-4,5-tetrahydropentalen)) dichlorozirconium, Silizium-bis($\eta^5$-(2-propandiyl)-cyclopentadienyl)dichlorozirconium, Silizium-bis($\eta^5$-(2-propandiyl)-cyclopentadienyl)dichlorozirconium oder Germanium-bis($\eta^5$-(2-propandiyl)-2-methylcyclopentadienyl) dichlorozirconium.

Die in dem erfindungsgemäßen Verfahren eingesetzen Metallocene sind hochaktive Katalysatorkomponenten für die Herstellung von Cycloolefincopolymeren.

Je nach Substitutionsmuster der Liganden können die erfindungsgemäßen Metallocene als Isomerengemisch anfallen. Die Metallocene werden bevorzugt isomerenrein eingesetzt. Die Verwendung des Racemats ist in den meisten Fällen ausreichend.

Verwendet werden kann aber auch das reine Enantiomere in der (+)- oder (-)-Form. Mit den reinen Enantiomeren ist ein optisch aktives Polymer herstellbar.

Bevorzugt wird für die Herstellung von Cycloolefincopolymeren ein Katalysator eingesetzt, der mindestens eine Metallocenverbindung und einen Cokatalysator enthält. Es können auch Mischungen von zwei oder mehr Metallocenverbindungen verwendet werden, insbesondere zur Herstellung von Reaktorblends oder von Cycloolefincopolymeren mit breiter oder multimodaler Molmassenverteilung.

Als Cokatalysator wird bevorzugt ein Aluminoxan eingesetzt, welches vorzugsweise die Formel VIIIa für den linearen Typ und/oder die Formel VIIIb für den cyclischen Typ aufweist,

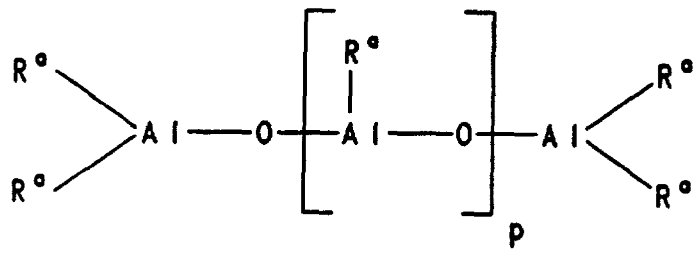

(VIIIa)

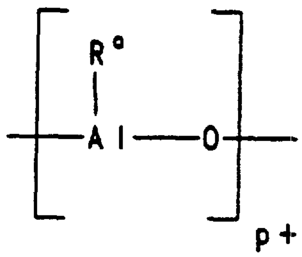

(VIIIb)

wobei in den Formeln VIIIa und VIIIb die Reste $R^a$ gleich oder verschieden sind und eine $C_1$-$C_6$-Alkylgruppe, eine $C_6$-

$C_{18}$-Arylgruppe, Benzyl oder Wasserstoff bedeuten, und p eine ganze Zahl von 2 bis 50, bevorzugt 10 bis 35 bedeutet.

Bevorzugt sind die Reste $R^a$ gleich und bedeuten Methyl, Isobutyl, Phenyl oder Benzyl, besonders bevorzugt Methyl.

Sind die Reste $R^a$ verschieden, so sind sie bevorzugt Methyl und Wasserstoff oder alternativ Methyl und Isobutyl, wobei Wasserstoff oder Isobutyl bevorzugt mit einen zahlenmäßigen Anteil von 0,01 - 40% (der Reste $R^a$) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen $R^a$ werden entsprechend der gewünschten Zusammensetzung zwei verschiedene Aluminiumtrialkyle ($AlR_3$ + $AlR'_3$) mit Wasser umgesetzt (S. Pasynkiewicz, Polyhedron 9 (1990) 429, EP-A 302 424). Die genaue räumliche Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist auch möglich, das Aluminoxan auf einen Träger aufzubringen und es dann als Suspension in geträgerter Form einzusetzen. Es sind mehrere Trägerungsverfahren bekannt (EP 578 838), z.B. kann Kieselgel als Träger fungieren.

Es ist möglich, das Metallocen vor dem Einsatz in der Polymerisationsreaktion mit einem Cokatalysator, insbesondere einem Aluminoxan vorzuaktivieren.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Mit Hilfe des Metallocens kann eine Vorpolymerisation erfolgen. Zur Vorpolymerisation wird bevorzugt das (oder eines der) in der Polymerisation eingesetzte(n) Olefin(e) verwendet.

Das Metallocen kann auch auf einen Träger aufgebracht werden. Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man, an Stelle oder neben eines Aluminoxans eine salzartige Verbindung der Formel $BR_3$, $R_xNH_{4-x}BR'_4$ oder $R_3PHBR'_4$ als Cokatalysator verwendet. Dabei sind x = 1, 2 oder 3, R = Alkyl oder Aryl, welche vorzugsweise 1-20 C-Atome aufweisen und gleich oder verschieden sind, R' = Aryl, welche vorzugsweise 1-20 C-Atome aufweisen, gleich oder verschieden sind und auch fluoriert oder teilfluoriert sein können. In diesem Fall besteht der Katalysator aus dem Reaktionsprodukt eines Metallocens mit einer der genannten Verbindungen (EP-A 277 004).

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Metallocene werden bevorzugt in Form ihrer Racemate eingesetzt. Die Metallocenverbindung wird bevorzugt in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2 * 10^{-2}$ mol pro $dm^3$ Reaktorvolumen verwendet, bezogen auf den Gehalt an Aluminium. Prinzipiell sind aber auch höhere Konzentrationen möglich.

In dem erfindungsgemäßen Verfahren wird eines oder mehrere polycyclische Olefine, bevorzugt der Formeln IX, X, XI, XII, XIII oder XIV, eingesetzt

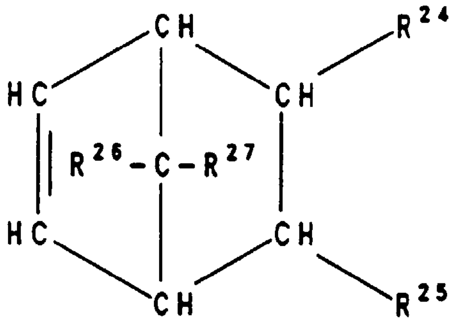

(IX),

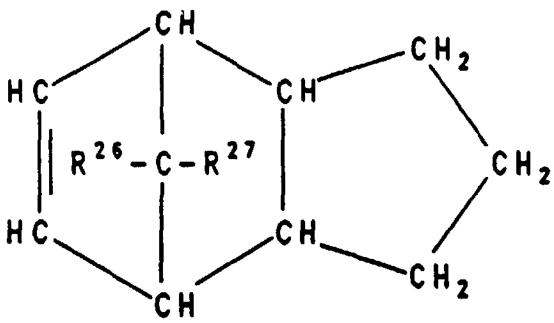

(X),

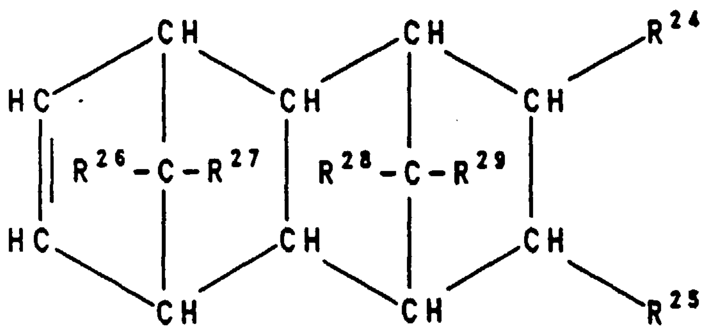

(XI),

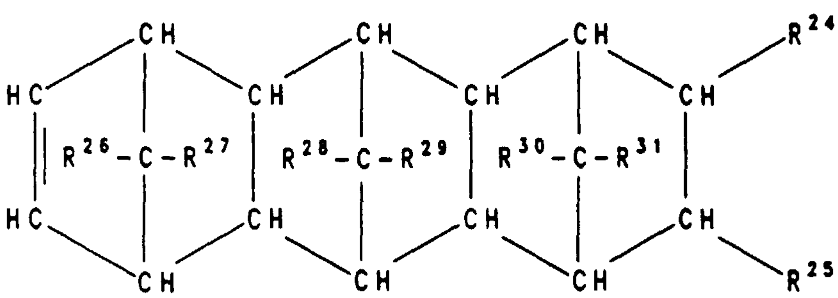

(XII),

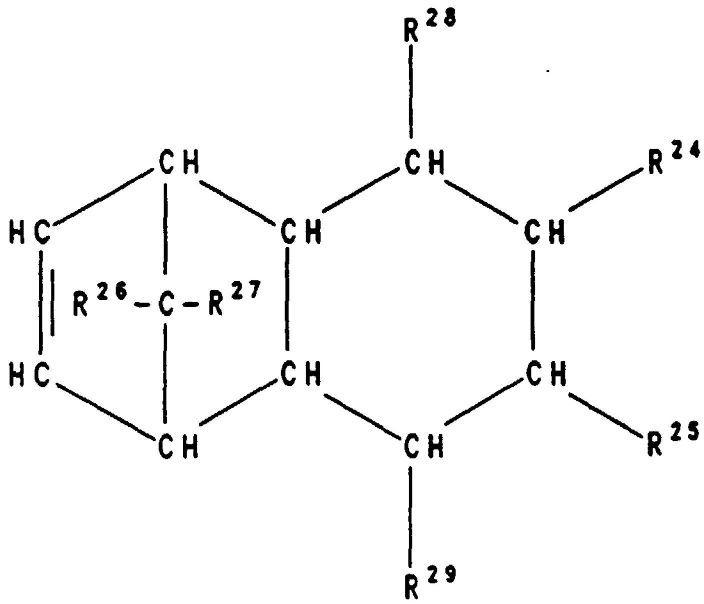

(XIII),

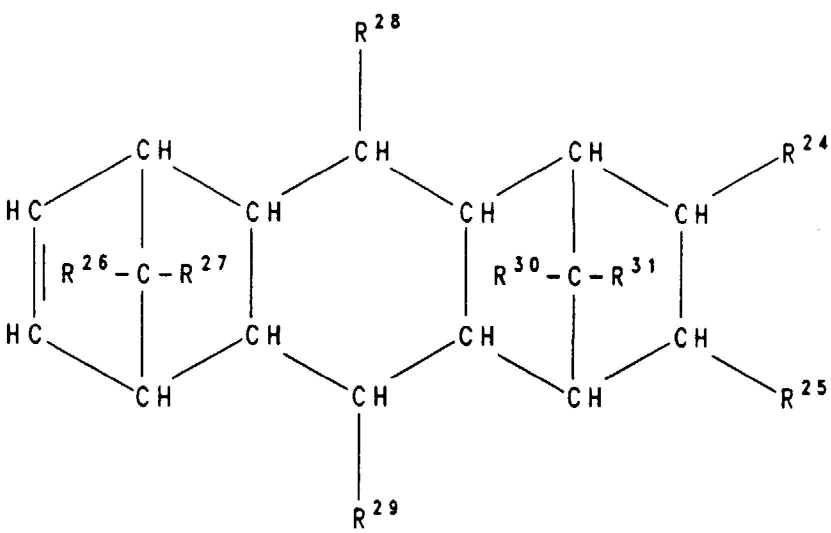

(XIV),

worin $R^{24}$, $R^{25}$, $R^{26}$, $R^{27}$, $R^{28}$, $R^{29}$, $R^{30}$ und $R^{31}$ gleich oder verschieden sind und ein Wasserstoffatom oder einen $C_1$-$C_{20}$-Kohlenwasserstoffrest wie $C_1$-$C_8$-Alkyl oder $C_6$-$C_{10}$-Aryl bedeuten, oder zwei oder mehr Reste $R^{24}$-$R^{31}$ zusammen ein $C_4$-$C_{40}$-Ringsystem bilden, wobei gleiche Reste $R^{24}$-$R^{31}$ in den verschiedenen Formeln eine unterschiedliche Bedeutung haben können. Besonders bevorzugt sind Cycloolefine der Formeln IX oder XI, worin $R^{24}$, $R^{25}$, $R^{26}$, $R^{27}$, $R^{28}$, $R^{29}$, $R^{30}$ und $R^{31}$ gleich oder verschieden sind und ein Wasserstoffatom oder einen $C_1$-$C_{20}$-Kohlenwasserstoffrest, insbesondere einen $C_6$-$C_{10}$-Arylrest oder einen $C_1$-$C_8$-Alkylrest bedeuten, wobei gleiche Reste $R^{24}$-$R^{31}$ in den verschiedenen Formeln eine unterschiedliche Bedeutung haben können.

Gegebenenfalls wird bei der Herstellung von Cycloolefincopolymeren auch ein monocyclisches Olefin der Formel XV eingesetzt

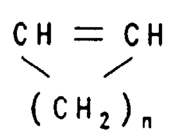

(XV),

worin n eine Zahl von 2 bis 10 ist, verwendet.

Außerdem werden bei der Herstellung von Cycloolefincopolymeren eines oder mehrere acylische 1-Olefine bevorzugt der Formel XVI eingesetzt

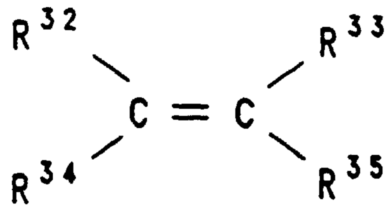

(XVI),

worin $R^{32}$, $R^{33}$, $R^{34}$ und $R^{35}$ gleich oder verschieden sind und ein Wasserstoffatom oder einen $C_1$-$C_{20}$-Kohlenwasserstoffrest, bevorzugt einen $C_6$-$C_{10}$-Arylrest und einen $C_1$-$C_8$-Alkylrest bedeuten. Bevorzugt ist dabei Ethylen.

Insbesondere werden Copolymere von polycyclischen Olefinen, vorzugsweise der Formeln IX und XI, mit Ethylen hergestellt.

Besonders bevorzugte polycyclische Olefine sind Norbornen und Tetracyclododecen, wobei diese durch ($C_1$-$C_6$)-Alkyl substituiert sein können. Sie werden vorzugsweise mit Ethylen copolymerisiert; besondere Bedeutung besitzen Ethylen/Norbornen-Copolymere.

Das polycyclische Olefin wird in einer Menge von 0,1 bis 99,9 Gew.-% das monocyclische Olefin in einer Menge von 0 bis 99,9 Gew.-%, und das acyclische Olefin in einer Menge von 0,1 bis 99,9 Gew.-%, jeweils bezogen auf die Gesamtmenge der Monomeren, eingesetzt.

Die Konzentration des eingesetzten acyclischen Olefins ergibt sich aus dessen Löslichkeit in dem Reaktionsmedium bei gegebenem Druck und gegebener Temperatur.

Als polycyclische Olefine, monocyclische Olefine und acyclische Olefine sind auch Gemische zweier oder mehrerer Olefine des jeweiligen Typs zu verstehen. Das heißt, es können neben polycyclischen Bicopolymeren auch Ter- und Multicopolymere nach dem erfindungsgemäßen Verfahren hergestellt werden. Auch Copolymere monocyclischer Olefine und acyclischer Olefine können nach dem beschriebenen Verfahren erhalten werden.

Von den monocyclischen Olefinen ist Cyclopenten, das substituiert sein kann, bevorzugt.

Bevorzugt wird das erfindungsgemäße Verfahren bei Temperaturen von -78 bis 150°C, insbesondere 0 bis 100°C, und einem Druck von 0,01 bis 64 bar durchgeführt.

Die Polymerisation wird im flüssigen Cycloolefin selbst oder in Cycloolefin-Lösung durchgeführt, wobei zweckmäßigerweise der Druck oberhalb 1 bar liegt.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 80 Mol-% der cyclischen Komponenten und besonders bevorzugt werden Einbauraten zwischen 40 und 60 Mol-% der cyclischen Komponenten.

Die Polymerisation kann auch mehrstufig erfolgen, wobei auch Blockcopolymere entstehen können (EP 560 090).

Die mittlere Molmasse des gebildeten Polymeren läßt sich weiter durch Wasserstoff-Dosierung, Variation der Katalysatorkonzentration oder Variation der Temperatur in bekannter Weise steuern.

Die Polydispersität $M_w/M_n$ der Cycloolefincopolymeren ist mit Werten von 1,9 bis 3,5 recht eng. Dadurch resultiert ein Eigenschaftsbild, das diese für das Spritzgießen besonders geeignet macht.

Mit dem erfindungsgemäßen Verfahren lassen sich amorphe Cycloolefincopolymere herstellen, die keine teilkristallinen Ethylenpolymerisate enthalten. Die Copolymeren sind transparent, hart und thermoplastisch verarbeitbar. Die Reißspannungen (gemäß DIN 53457) liegen im Bereich von 50 bis 100 MPa, bevorzugt zwischen 55 und 70 MPa. Sowohl beim Extrudieren als auch beim Spritzgießen wurden bei Temperaturen von 300°C keine Zersetzungsreaktionen oder ein Viskositätsabbau gefunden.

Die erfindungsgemäß hergestellten Cycloolefincopolymere eignen sich besonders zur Herstellung von Formkörpern wie Extrusionsteilen (z.B. Folien, Schläuchen, Rohren, Stangen und Fasern) oder Spritzgußartikeln beliebiger Form und Größe. Die Folien können extrudierte Folien, kalanderte Folien, Gießfilme, mono-und biaxial orientierte Folien oder Mehrschicht-Folien sein und eignen sich insbesondere als Lebensmittelverpackungsfolien oder Blisterverpackungen. Sie weisen eine hohe Wassersperrwirkung und eine geringe Gasdurchlässigkeit auf. Die erfindungsgemäß hergestellten Cycloolefincopolymere eignen sich auch als Additiv in anderen Polymerfolien (insbesondere Polyolefinfolien wie Polypropylenfolien oder Polyethylenfolien) z.B. zum Zwecke der Fließverbesserung, Verbesserung der Lak-

kierbarkeit, E-Modul-Beeinflussung und Herstellung von Opakfolien.

Eine wichtige Eigenschaft der erfindungsgemäß hergestellten Cycloolefincopolymere ist ihre Transparenz. Dadurch kommt besonders den optischen Anwendungen der extrudierten oder spritzgegossenen Teile aus Cycloolefincopolymeren eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck-und Streuscheiben für Leistungsoptiken, als Lichtwellenleiter in der Form von Fasern oder Folien.

In schlagzähmodifizierter Form sind die erfindungsgemäß hergestellten Cycloolefincopolymeren als Strukturwerkstoff in verschiedenen technischen Bereichen einsetzbar (EP 566 988 ).

Die erfindungsgemäß erhaltenen Cycloolefincopolymere sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Cycloolefincopolymeren sind bevorzugt folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Das erfindungsgemäße Verfahren liefert mit hoher Aktivität insbesondere transparente Cycloolefincopolymere, die hohe Reißfestigkeiten aufweisen.

Die in den folgenden Beispielen angegebenen Glastemperaturen Tg wurden mittels DSC (Differential Scanning Calorimetry) bei einer Aufheizrate von 20°C/min bestimmt. Die angegebenen Viskositätszahlen wurden gemäß DIN 53728 ermittelt. Die mechanischen Eigenschaften wurden im Zugdehnungsversuch gemessen (DIN 53457, Instron 4302).

Als Maß für die Katalysatoraktivität wird die Ausbeute an Polymer pro Zeiteinheit und pro mmol Metallocen herangezogen:

$$\text{Aktivität} = \frac{\text{Polymer [g]}}{\text{Zeiteinheit [h] x Menge Metallocen [mmol]}} = A^*$$

Allgemeine Angaben: Herstellung und Handhabung organometallischer Verbindungen erfolgten unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert.

Die Herstellung der als Ausgangsverbindungen eingesetzten Diketone und Ketoaldehyde erfolgte nach literaturbekannten Methoden. Cyclopentadien und Methylcyclopentadien wurden durch Cracken der Dimeren gewonnen und bei -35°C gelagert.

Die Ermittlung des $Al/CH_3$-Verhältnisses im Aluminoxan erfolgte durch Zersetzung der Probe mit $H_2SO_4$ und Bestimmung des Volumens der entstehenden Hydrolysegase unter Normalbedingungen sowie durch komplexometrische Titration des Aluminiums in der dann gelösten Probe nach Schwarzenbach.

Die Verbindungen wurden mit $^1$H-NMR, $^{13}$C-NMR und IR-Spektroskopie charakterisiert.

Die nachfolgenden Beispiele dienen zur Erläuterung der Erfindung, haben jedoch keinerlei limitierenden Charakter:

A. Darstellung der Bisfulvene II

Beispiel 1a:

Synthese von 2,5-Bis(2,4-cyclopentadien-1-yliden)hexan

Nach einer modifizierten Reaktionsvorschrift [a] werden 11,0 g (96,3 mmol) 2,5 Hexandion und 12,7 g (193 mmol) frisch gecracktes Cyclopentadien in 60 ml Methanol gelöst, auf 0°C abgekühlt und mit 8,60 g (121 mmol) Pyrrolidin versetzt. Nach 90 min Rühren bei 0°C wird die Reaktionslösung mit 5 ml Eisessig und 50 ml Wasser hydrolisiert, zweimal mit je 70 ml Diethylether extrahiert und die vereinigten organischen Phasen mit gesättigter Natriumchloridlösung gewaschen. Man trocknet über Magnesiumsulfat und erhält nach dem Entfernen des Lösungsmittels im Vakuum 18.0 g (89 %) das Difulven als orangeroten öligen Rückstand.

[a] = M.S. Erickson, J.M. Cronan, J.G. Garcia, M.L. McLaughlin, J. Org. Chem. 57 (1992) 2504-2508.
K.J. Stone, R.D. Little, J. Org. Chem. 49 (1984) 1849-1853.

Beispiel 1b:

Synthese von 2,5-Bis(cyclopenta-2,4-dien-1-yliden)-undecan

Eine Lösung aus 3,50 g (19,9 mmol) 2,5-Undecandion in 100 ml Methanol und 10 ml Tetrahydrofuran wird auf 0°C abgekühlt und mit 3,92 ml (3,14 g, 47,5 mmol) frisch gecracktem Cyclopentadien versetzt. Zu der orangeroten, klaren Reaktionslösung werden danach 6,28 ml (5,40 g, 76,0 mmol) frisch destilliertes Pyrrolidin innerhalb von 10 Minuten hinzugetropft. Dabei verfärbt sich die Reaktionslösung innerhalb von 10 Minuten dunkelrot. Anschließen läßt man auf Raumtemperatur erwärmen und zur Vervollständigung der Reaktion weitere 3 Tage rühren. Zur Aufarbeitung wird das Pyrrolidin mit 4 ml Eisessig neutralisiert und mit 100 ml Wasser hydrolisiert. Man extrahiert zweimal mit je 100 ml Pentan, wäscht die vereinigten organischen Phasen mehrmals mit gesättigter, wäßriger Natriumchloridlösung und trocknet über Magnesiumsulfat. Nach Entfernen des Lösungsmittels im Vakuum erhält man das Cyclopentadienyliden (2) als dunkelrotes Öl in einer Rohausbeute von 78 % (4,16 g).
Durch säulenchromatographische Reinigung über eine mit Triethylamin desaktivierte Kieselgelsäule und Pentan: Diethylether (100 : 1) als eluierendes Solvensgemisch erhält man das Difulven (2) als orangefarbenes Öl.

B. Synthese der verbrückten Biscyclopentadienyl-Anionen, V

Beispiel 2:

Synthese von [4-($\eta^5$-Cyclopentadienyl)-4,7,7-trimethyl-($\eta^5$-4,5,6,7-tetrahydroindenyl)]dilithium

Zu einer Lösung von 10,0 g (47,5 mmol) 2,5-Bis(2,4-cyclopentadien-1-yliden)hexan in 150 ml Diethylether werden 62,4 ml (99,8 mmol) einer etherischen 1,60 M Methyllithiumlösung bei 0°C unter heftigem Rühren langsam zugetropft. Man läßt auf Raumtemperatur erwärmen und erhält nach 24 Stunden Rühren einen beigefarbenen Niederschlag. Nach Abfritten und mehrmaligem Waschen mit Pentan erhält man 13,2 g (89 %) des Di-Lithiumsalzes als beiges Pulver, welches mit einem Moläquivalent Diethylether koordiniert ist.

Beispiel 3:

Synthese von 4-($\eta^5$-Cyclopentadienyl)-4,7-dimethyl-7-phenyl-($\eta^5$-4,5,6,7-tetrahydroindenyl)dilithium

Eine etherische Phenyllithiumlösung (83,4 ml, 74,3 mol, 0,89 M Diethyletherlösung) wird bei 0°C zu einer Lösung aus 7,10 g (33,7 mmol) Difulven (Beispiel 1) in 100 ml Diethylether zugetropft. Dabei beginnt nach ca. 5 Minuten ein beiger Niederschlag auszufallen. Man läßt auf Raumtemperatur erwärmen und rührt noch weitere 12 Stunden bei 25°C. Nach dem Abfritten, mehrmaligem Waschen mit Pentan und Trocknen im Ölpumpenvakuum erhält man das Dilithiumsalz als beiges, sehr hydrolyseempfindliches Pulver in 82 % Ausbeute (10,3 g).

Beispiel 4:

Synthese von 4-($\eta^5$-Cyclopentadienyl)-4,7-dimethyl-7-butyl-$\eta^5$-4,5,6,7-tetrahydroindenyl)dilithium

Eine Lösung von 15,0 g (71,3 mmol) Difulven (Beispiel 1), gelöst in 100 ml Diethylether wird auf -30°C abgekühlt und langsam unter heftigem Rühren mit 94 ml (150 mmol) einer 1,60 M Lösung von n-Butyllithium in Hexan versetzt. Dabei bildet sich ein zitronengelber Niederschlag. Man läßt auf Raumtemperatur erwärmen und rührt zur Vervollständigung der Reaktion noch weitere 24 Stunden. Danach wird der ausgefallene Niederschlag abfiltriert, mehrmals mit Pentan gewaschen und im Ölpumpenvakuum getrocknet. Man erhält 23,0 g (91 %) des Dilithiumsalzes als beiges, sehr hydrolyseempfindliches Pulver an dem noch ein Moläquivalent Diethylether koordiniert ist.

C. Synthese der verbrückten Cyclopentadiene IV

Beispiel 5:

Synthese von 7-Cyclopentadienyl-4,4,7-trimethyl-4,5,6,7-tetrahydro-1H-inden

Zu einer Suspension von 7,35 g (23,5 mmol) des Dilithium-Salzes (Beispiel 2) in 50 ml Diethylether gibt man bei 0°C tropfenweise 50 ml entgastes Wasser hinzu. Hierbei verschwindet sofort die beige Suspension und man erhält eine klare, orangene Diethyletherphase. Anschließend trennt man die Phasen im Scheidetrichter, extrahiert die wäßrige Phase noch zweimal mit je 25 ml Diethylether und wäscht die vereinigten organischen Phasen mit 20 ml einer gesättigten Natriumchloridlösung. Nach dem Trocknen über Magnesiumsulfat und dem Entfernen des Lösungsmittels im Vakuum kann man 5,1 g (96 %) des hydrolysierten Produktes als orangerotes Öl isolieren.

Beispiel 6:

Darstellung von 7-Cyclopentadienyl-4,7-dimethyl-4-phenyl-4,5,6,7-tetrahydro-1H-inden

Eine auf 0°C abgekühlte, gelbe Suspension von 3,64 g (9,72 mmol) des Dilithiumsalzes (Beispiel 3) in 50 ml Diethylether wird durch langsame Zugabe von 20 ml entgastem Wasser hydrolisiert. Dabei verschwindet die Suspension und man erhält eine orangene, klare Reaktionslösung. Nachdem man zweimal mit je 20 ml Diethylether extrahiert hat, werden die vereinigten organischen Phasen mehrmals mit gesättigter, wäßriger Natriumchloridlösung gewaschen und über Magnesiumsulfat getrocknet. Durch anschließendes Entfernen des Lösungsmittels im Vakuum kann man das hydrolisierte Produkt als orangenes Öl in 94 % Ausbeute (2,62 g) isolieren.

Beispiel 7:

Darstellung von 7-Cyclopentadienyl-4,7-dimethyl-4-butyl-4,5,6,7-tetrahydro-1H-inden

Eine auf 0°C abgekühlte, gelbe Suspension von 5,00 g (17,33 mmol) des Dilithiumsalzes (Beispiel 4) in 50 ml Diethylether wird durch langsame Zugabe von 20 ml entgastem Wasser hydrolisiert. Dabei verschwindet die Suspension und man erhält eine orangene, klare Reaktionslösung. Nachdem man zweimal mit je 20 ml Diethylether extrahiert hat, werden die vereinigten organischen Phasen mehrmals mit gesättigter, wäßriger Natriumchloridlösung gewaschen und über Magnesiumsulfat getrocknet. Durch anschließendes Entfernen des Lösungsmittels im Vakuum kann man das hydrolisierte Produkt als orangefarbenes Öl in 96 % Ausbeute (4,59 g) isolieren.

D. Synthese der verbrückten Cyclopentadien-Fulven-Liganden IVa durch nachträgliches Einführen von Substituenten (Einführung verschiedener Reste $R^{13}$, $R^{17}$, $R^{18}$, $R^{20}$, $R^{21}$)

Beispiel 8a:

Synthese von 7-(3'-Isopropyliden-cyclopenta-1,4-dienyl)-4,4,7-trimethyl-4,5,6,7-tetrahydro-1H-inden

7,70 g (34,0 mmol) des Cyclopentadienyltetrahydroindenyls (Beispiel 5) werden in 70 ml Methanol gelöst und auf 0°C abgekühlt. Anschließend wird die orangerote Reaktionslösung nacheinander mit 2,96 g (51,0 mmol) Aceton und 4,83 g (68,0 mmol) Pyrrolidin versetzt. Nach 5 Stunden Rühren bei 0°C läßt man zur Vervollständigung der Reaktion noch 2 Stunden bei Raumtemperatur Rühren, ehe man die Reaktion durch Zugabe von 4 ml Eisessig abbricht. Die rote, klare Reaktionslösung wird mit 200 ml Wasser hydrolisiert und die gelbe Suspension 3 x mit je 50 ml Diethylether extrahiert. Nach dem mehrmaligen Waschen der vereinigten organischen Phasen mit gesättigter wäßriger Natriumchloridlösung und dem Trocknen über Magnesiumsulfat erhält man das Fulven als orangeroten wachsartigen Rückstand in einer Ausbeute von 88 % (8,00 g).

Beispiel 8b:

Darstellung von 4-Cyclopentadienyl-4,7-dimethyl-7-allyl-4,5,6,7-tetrahydro-1H-inden

Zu einer Lösung von 16,8 g (79,8 mmol) 2,5-Bis(2,4-cyclopentadien-1-yliden)hexan (Beispiel 1), gelöst in 100 ml Diethylether und 50 ml Tetrahydrofuran werden unter heftigen Rühren 293 ml einer 0,60 M Lösung des Allylgrignards (175 mmol) in Diethylether bei 0°C innerhalb von einer Stunde zugetropft. Nach beendeter Zugabe läßt man über

Nacht bei Raumtemperatur rühren, ehe man die gelborangefarbene Suspension auf 0°C abkühlt und mit wäßriger gesättigter Ammoniumchlorid-Lösung vorsichtig hydrolysiert. Die organische Phase wird abgetrennt, dreimal mit je 50 ml gesättigter wäßriger Natriumchlorid-Lösung gewaschen und anschließend über Magnesiumsulfat getrocknet. Man entfernt das Lösungsmittel im Ölpumpenvakuum und erhält 17,5 g des Produktes als orangefarbenes Öl (87 %).

E. Synthese der Dianion-Komplexe Va

Beispiel 9a:

Synthese von 4-[3'-t-Bu-($\eta^5$-cyclopentadienyl)]-4,7,7-trimethyl-($\eta^5$-tetrahydroindenyl)dilithium

Bei der Reaktion des Tetrahydroindenylfulvens (Beispiel 8) mit einer etherischen Methyllithiumlösung (2 Äquivalenten) bei 0°C erhält man schon nach wenigen Sekunden einen gelben intensiven Niederschlag. Man läßt noch 12 Stunden bei Raumtemperatur Rühren und erhält nach Abfritten, Waschen mit Pentan und Trocknen im Ölpumpenvakuum das Dilithiumsalz, das ohne weitere Charakterisierung direkt weiter umgesetzt wird.

Beispiel 9b:

Synthese von [4-$\eta^5$-Cyclopentadienyl)-4,7-dimethyl-7-allyl-($\eta^5$-4,5,6,7-tetrahydroindenyl)]dilithium

10,5 g des Allylgrignardproduktes (Beispiel 10) werden in 100 ml Diethylether gelöst, auf 0°C abgekühlt und mit 57,6 ml n-Butyllithium-Lösung (1,60 M in Hexan, 92,0 mmol) tropfenweise versetzt. Nach 18 stündigem Rühren bei Raumtemperatur wird der gelbbeige Rückstand abfiltriert, mehrmals mit Pentan gewaschen und im Ölpumpenvakuum getrocknet. Das Dilithiumsalz wird als beigefarbener Feststoff in quantitativer Ausbeute isoliert und ist noch mit einem Moläquivalent Diethylether koordiniert.

F. Synthese der Metallocene der Formel I

Beispiel 10:

Synthese von 4-($\eta^5$-Cyclopentadienyl)-4,7,7-trimethy-($\eta^5$-4,5,6,7-tetrahydroindenyl)]dichlorozirconium

Zu einer auf -78°C abgekühlten Suspension von 9,58 g (30,7 mmol) der Dilithiumverbindung (Beispiel 2) in 200 ml Toluol werden 7,50 g (32,2 mmol) Zirconiumtetrachlorid portionsweise innerhalb von 10 min hinzugefügt. Nach 50 Stunden Rühren bei Raumtemperatur wird der Niederschlag abgefrittet und das orangefarbene Filtrat im Vakuum zur Trockne eingeengt. Nach mehrmaligem Waschen mit Pentan erhält man 4,38 g des Zirconocendichlorides als orangegelbes Pulver in einer Rohausbeute von 37 %.
Zur Reinigung wird das orangegelbe Pulver mehrere Tage lang mit Pentan in einer Umlauffritte extrahiert, wobei man nach Entfernen des Lösungsmittels im Ölpumpenvakuum 1,70 g (14 %) des Zirconocendichlorids als gelbes Pulver erhält, Fp.: 223°C (Zers., DSC).

Beispiel 11:

Synthese von 4-($\eta^5$-Cyclopentadienyl)-4,7,7-trimethyl-($\eta^5$-4,5,6,7-tetrahydroindenyl)dichlorotitan

Eine Suspension von 5,46 g (17,5 mmol) des Dilithiumetherates (Beispiel 2) in 200 ml Toluol wird auf -78°C abgekühlt und mit 3,3 g (17,5 mmol) Titantetrachlorid versetzt. Dabei färbt sich die Reaktionslösung sofort dunkelrot. Man läßt 30 Stunden bei Raumtemperatur rühren, frittet von Unlöslichem ab und engt die dunkelrote Toluolphase im Ölpumpenvakuum zur Trockne ein. Nach mehrmaligem Waschen mit Pentan erhält man 1,85 g des Titanocendichlorides als braunbeiges Pulver. Das Rohprodukt wird anschließend mit Pentan in einer Umlauffritte mehrere Tage lang extrahiert, wobei man das Titanocendichlorid nach Entfernen des Lösungsmittels als braunen Feststoff in 13 % Ausbeute (780 mg) erhält; Fp.: 259 °C (Zers., DSC).

Beispiel 12:

Synthese von [4-($\eta^5$-Cyclopentadienyl)-4,7,7-trimethyl-($\eta^5$-4,5,6,7-tetrahydroindenyl)]dichlorozirconium aus 2,5-Bis(2,4-cyclopentadien-1-yliden)hexan

Zu einer Lösung von 10,0 g (47.5 mmol) 2,5-Bis(2,4-cyclopentadien-1-yliden)hexan (Beispiel 1) in 150 ml Toluol werden 62,4 ml (99.8 mmol) einer etherischen 1,60 M Methyllithium-Lösung bei 0°C unter heftigem Rühren langsam zugegeben. Nach beendeter Zugabe läßt man 24 Stunden bei Raumtemperatur rühren, kühlt anschließend auf -30°C ab und gibt 9.32 g (40 mmol) Zirconiumtetrachlorid zu. Nach 30 Stunden Rühren bei Raumtemperatur wird vom LiCl abgefiltert und das Filtrat im Vakuum zur Trockne eingeengt. Nach mehrmaligem Waschen mit Pentan erhält man 4.02 g (26 %) des Zirconiumdichlorids.

Beispiel 13:

Synthese beider Diastereomere von 4-($\eta^5$-cyclopentadienyl)-4,7-dimethyl-7-phenyl($\eta^5$-4,5,6,7-tetrahydroindenyl)dichlorozirconium

Eine auf -78°C abgekühlte Suspension von 4,37 g (11,7 mmol) des Dilithiumsalzes (Beispiel 3) in 200 ml Toluol wird mit 2,72 g (11,7 mmol) Zirconiumtetrachlorid portionsweise versetzt. Man läßt auf Raumtemperatur erwärmen und rührt die orangefarbene Suspension noch 20 Stunden lang bei 20°C. Nach dem Abfiltrieren wird das Lösungsmittel aus dem Filtrat im Ölpumpenvakuum entfernt und der orangerote, ölige Rückstand durch intensives Rühren in 20 ml Pentan pulverisiert. Anschließend erhält man nach Entfernen des Pentans im Vakuum 2,64 g (50 %) des Zirconocendichlorids als gelborangenes Pulver.
Anhand des $^1$H-NMR Spektrums vom Rohprodukt läßt sich das Diastereomerenverhältnis von ~ 8:1 abschätzen.

Beispiel 14:

Synthese beider Diastereomere von 4-($\eta^5$-Cyclopentadienyl)-4,7-dimethyl-7-butyl-($\eta^5$-4,5,6,7-tetrahydroindenyl)dichlorozirconium

Eine Suspension aus 7,80 g (22,0 mmol) des Dilithiumsalzes (Beispiel 4) in 200 ml Toluol wird auf -78 °C abgekühlt und mit 5,10 g (22,0 mmol) Zirconiumtetrachlorid portionsweise versetzt. Man läßt auf Raumtemperatur erwärmen und rührt die gelborangene Suspension noch 48 Stunden. Danach frittet man vom Unlöslichen ab und entfernt das Lösungsmittel im Ölpumpenvakuum. Das rotorangefarbene Öl wird durch intensives Rühren mit Pentan pulverisiert, wobei man das Zirconocendichlorid in einer Rohausbeute von 30 % (2,72 g) erhält.
Die Reinigung erfolgt durch mehrtägige Extraktion des Rohproduktes mit Pentan in einer Umlauffritte. Das $^1$H-NMR Spektrum des feinen gelben Niederschlages weist zwei Signalsätze in einem Verhältnis von 15:1 auf. Aus dem gelben abgeheberten Filtrat kann man nach Lagerung bei -30°C wenige Kristalle isolieren. Diese Kristalle des diastereomerenreinen Zirconocendichlorids (pR,4R,7R-4)-($\eta^5$-Cyclopentadienyl)-4,7-dimethyl-7-butyl-($\eta^5$-4,5,6,7-tetrahydroindenyl) dichlorozirconium) ermöglichen es, einzelne Signalsätze im $^1$H-NMR zuzuordnen. Dabei entsprechen die Kristalle, welche aus der Pentanlösung auskristallisiert sind, dem Diastereomer, welches am wenigsten gebildet wird. Auch aus den 1,35 g (14 %) des gelben, feinen Pulvers kann man Kristalle isolieren, indem man ungefähr 100 mg des Pulvers in wenig Methylenchlorid löst und durch Diffusion von Pentan in diese Lösung ganz langsam auskristallisieren läßt. Es handelt sich bei dem Hauptprodukt um das andere Diastereomer.

Beispiel 15:

Synthese von 4-($\eta^5$-Cyclopentadienyl)-4,7-dimethyl-7-butyl-($\eta^5$-4,5,6,7-tetrahydroindenyl)dichlorohafnium

Zu einer auf -78° C abgekühlten Suspension von 2,00 g (5,64 mmol) Dilithiumsalz (Beispiel 4) in 150 ml Toluol werden 1,81 g (5,65 mmol) Hafniumtetrachlorid hinzugefügt. Die orangene Suspension läßt man auf Raumtemperatur erwärmen und rührt zur Vervollständigung der Reaktion noch 2 Tage lang. Anschließend frittet man vom Unlöslichen ab und engt das orangerote Filtrat an der Ölpumpe zur Trockne ein. Der orangerote Rückstand wird mit 30 ml Pentan versetzt und über Nacht intensiv gerührt. Nach Entfernen des Lösungsmittels im Vakuum erhält man das Hafnocendichlorid in einer Rohproduktausbeute von 700 mg (24 %) als beiges Pulver. Im $^1$H-NMR Spektrum des Rohproduktes kann man nur ein Diastereomer finden.

Beispiel 16:

Synthese beider Diastereomere von 4-($\eta^5$-Cyclopentadienyl)-4,7-dimethyl-7-butyl-($\eta^5$-4,5,6,7-tetrahydroindenyl)dichlorotitan

Suspendiert man 5,95 g (16,8 mmol) des Dilithiumsalzes (Beispiel 4) in 120 ml Toluol, so färbt sich die beige Suspension bei der Zugabe von 3,18 g (16,8 mmol) Titantetrachlorid bei -78°C sofort dunkelrot. Die Suspension wird noch 36 Stunden bei Raumtemperatur gerührt, ehe man von dem Niederschlag abtrennt und das dunkelrote Filtrat bis zur Trockne im Ölpumpenvakuum einengt. Dabei erhält man beide Diastereomere des Titanocendichlorids als braunrotes Pulver in einer Rohausbeute von 1,54 g (24 %). Im $^1$H-NMR-Spektrum des Rohproduktes kann man die Signale beider Diastereomeren im Verhältnis 8:1 bestimmen. Extrahiert man das braunrote Pulver mit Pentan mehrere Tage in einer Umlauffritte, so fällt aus dem Filtrat ein brauner Niederschlag aus. Dabei kann man im $^1$H-NMR-Spektrum feststellen, daß die Pentanlösung beide Isomere in einem Verhältnis von 1:1 beinhaltet (150 mg, 2,3 %), während das braune Pulver (720 mg, 11 %) annäherend diastereomenrein ist.

Beispiel 17:

Synthese von {4-[3'-t-Bu-($\eta^5$-cyclopentadienyl)]-4,7,7-trimethyl-($\eta^5$-4,5,6,7-tetrahydroindenyl)}dichlorozirconium

Eine Suspension von 2,84 g (7,71 mmol) des Dilithiumsalzes (Beispiel 9) wird in 150 ml Toluol suspendiert und auf -78°C abgekühlt. Nachdem man portionsweise 1,79 g (7,71 mmol) Zirconiumtetrachlorid hinzugefügt hat, läßt man auf Raumtemperatur erwärmen und rührt noch 48 Stunden. Anschließend trennt man von Unlöslichem ab, engt die orangene Toluolphase im Ölpumpenvakuum ein und pulverisiert das orangerote Öl durch heftiges Rühren in Pentan. Dabei erhält man die regioisomeren Zirconocendichloride als orangegelbes Pulver in einer Rohausbeute von 23 % (787 mg). Im $^1$H-NMR Spektrum des Rohproduktes findet man die Signale beider Diastereomere im Verhältnis 1:1. Durch Extraktion des orangegelben Pulvers mit Pentan in einer Umlauffritte erhält man 370 mg (11 %) der Zirconocendichloride in einem Verhältnis von 1:1.

G. Synthese der Metallocendialkyl-Komplexe

Beispiel 18: Synthese von 4-($\eta^5$-Cyclopentadienyl)-4,7,7-trimethyl-($\eta^5$-4,5,6,7-tetrahydroindenyl)zirconiumdimethyl

In Anlehnung an die Literaturvorschrift [b] werden zu einer Suspension von 1,03 g (2,66 mmol) Zirconocendichlorid (Beispiel 10) in 50 ml Diethylether 3,30 ml (5,33 mmol, 1,60 M) einer etherischen Methyllithium-Lösung bei -78°C langsam zutropft. Man läßt im Kältebad langsam auf Raumtemperatur erwärmen und rührt noch 5 Stunden bei Raumtemperatur nach. Das Lösungsmittel wird im Vakuum entfernt und der farblose Rückstand mit 3 x 50 ml Pentan extrahiert. Die vereinigten Pentanlösungen werden eingeengt und zur Kristallisation bei -25°C aufbewahrt. Man erhält nach Abhebern des Lösungsmittels und Trocknen im Ölpumpenvakuum 700 mg (76 %) Zirconocendimethyl als farbloses, kristallines Pulver.

[b] E. Samuel, M.D. Rausch, J.Am.Chem.Soc. 95 (1973) 6263.

Beispiel 19:

Synthese beider Diastereomere von [4-($\eta^5$-Cyclopentadienyl)-4,7-dimethyl-7-(2-propen-1-yl)-($\eta^5$-4,5,6,7-tetrahydroindenyl)]dichlorotitan

Man löst 2,45 g (7,24 mmol) der Dilithiumverbindung (Beispiel 9b) in 80 ml Tetrahydrofuran und erhält eine orangefarbene, klare Lösung, die anschließend auf -78°C abgekühlt wird und mit 2,42 g (7,24 mmol) Titantetrachlorid-bis-THF-Addukt versetzt wird. Das Reaktionsgemisch verfärbt sich daraufhin sofort dunkelrot. Man läßt auf Raumtemperatur erwärmen und rührt noch zwei Tage. Nach Entfernen des Lösungsmittels im Vakuum erhält man braunes Pulver. Durch Pentanextraktion des Rohproduktes in einer Umlauffritte kann man 0,22 g (9 %) der beiden Allyltitanocen als braune Pulver isolieren.

Im $^1$H-NMR-Spektrum findet man beide Produkte in einem Diastereomerenverhältnis von 2:1.

Beispiel 20:

Synthese beider Diasteromere von [4-($\eta^5$-Cyclopentadienyl)-4,7-dimethyl-7-(2-propen-1-yl)-($\eta^5$-4,5,6,7-tetrahydroindenyl)]dichlorozirconium

7,56 g (22,3 mmol) der Dilithiumverbindung (Beispiel 9b) werden in 200 ml Toluol suspendiert und auf -78°C abgekühlt. Dazu werden 5,21 g (22,3 mmol) Zirconiumtetrachlorid portionsweise hinzugefügt. Nach 30 Minuten bei -78°C läßt man innerhalb von 4 Stunden auf Raumtemperatur erwärmen und rührt noch weitere 12 Stunden. Die orangefarbene Suspension wird nun über eine G4-Fritte abfiltriert, der Rückstand zweimal mit je 30 ml Toluol gewaschen und das Filtrat bis zur Trockne im Ölpumpenvakuum eingeengt. Dabei erhält man ein orangerotes Öl, welches durch Zugabe von 50 ml Pentan und anschließendem intensiven Rühren pulverisiert werden kann. Nach dem Entfernen des Lösungsmittels im Vakuum erhält man die gelborangefarbenen, pulverigen Allylzirconocene in einer Rohausbeute von 5,04 g (55 %). Durch mehrfache Extraktion des Rohproduktes mit 100 ml Pentan in einer Umlauffritte kann man 2,34 g (26 %) der Allylzirconocene als gelbe Pulver isolieren; Fp.: 99°C (DSC).

Im $^1$H-NMR-Spektrum findet man beide Produkte 23a und 23b in einem Diastereomerenverhältnis von 1,5:1.

Beispiel 21:

Synthese beider Diastereomere von [4-($\eta^5$-Cyclopentadienyl)-4,7-dimethyl-7-(3-(9-borabicyclo}nonyl-B)propyl-($\eta^5$-4,5,6,7-tetrahydroindenyl)]dichlorozirconium

210 mg (0,51 mmol) der Allylzirconocendichloride (Beispiel 20) werden in 50 ml Toluol gelöst und bei Raumtemperatur mit 62 mg (0,51 mmol) 9-BBN versetzt. Man rührt 36 Stunden bei Raumtemperatur, entfernt das Lösungsmittel im Vakuum und pulverisiert das orangegelbene Öl mit 30 ml Diethylether. Engt man nun die klare Lösung bis auf 10 ml ein und kühlt mehrere Stunden auf -30°C ab, so erhält man 208 mg (78 %) der Diasteromere als orangegelbe Pulver; Fp.: 74°C (DSC).

Beispiel 22:

Synthese von 7-(3'-$^i$Propyl-cyclopentadienyl)-4,4,7-trimethyl-4,5,6,7-tetrahydro-1H-inden

a) Synthese von {4-[3'-$^i$Propyl-($\eta^5$-cyclopentadienyl)]-4,7,7-trimethyl-($\eta^5$-4,5,6,7-tetrahydroindenyl)}dichlorozirconium

Zu einer Suspension von 2,17 g (57,3 mmol) Lithiumaluminiumhydrid in 100 ml Diethylether wird bei Raumtemperatur eine Lösung von 6,11 g (22,9 mmol) des Tetrahydroindenylfulvens (Beispiel 8a) in 20 ml Diethylether zugetropft. Nach einer heftigen aber nicht sehr exothermen Reaktion wird die orangefarbene Suspension noch drei Stunden unter Rückfluß erhitzt. Anschließend kühlt man im Eisbad auf 0°C und hydrolysiert vorsichtig mit Eiswasser, wobei ein weißer voluminöser Niederschlag noch zweimal mit je 50 ml Diethylether extrahiert wird und wäscht die vereinigten organischen Phasen mit wäßriger Natriumchloridlösung. Man trocknet danach über Magnesiumsulfat und erhält nach Entfernen des Lösungsmittels im Vakuum 5,63 g (92 %) des $^i$Propyl-substituierten ansa-Liganden als orangefarbenes Öl.

Auch hier besteht das Produkt aus einer Vielzahl von Doppelbindungsisomeren, so daß nur eine grobe Zuordnung von Signalgruppen im $^1$H-NMR Spektrum möglich ist.

b) Synthese von {4-[3'-$^i$Propyl-($\eta^5$-cyclopentadienyl)]-4,7,7-trimethyl-($\eta^5$-4,5,6,7-tetrahydroindenyl)}dilithium

Es werden 4,21 g (15,7 mmol) des Isopropyl-substituierten Liganden in 70 ml Diethylether gelöst und bei 0°C mit 21,6 ml (34,5 mmol) einer 1,60 M Methyllithiumlösung tropfenweise versetzt. Die Lösung entfärbt sich rasch, wobei sich ein weißer Niederschlag bildet. Nach Beendigung des Zutropfen rührt man noch weitere 15 Stunden bei Raumtemperatur. Anschließend wird der Niederschlag abfiltriert und zweimal mit je 15 ml Diethylether gewaschen. Man erhält 5,20 g (93 %) des extrem luftempfindlichen Dilithium-salzes als beigefarbenes Pulver, das ein Moläquivalent Diethylether enthält.

c) Synthese von {4-[3'-$^i$Propyl-($\eta^5$-cyclopentadienyl)]-4,7,7-trimethyl-($\eta^5$-4,5,6,7-tetrahydroindenyl)}dichlorozirconium

Zu einer auf -78°C abgekühlten Suspension von 5,20 g (14,7 mmol) des Dilithiumsalzes in 200 ml Toluol, werden 3,40 g (14,6 mmol) Zirconiumtetrachlorid langsam hinzugefügt. Die entstandene beigefarbene Suspension wird 24 Stunden bei Raumtemperatur gerührt ehe man von Unlöslichen abtrennt und das orangefarbene, klare Filtrat im Ölpumpenvakuum auf ungefähr 50 ml einengt. Eine $^1$H-NMR spektroskopische Untersuchung der Toluolphase führt zu

dem Resultat, daß in dieser beide Diastereomere in einem Verhältnis von 1:1 zu finden sind. Durch Zugabe von 20 ml Pentan und Lagerung im Eisschrank bei -20°C fällt ein gelber Feststoff aus (1,42 g), bei dem ein Diastereomer deutlich (8:1) angereichert ist. In der Toluolphase findet man dementsprechend das andere Diastereomer im umgekehrten Verhältnis angereichert (1,62 g); Gesamtausbeute 49 %.

Löst man ungefähr 100 mg des ausgefallenen gelben Pulvers in Methylenchlorid so erhält man nach anschließender langsamer Diffusion von Pentan in diese Lösung röntgenstrukturfähige Kristalle, welche dem Diastereomer (4R*-{4-[3'-$^{i}$Pr-($\eta^5$-cyclopentadienyl)]-4,7,7-trimethyl-($\eta^5$-4,5,6,7-pR*-tetrahydroindenyl)}dichlorozirconium zugeordnet werden können.

Beispiel 23:

Synthese von {4-[3'-$^{i}$Propyl-($\eta^5$-cyclopentadienyl)]-4,7,7-trimethyl-[2-$^{i}$propyl-($\eta^5$-4,5,6,7-tetrahydroindenyl)}dichlorozirconium

a) Synthese von 4-(3'-$^{i}$Propyl-cyclopentadienyl)-4,7,7-trimethyl-(2-$^{i}$propyl-4,5,6,7-tetrahydro-1H-inden) ausgehend von 2-Isopropyliden-4-(3'-isopropyliden-cyclopenta-1',4'-dienyl)-4,7,7-trimethyl-(4,5,6,7-tetrahydro-2H-inden)

Löst man 8,32 g (34,2 mmol) des "Monofulvens" (Beispiel 8a) in einem Gemisch aus 50 ml Methanol und 20 ml Pentan, so erhält man eine orangerote, klare Lösung, welche auf 0°C abgekühlt wird. Durch sukzessive Zugabe von 2,61 g (3,31 ml, 45,0 mmol) Aceton und 6,08 g (7,10 ml, 85,5 mmol) Pyrrolidin färbt sich die Reaktionslösung nach 30 min dunkelrot. Nach 7 Tagen Rühren bei Raumtemperatur wird die Reaktionsmischung nacheinander mit 5 ml Eisessig, 150 ml Wasser und 50 ml Pentan versetzt. Nach zweimaligen Ausschütteln der wäßrigen Phase mit Pentan werden die vereinigten organischen Phasen mehrmals mit gesättigter, wäßriger Natriumchloridlösung gewaschen und über Magnesiumsulfat getrocknet. Entfernt man das Lösungsmittel im Ölpumpenvakuum, so kann man das Difulven in einer Rohausbeute von 9,04 g (86 %] als rotes Öl isolieren.

Ein Teil des roten Öls wird in Pentan aufgenommen und an einer Kieselgelsäule (Merck, 60 mesh) chromatographiert, welche vorher mit Triethylamin desaktiviert wurde. Als Laufmittel wird ein Pentan : Diethylether Gemisch (100: 5) verwendet (Gesamtausbeute < 10 %).

b) Synthese von 4-(3'-$^{i}$Propyl-cyclopentadienyl)-4,7,7-trimethyl-(2-$^{i}$propyl-4,5,6,7-tetrahydro-1H-inden)

In einem Dreihalskolben mit Intensivkühler und Tropftrichter werden 3,03 g (80,0 mmol) Lithiumaluminumhydrid in 100 ml Diethylether vorgelegt und tropfenweise unter starkem Rühren bei Raumtemperatur mit 6,47 g (21,1 mmol) des Difulvens (Beispiel 23a) gelöst in 50 ml Diethylether versetzt. Nach beendeter Zugabe wird das Reaktionsgemisch noch 5 Stunden unter Rückfluß erhitzt und anschließend vorsichtig mit 100 ml Wasser hydrolysiert. Dabei erhält man einen grauen Niederschlag an Aluminiumoxid und eine gelbe Diethyletherphase. Diese wird abdekantiert, der graue Niederschlag noch mehrmals mit Diethylether extrahiert und die vereinigten Diethyletherphasen mit gesättigter wäßriger Natriumchloridlösung gewaschen. Nach dem Trocknen über Magnesiumsulfat und dem Entfernen des Lösungsmittels im Vakuum verbleiben 6,25 g (96 %) des reduzierten Difulvens als orangerotes Öl, welches ohne weitere Reinigung umgesetzt wird.

c) Synthese von 4-(3'-$^{i}$Propyl-cyclopentadienyl)-4,7,7-trimethyl-(2-$^{i}$propyl-4,5,6,7-tetrahydro-1H-inden) über 2,5-Bis [($^{i}$propyl)cyclopenta-2,4-dien-1-yliden]hexan

Zu einer Lösung aus 2,78 ml (2,71 g, 23,8 mmol) 2,5-Hexandion und 4,00 g (47,6 mmol) Isopropylcyclopentadien in 50 ml Methanol werden 5,90 ml (5,07 g, 71,3 mmol) frisch destilliertes Pyrrolidin bei 0°C tropfenweise hinzugefügt. Dabei verfärbt sich die Reaktionslösung sofort dunkelrot und wird noch weitere 15 Stunden bei 0°C gerührt. Zur Aufarbeitung wird das Pyrrolidin durch Zugabe einer Lösung von 2 ml Eisessig in 100 ml Wasser neutralisiert. Man extruhiert zweimal mit je 100 ml Diethylether, wäscht die vereinigten organischen Phasen mehrmals mit gesättigter, wäßriger Natriumchloridlösung und trocknet über Magnesiumsulfat. Nach Entfernen des Lösungsmittels im Vakuum erhält man das Difulven als dunkelrotes Öl in einer Rohausbeute von 75 % (5,20 g).

Die Reinigung des Difulvens erfolgt durch eine säulenchromatographische Aufarbeitung an einer mit Triethylamin desaktiven Kieselgelsäule (Pentan : Triethylamin = 100:1). Als Laufmittel eignet sich ein Pentan : Diethylether Solvensgemisch im Verhältnis 1:1, wobei man 1,72 g des Difulvens (25 %) als rotes Öl isolieren kann.

d) Synthese von 4-(3'-$^{i}$Propyl-cyclopentadienyl)-4,7,7-trimethyl-(2-$^{i}$propyl-4,5,6,7-tetrahydro-1H-inden)

600 mg (2,04 mmol) des Bisisopropylsubstituierten Difulvens (Beispiel 23b) werden in 10 ml Diethylether gelöst

und bei 0°C mit 2,55 ml einer etherischen 1,60 M Methyllithiumlösung langsam versetzt. Man läßt auf Raumtemperatur erwärmen und erhält nach 24 Stunden eine orangefarbene Suspension, die auf 0°C abgekühlt wird, ehe man sie mit 10 ml Wasser hydrolysiert. Nach Extraktion mit 20 ml Diethylether und Trocknen über Magnesiumsulfat erhält man 520 mg des cyclisierten Produkts als orangefarbenes Öl in einer Ausbeute von 82 %.

e) Synthese von {4-[3'-$^{i}$Propyl-($\eta^5$-cyclopentadienyl)]-4,7,7-trimethyl-[2-$^{i}$propyl-($\eta^5$-4,5,6,7-tetrahydroindenyl)}dichlorozirconium

Zu einer Lösung von 500 mg (1,61 mmol) der bisisopropylsubstituierten Verbindungen (Beispiel 23a bzw. 23b) in 20 ml Pentan tropft man 2,00 ml (3,22 mmol) einer 1,60 M etherischen Methyllithiumlösung bei 0°C zu. Man läßt auf Raumtemperatur erwärmen und erhält nach 12 Stunden eine trübe, orangefarbene Suspension. Diese wird auf -78°C abgekühlt und mit 373 mg (1,61 mmol) Zirconiumtetrachlorid versetzt. Nach 24 Stunden Rühren bei Raumtemperatur filtriert man vom Unlöslichen ab und entfernt das Lösungsmittel im Vakuum Man erhält beide Diastereomere des ansa-Zirconocens als orangefarbenes Pulver in einer Rohausbeute von 300 mg (40 %). Im $^1$H-NMR-Spektrum findet man die Resonanzsignale beider Diastereomere im Verhältnis 1:1 (bestimmt anhand der $^{i}$Pr-Gruppen).

Beispiel 24:

Synthese von {4-[3'-Trimethylsilyl-($\eta^5$-cyclopentadienyl)]-4,7,7-trimethyl-[2-trimethylsilyl($\eta^5$-4,5,6,7-tetrahydroindenyl)]}dichlorozirconium

a) Synthese von 7-(3'-Trimethylsilyl-cyclopentadienyl)-4,4,7-trimethyl-(2-trimethylsilyl-4,5,6,7-tetrahydro-1H-inden)

Eine Lösung von 6,81 g (21,8 mmol) des Dilithiumetherates (Beispiel 2) in 50 ml Tetrahydrofuran wird auf 0°C abgekühlt und tropfenweise mit 5,50 ml (4,74 g, 43,6 mmol) Trimethylsilylchlorid versetzt. Man läßt über Nacht auf Raumtemperatur erwärmen, wobei man eine orangefarbene, trübe Suspension erhält. Diese wird durch Zugabe von 50 ml entgastem Wasser hydrolysiert und anschließend mit Petrolether extrahiert. Nach dem Trocken über Magnesiumsulfat und dem Entfernen des Lösungsmittels im Vakuum erhält man 6,54 g (81 %) als rotorangefarbenes Öl.

b) Synthese von {4-[3'-Trimethylsilyl-($\eta^5$-cyclopentadienyl)]-4,7,7-trimethyl-[2-trimethylsilyl($\eta^5$-4,5,6,7-tetrahydroindenyl)]}dilithium

Eine auf 0°C abgekühlte Lösung von 3,30 g (8,90 mmol) der Bistrimethylsilyl-substituierten Verbindung in 40 ml Pentan wird mit 11,1 ml (17,8 mmol) einer 1,60 M etherischen Methyllithiumlösung tropfenweise versetzt. Dabei erhält man unter Gasentwicklung einen weißen Niederschlag. Man läßt zur Vervollständigung der Reaktion noch 24 Stunden bei Raumtemperatur rühren, ehe man den weißen Niederschlag abfiltriert und mit Pentan wäscht. Nach dem Trocknen im Ölpumpenvakuum erhält man das Dilithiumsalz als weißen, pyrophoren Rückstand in einer Ausbeute von 76 % (2,60 g).

c) Synthese von {4-[3'-Trimethylsilyl-($\eta^5$-cyclopentadienyl)]-4,7,7-trimethyl-[2-trimethylsilyl($\eta^5$-4,5,6,7-tetrahydroindenyl)]}dichlorozirconium

Zu einer auf -78°C abgekühlten Suspension von 2,60 g (6,79 mmol) des Bistrimethylsilyl-substituierten Dilithiumsalzes in 100 ml Toluol werden 1,58 g (6,79 mmol) Zirconiumtetrachlorid portionsweise hinzugefügt. Man läßt auf Raumtemperatur erwärmen und erhält nach 24 Stunden Rühren eine orangefarbene Suspension. Nachdem man von Unlöslichem abgetrennt hat, wird das Lösungsmittel zur Trockne eingeengt, wobei man ein rotes Öl erhält. Durch Zugabe von 20 ml Pentan und anschließender Aufarbeitung kann man beide Diasteromere des ansa-Zirconocens als orangefarbenes Pulver in einer Rohausbeute von 1,54 g (43 %) isolieren; Fp.: 151°C (Zers., DSC).

Polymerisationsbeispiele

Beispiel A:

In einem 1,5 $dm^3$-Autoklav, der vorher gründlich mit Ethen gespühlt wurde, werden 600 $cm^3$ einer 85 gew.-%igen Lösung von Norbornen in Toluol vorgelegt. Durch mehrfaches Aufdrücken von Ethen (18 bar) wurde die Lösung mit Ethen gesättigt. In den so vorbereiteten Reaktor wurden im Gegenstrom 5 $cm^3$ toluolische Methylaluminoxanlösung (10,1 Gew.-%ige Methylaluminoxanlösung der Molmasse 1300 g/mol nach kryoskopischer Bestimmung) dosiert und

30 Minuten bei 70°C gerührt. Eine Lösung von 1,0 mg 4-($\eta^5$-Cyclopentadienyl)-4,7,7-trimethyl-($\eta^5$-4,5,6,7-tetrahydroindenyl)dichlorozirkonium in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 UPM) wurde eine Stunde bei 70°C polymerisiert, wobei der Ethendruck durch Nachdosieren bei 18,0 bar gehalten wurde.

Nach Ende der Reaktionszeit wurde das Polymerisationsgemisch in ein Gefäß abgelassen und sofort in 5 $dm^3$ Aceton eingetragen 10 Minuten gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.

Nach der Trocknung wurden 224 g farbloses Polymer erhalten, welches eine Glastemperatur von 179°C, eine Viskositätszahl von 52 $cm^3$/g, eine Reißspannung von 59 MPa und eine Reißdehnung von 3,1% aufwies. Die Aktivität A* betrug 80512 g Polymer/h x mmol.

Beispiel B (Vergleichsbeispiel):

Es wurde gemäß Beispiel A verfahren, jedoch wurde Isopropyliden(cyclopentadienyl)(1-indenyl)dichlorozirkoniumals Metallocenverbindung verwendet. Es wurden 89 g Polymer erhalten, welches eine Glastemperatur von 150°C, eine Viskositätszahl von 57 $cm^3$/g, eine Reißspannung von 61 MPa und eine Reißdehnung von 3,3% aufwies. Die Aktivität A* betrug 34000 g Polymer/h x mmol.

Beispiel C:

In einem 1,5 $dm^3$-Autoklav, der vorher gründlich mit Ethen gespült wurde, wurden 600 $cm^3$ einer 85 gew.-%igen Lösung von Norbornen in Toluol vorgelegt. Durch mehrfaches Aufdrücken von Ethen (18 bar) wurde die Lösung mit Ethen gesättigt. In den so vorbereiteten Reaktor wurden im Gegenstrom 5 $cm^3$ toluolische Methylaluminoxanlösung (10,1 Gew.-%ige Methylaluminoxanlösung der Molmasse 1300 g/mol nach kryoskopischer Bestimmung) dosiert und 30 Minuten bei 80°C gerührt. Eine Lösung von 1,0 mg 4-($\eta^5$-Isopropyl-cyclopentadienyl)-4,7,7-trimethyl-($\eta^5$-4,5,6,7-tetrahydroindenyl)dichlorozirkonium in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 UPM) wurde eine Stunde polymerisiert, wobei der Ethendruck durch Nachdosieren bei 17,8 bar und die Temperatur im Kessel bei 80°C gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.

Nach der Trocknung wurden 16,0 g farbloses Polymer erhalten, welches eine Glastemperatur von 145°C, eine Viskositätszahl von 156 $cm^3$/g, eine Reißspannung von 64 MPa und eine Reißdehnung von 3,3 % aufwies. Die Aktivität A* betrug 68300 g Polymer/h x mmol.

Beispiel D:

In einem 1,5 $dm^3$-Autoklav, der vorher gründlich mit Ethen gespült wurde, wurden 600 $cm^3$ einer 50 gew.-%igen Lösung von Norbornen in Toluol vorgelegt. Durch mehrfaches Aufdrücken von Ethen (18 bar) wurde die Lösung mit Ethen gesättigt. In den so vorbereiteten Reaktor wurden im Gegenstrom 5 $cm^3$ toluolische Methylaluminoxanlösung (10,1 Gew.-%ige Methylaluminoxanlösung der Molmasse 1300 g/mol nach kryoskopischer Bestimmung) dosiert und 30 Minuten bei 80°C gerührt. Eine Lösung von 0,2 mg 4-($\eta^5$-Isopropyl-cyclopentadienyl)-4,7,7-trimethyl-($\eta^5$-4,5,6,7-tetrahydroindenyl)dichlorozirkonium in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 UPM) wurde eine Stunde polymerisiert, wobei der Ethendruck durch Nachdosieren bei 17,8 bar und die Temperatur im Kessel bei 70°C gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.

Nach der Trocknung wurden 98 g farbloses Polymer erhalten, welches eine Glastemperatur von 184°C, eine Vis-

kositätszahl von 114 $cm^3/g$, eine Reißspannung von 61 MPa und eine Reißdehnung von 3,1 % aufwies. Die Aktivität A* betrug 104500 g Polymer/h x mmol.

Beispiel E:

In einem 1,5 $dm^3$-Autoklav, der vorher gründlich mit Ethen gespült wurde, wurden 600 $cm^3$ einer 50 gew.-%igen Lösung von Norbornen in Toluol vorgelegt. Durch mehrfaches Aufdrücken von Ethen (18 bar) wurde die Lösung mit Ethen gesättigt. In den so vorbereiteten Reaktor wurden im Gegenstrom 5 $cm^3$ toluolische Methylaluminoxanlösung (10,1 Gew.-%ige Methylaluminoxanlösung der Molmasse 1300 g/mol nach kryoskopischer Bestimmung) dosiert und 30 Minuten bei 80°C gerührt. Eine Lösung von 1,0 mg 4($\eta^5$-Isopropyl-cyclopentadienyl)-4,7,7-trimethyl-($\eta^5$-4,5,6,7-tetrahydroindenyl)dichlorozirkonium in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 UPM) wurde eine Stunde polymerisiert, wobei der Ethendruck durch Nachdosieren bei 17,8 bar und die Temperatur im Kessel bei 50°C gehalten wurde.

Nach Ende der Reaktionszeit wurde das Polymerisationsgemisch in ein Gefäß abgelassen und sofort in 5 $dm^3$ Aceton eingetragen 10 Minuten gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.

Nach der Trocknung wurden 31 g farbloses Polymer erhalten, welches eine Glastemperatur von 121°C, eine Viskositätszahl von 203 $cm^3/g$, eine Reißspannung von 65 MPa und eine Reißdehnung von 3,3 % aufwies. Die Aktivität A* betrug 13200 g Polymer/h x mmol.

Beispiel F:

In einem 1,5 $dm^3$-Autoklav, der vorher gründlich mit Ethen gespült wurde, wurden 600 $cm^3$ einer 50 gew.-%igen Lösung von Norbornen in Toluol vorgelegt. Durch mehrfaches Aufdrücken von Ethen (18 bar) wurde die Lösung mit Ethen gesättigt. In den so vorbereiteten Reaktor wurden im Gegenstrom 5 $cm^3$ toluolische Methylaluminoxanlösung (10,1 Gew.-%ige Methylaluminoxanlösung der Molmasse 1300 g/mol nach kryoskopischer Bestimmung) dosiert und 30 Minuten bei 80°C gerührt. Eine Lösung von 0,83 mg 4-($\eta^5$-Isopropyl-cyclopentadienyl)-4,7,7-trimethyl-($\eta^5$-4,5,6,7-tetrahydroindenyl)dichlorozirkonium in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 UPM) wurde eine Stunde polymerisiert, wobei der Ethendruck durch Nachdosieren bei 18,0 bar und die Temperatur im Kessel bei 90°C gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.

Nach der Trocknung wurden 45 g farbloses Polymer erhalten, welches eine Glastemperatur von 130°C, eine Viskositätszahl von 107 $cm^3/g$, eine Reißspannung von 62 MPa und eine Reißdehnung von 3,2 % aufwies. Die Aktivität A* betrug 24200 g Polymer/h x mmol.

Beispiel G:

Es wurde analog Beispiel A verfahren, jedoch wurden 0,92 mg 4-($\eta^5$-Benzyl-cyclopentadienyl)-4,7,7-trimethyl-($\eta^5$-4,5,6,7-tetrahydroindenyl)dichlorzirkonium verwendet. Die Polymerisationstemperatur betrug 90°C. Es wurden 31 g Polymer mit folgenden Eigenschaften erhalten: Tg = 141°C, VZ = 80 $cm^3/g$,Reißspannung = 63 MPa, Reißdehnung = 3,6 %, A* = 18900 g Polymer/h x mmol.

Beispiel H:

Es wurde analog Beispiel A verfahren, jedoch wurden 1,0 mg 4-($\eta^5$-Cyclopentadienyl)-4,7,7,-trimethyl-($\eta^5$-4,5,6,7-tetrahydroindenyl)bis-(dimethylamino)zirkonium verwendet. Es wurden 180 g Polymer mit folgenden Eigenschaften erhalten: Tg = 169°C, VZ = 54 $cm^3/g$, Reißspannung = 59 MPa, Reißdehnung = 3,2 %, A* = 71900 g Polymer/ h x mmol.

Beispiel I:

Es wurde analog Beispiel A verfahren, jedoch wurden 1,1 mg 4-($\eta^5$-$^t$Butylcyclopentadienyl)-4,7,7-trimethyl-($\eta^5$-4,5,6,7-tetrahydroindenyl)dichlorzirkonium verwendet. Es wurden 33 g Polymer mit folgenden Eigenschaften erhalten: Tg = 124°C, VZ = 228 $cm^3$/g, Reißspannung = 64 MPa, Reißdehnung = 3,8 %, A* = 27400 g Polymer/h x mmol.

## Patentansprüche

1. Stereorigide Metallocenverbindung, die als Liganden zwei substituierte oder unsubstituierte Cyclopentadienylgruppen aufweist, die über ein mono- oder polycyclisches Ringsystem miteinander verbunden sind, worin sich eine Cyclopentadienylgruppe als Substituent an dem mono- oder polycyclischen Ringsystem befindet, während eine weitere Cyclopentadienylgruppe an das mono- oder polycyclische Ringsystem anelliert ist und Metallocene ausgenommen sind, die ein 4-($\eta^5$-3'-alkyl-cyclopentadienyl)-4,6,6-trimethyl-($\eta^5$-2-alkyl-4,5-tetrahydropentalen) als Ligandsystem aufweisen.

2. Stereorigide Metallocenverbindung gemäß Anspruch 1, worin das mono- oder polycyclische Ringsystem mindestens sechs Ringatome aufweist.

3. Stereorigide Metallocenverbindung gemäß Anspruch 1, welche die Formel I aufweist

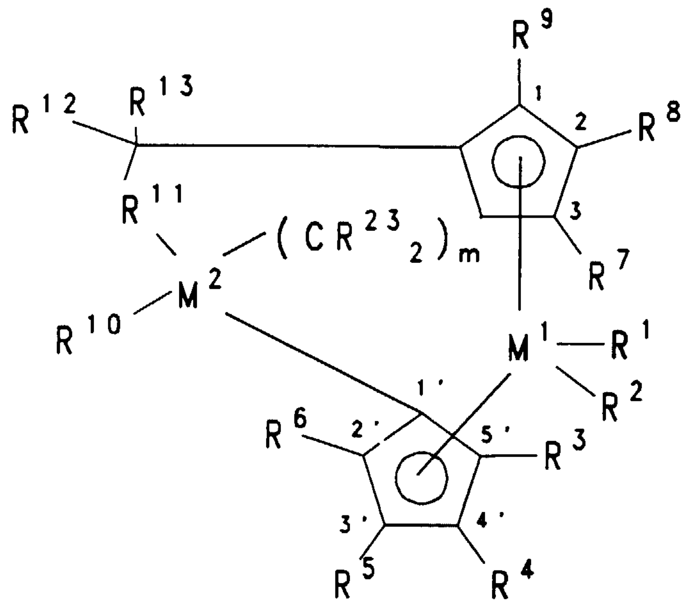

(I),

worin

| | |
|---|---|
| $M^1$ | ein Metall der Gruppe IIIb, IVb, Vb oder VIb des Periodensystems ist, |
| $M^2$ | Kohlenstoff, Silizium oder Germanium ist, |
| $R^1$ und $R^2$ | gleich oder verschieden sind und ein Wasserstoffatom, eine $C_1$-$C_{40}$-kohlenwasserstoffhaltige Gruppe wie eine $C_1$-$C_{10}$-Alkyl-, eine $C_1$-$C_{10}$-Alkoxy, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^{14}_2$, worin $R^{14}$ ein Halogenatom, eine $C_1$-$C_{10}$-Alkylgruppe oder eine $C_6$-$C_{10}$-Arylgruppe ist, bedeuten, oder $R^1$ und $R^2$ zusammen mit den sie verbindenden Atomen ein Ringsystem bilden, |
| $R^3$, $R^4$, $R^5$, $R^6$, $R^7$, $R^8$ und $R^9$ | gleich oder verschieden sind und ein Wasserstoffatom, ein Halogenatom, eine $C_1$-$C_{20}$-kohlenwasserstoffhaltige Gruppe wie eine $C_1$-$C_{10}$-Alkylgruppe, die halogeniert sein kann, eine $C_6$-$C_{20}$-Arylgruppe, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, |

oder eine $C_8$-$C_{40}$-Arylalkenylgruppe, einen -$R^{14}$-$SiR^{14}_3$-, -$NR^{14}_2$-, -$SiOR^{14}_3$-, -$SiSR^{14}_3$- oder -$PR^{14}_2$-Rest bedeuten, worin $R^{14}$ ein Halogenatom, eine $C_1$-$C_{10}$-Alkylgruppe oder eine $C_6$-$C_{10}$-Arylgruppe ist, oder zwei oder mehr benachbarte Reste $R^3$, $R^4$, $R^5$, $R^6$, $R^7$, $R^8$ und $R^9$ zusammen mit den sie verbindenen Atomen ein Ringsystem bilden, welches bevorzugt 4-40, besonders bevorzugt 6-15 Kohlenstoffatome enthält,

$R^{10}$ ein Wasserstoffatom, oder eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste -$NR^{14}_3$, -$SiR^{14}_3$,-$SR^{14}_2$ oder -$OSiR^{14}_3$ tragen können, worin $R^{14}$ ein Halogenatom, eine $C_1$-$C_{10}$-Alkylgruppe oder eine $C_6$-$C_{10}$-Arylgruppe ist, oder $R^{10}$ mit einem oder mehreren der Reste $R^3$, $R^4$, $R^5$ und $R^6$ verbunden ist.

$R^{11}$

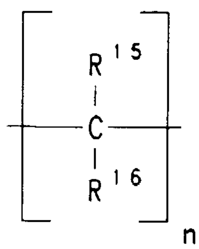,
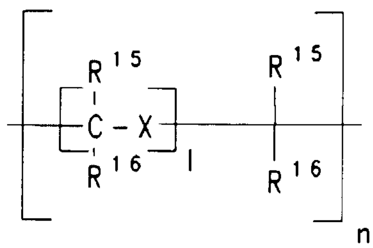,
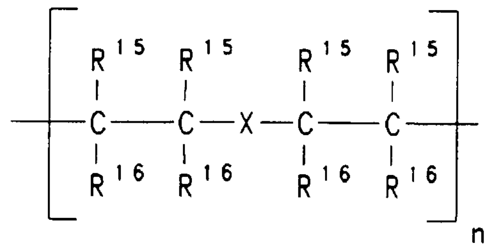,

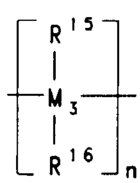,
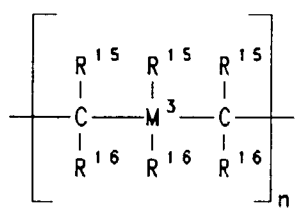,
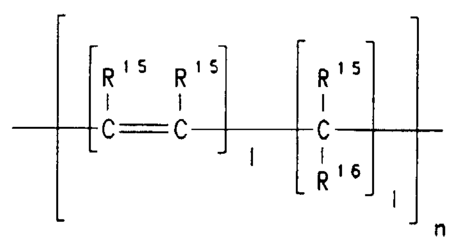

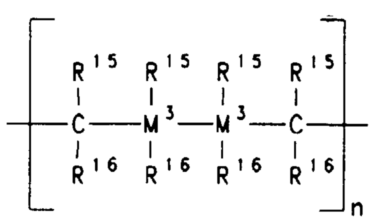
oder
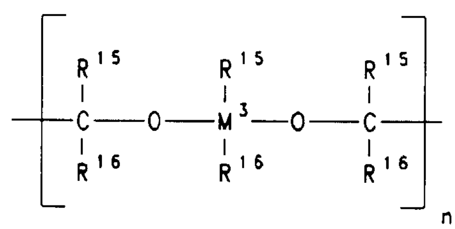

ist, wobei n eine ganze Zahl von 1 bis 20 ist, l ein ganze Zahl von 0 bis 20 ist, X gleich O, =$NR^{14}$, =CO, =$PR^{14}$, =$P(O)R^{14}$, =SO, =$SO_2$ oder -S- ist, worin $R^{14}$ ein Halogenatom, eine $C_1$-$C_{10}$-Alkylgruppe oder eine $C_6$-$C_{10}$-Arylgruppe ist,

$R^{15}$ und $R^{16}$ gleich oder verschieden sind und ein Wasserstoffatom, ein Halogenatom, oder eine $C_1$-$C_{40}$-kohlenwasserstoffhaltige Gruppe wie eine $C_1$-$C_{10}$-Alkyl-, eine $C_1$-$C_{10}$-Fluoralkyl-, eine $C_1$-$C_{10}$-Alkoxy-, eine $C_5$-$C_{10}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-

Arylalkyl-, eine $C_7$-$C_{40}$-Alkylaryl- oder eine $C_8$-$C_{40}$-Arylalkenylgruppe bedeuten, oder zwei Reste $R^{15}$, zwei Reste $R^{16}$, oder

$R^{15}$ und $R^{16}$ jeweils mit den sie verbindenen Atomen einen oder mehrere Ringe bilden, und $M^3$ Silizium, Germanium oder Zinn ist,

$R^{12}$ und $R^{13}$ gleich oder verschieden ist, und ein Wasserstoffatom, eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SR^{14}_2$, $-SiR^{14}_3$, $-OSiR^{14}_3$, worin $R^{14}$ ein Halogenatom, eine $C_1$-$C_{10}$-Alkylgruppe oder eine $C_6$-$C_{10}$-Arylgruppe ist, oder Halogen tragen können, $R^{23}$ gleich oder verschieden sind und ein Wasserstoffatom, ein Halogenatom oder eine $C_1$-$C_{40}$-kohlenwasserstoffhaltige Gruppe wie eine $C_1$-$C_{10}$-Alkylgruppe, eine $C_1$-$C_{10}$-Alkoxy-, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe bedeuten, oder einer oder mehr Reste $R^{23}$ mit einem oder mehr Resten $R^{15}$ und $R^{16}$ und/oder einem oder mehr Resten $R^{10}$, $R^{11}$, $R^{12}$ und $R^{13}$ verbunden sind, und m eine ganze Zahl von O bis 24 ist, wobei für den Fall, daß $M^2$ gleich C, m gleich 0 und $R^{11}$ gleich $CH_2$ ist, mindestens einer der Reste $R^4$, $R^8$, $R^{10}$, $R^{12}$, $R^{13}$ ungleich Alkyl und/oder mindestens einer der Reste $R^3$, $R^5$, $R^6$, $R^7$ und $R^9$ ungleich Wasserstoff ist.

**4.** Stereorigide Metallocenverbindung gemäß Anspruch 3, worin $M^1$ Zirkonium ist, $R^1$ und $R^2$ gleich sind und ein Halogenatom bedeuten, $R^3$, $R^4$, $R^5$, $R^6$, $R^7$, $R^8$ und $R^9$ gleich oder verschieden sind und Wasserstoff oder eine $C_1$-$C_4$-Alkylgruppe oder eine $C_6$-$C_{14}$-Arylgruppe bedeuten, oder $R^8$ und $R^9$ sowie $R^3$ und $R^4$ und/oder $R^5$ und $R^6$ zusammen mit den sie verbindenden Atomen ein aromatisches Kohlenwasserstoffringsystem bilden, $M^2$ ein Kohlenstoffatom ist, $R^{10}$ eine $C_1$-$C_6$-Alkylgruppe ist, $R^{11}$ $-CH_2$-$CH_2$- ist, $R^{12}$ und $R^{13}$ gleich oder verschieden sind und eine Methyl- oder Phenyl-Gruppe bedeuten und m = 0 ist.

**5.** Katalysatorkomponente, enthaltend mindestens eine stereorigide Metallocenverbindung gemäß einem oder mehreren der Ansprüch 1 bis 4, welche geträgert und/oder vorpolymerisiert ist.

**6.** Verfahren zur Herstellung eines Cycloolefincopolymers durch Polymerisation a) mindestens eines polycyclischen Olefins, b) mindestens eines acyclischen 1-Olefins und c) gegebenenfalls eines oder mehrerer monocyclischer Olefine, in Gegenwart eines Katalysators, welcher mindestens einen Cokatalysator und mindestens eine stereorigiden Metallocenverbindung enthält, wobei die stereorigide Metallocenverbindung als Liganden zwei substituierte oder unsubstituierte Cyclopentadienylgruppen aufweist, die über ein mono- oder polycyclisches Ringsystem miteinander verbunden sind, worin sich eine Cyclopentadienylgruppe als Substituent an dem mono- oder polycyclischen Ringsystem befindet, während eine weitere Cyclopentadienylgruppe an das mono- oder polycyclische Ringsystem anelliert ist.

**7.** Verfahren gemäß Anspruch 6, worin das mono- oder polycyclische Ringsystem der stereorigiden Metallocenverbindung mindestens sechs Ringatome aufweist.

**8.** Verfahren gemäß Anspruch 6, worin die stereorigide Metallocenverbindung eine Verbindung der Formel I ist

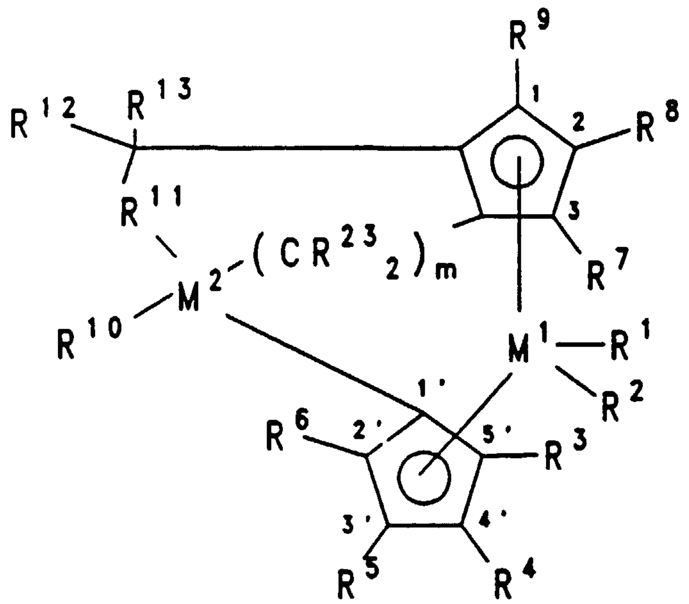

(I),

worin

| | |
|---|---|
| $M^1$ | ein Metall der Gruppe IIIb, IVb, Vb oder VIb des Periodensystems ist, |
| $M^2$ | Kohlenstoff, Silizium oder Germanium ist, |
| $R^1$ und $R^2$ | gleich oder verschieden sind und ein Wasserstoffatom, eine $C_1$-$C_{40}$-kohlenwasserstoffhaltige Gruppe wie eine $C_1$-$C_{10}$-Alkyl-, eine $C_1$-$C_{10}$-Alkoxy, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^{14}_2$, worin $R^{14}$ ein Halogenatom, eine $C_1$-$C_{10}$-Alkylgruppe oder eine $C_6$-$C_{10}$-Arylgruppe ist, bedeuten, oder $R^1$ und $R^2$ zusammen mit den sie verbindenden Atomen ein Ringsystem bilden, |
| $R^3$, $R^4$, $R^5$, $R^6$, $R^7$, $R^8$ und $R^9$ | gleich oder verschieden sind und ein Wasserstoffatom, ein Halogenatom, eine $C_1$-$C_{20}$-kohlenwasserstoffhaltige Gruppe wie eine $C_1$-$C_{10}$-Alkylgruppe, die halogeniert sein kann, eine $C_6$-$C_{20}$-Arylgruppe, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe, einen $-R^{14}$-$SiR^{14}_3$-, $-NR^{14}_2$-, $-SiOR^{14}_3$-, $-SiSR^{14}_3$- oder $-PR^{14}_2$-Rest bedeuten, worin $R^{14}$ ein Halogenatom, eine $C_1$-$C_{10}$-Alkylgruppe oder eine $C_6$-$C_{10}$-Arylgruppe ist, oder zwei oder mehr benachbarte Reste $R^3$, $R^4$, $R^5$, $R^6$, $R^7$, $R^8$ und $R^9$ zusammen mit den sie verbindenen Atomen ein Ringsystem bilden, welches bevorzugt 4-40, besonders bevorzugt 6-15 Kohlenstoffatome enthält, |
| $R^{10}$ | ein Wasserstoffatom, oder eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SiR^{14}_3$,$-SR^{14}_2$ oder $-OSiR^{14}_3$ tragen können, worin $R^{14}$ ein Halogenatom, eine $C_1$-$C_{10}$-Alkylgruppe oder eine $C_6$-$C_{10}$-Arylgruppe ist, oder $R^{10}$ mit einem oder mehreren der Reste $R^3$, $R^4$, $R^5$ und $R^6$ verbunden ist. |
| $R^{11}$ | |

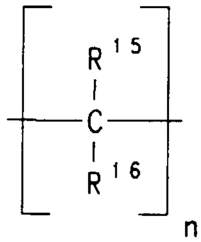 , 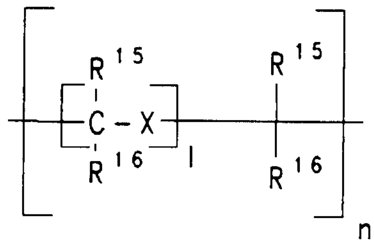 , 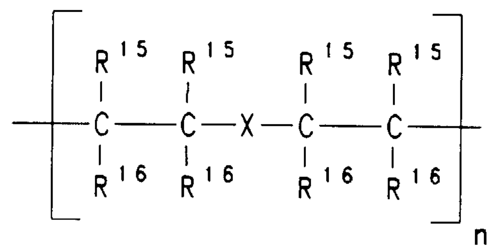 ,

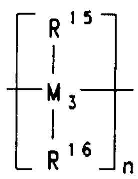 , 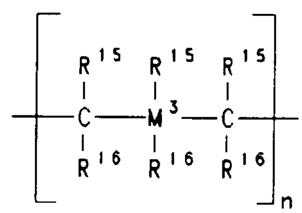 , 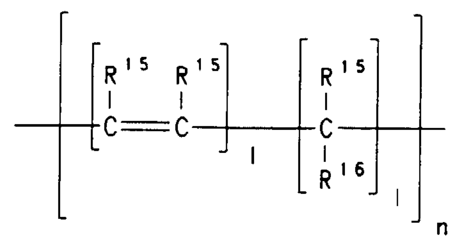

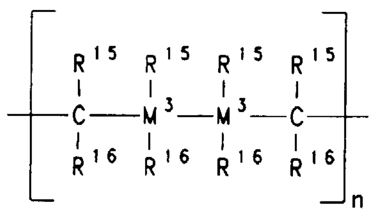 oder 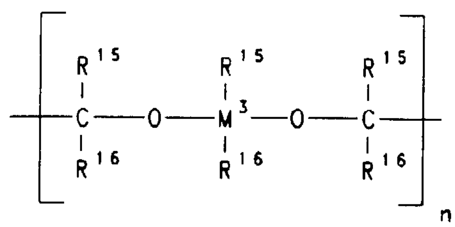

ist, wobei n eine ganze Zahl von 1 bis 20 ist, l ein ganze Zahl von 0 bis 20 ist, X gleich O, $=NR^{14}$, =CO, $=PR^{14}$, $=P(O)R^{14}$, =SO, $=SO_2$ oder -S- ist, worin $R^{14}$ ein Halogenatom, eine $C_1$-$C_{10}$-Alkylgruppe oder eine $C_6$-$C_{10}$-Arylgruppe ist,

$R^{15}$ und $R^{16}$ gleich oder verschieden sind und ein Wasserstoffatom, ein Halogenatom, oder eine $C_1$-$C_{40}$-kohlenwasserstoffhaltige Gruppe wie eine $C_1$-$C_{10}$-Alkyl-, eine $C_1$-$C_{10}$-Fluoralkyl-, eine $C_1$-$C_{10}$-Alkoxy-, eine $C_6$-$C_{10}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl- oder eine $C_8$-$C_{40}$-Arylalkenylgruppe bedeuten, oder zwei Reste $R^{15}$, zwei Reste $R^{16}$, oder

$R^{15}$ und $R^{16}$ jeweils mit den sie verbindenen Atomen einen oder mehrere Ringe bilden, und $M^3$ Silizium, Germanium oder Zinn ist,

$R^{12}$ und $R^{13}$ gleich oder verschieden ist, und ein Wasserstoffatom, eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SR^{14}_2$, $-SiR^{14}_3$, $-OSiR^{14}_3$, worin $R^{14}$ ein Halogenatom, eine $C_1$-$C_{10}$-Alkylgruppe oder eine $C_6$-$C_{10}$-Arylgruppe ist, oder Halogen tragen können, $R^{23}$ gleich oder verschieden sind und ein Wasserstoffatom, ein Halogenatom oder eine $C_1$-$C_{40}$-kohlenwasserstoffhaltige Gruppe wie eine $C_1$-$C_{10}$-Alkylgruppe, eine $C_1$-$C_{10}$-Alkoxy-, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylal-

kyl- oder eine $C_7$-$C_{40}$-Arylalkenylgruppe bedeuten, oder einer oder mehr Reste $R^{23}$ mit einem oder mehr Resten $R^{15}$ und $R^{16}$ und/oder einem oder mehr Resten $R^{10}$, $R^{11}$, $R^{12}$ und $R^{13}$ verbunden sind, und m eine ganze Zahl von O bis 24 ist.

**9.** Verfahren gemäß Anspruch 8, worin $M^1$ Zirkonium ist, $R^1$ und $R^2$ gleich sind und ein Halogenatom bedeuten, $R^3$, $R^4$, $R^5$, $R^6$, $R^7$, $R^8$ und $R^9$ gleich oder verschieden sind und Wasserstoff oder eine $C_1$-$C_4$-Alkylgruppe oder eine $C_6$-$C_{14}$-Arylgruppe bedeuten, oder $R^8$ und $R^9$ sowie $R^3$ und $R^4$ und/oder $R^5$ und $R^6$ zusammen mit den sie verbindenden Atomen ein aromatisches Kohlenwasserstoffringsystem bilden, $M^2$ ein Kohlenstoffatom ist, $R^{10}$ eine $C_1$-$C_6$-Alkylgruppe ist, $R^{11}$ $-CH_2$-$CH_2$- ist, $R^{12}$ und $R^{13}$ gleich oder verschieden sind und eine Methyl- oder Phenyl-Gruppe bedeuten und m = 0 ist.

**10.** Verfahren gemäß einem oder mehreren der Ansprüche 6 bis 9, worin der Cokatalysator ein Aluminoxan ist.

**11.** Cycloolefincopolymer, herstellbar nach dem Verfahren gemäß einem oder mehreren der Ansprüche 6 bis 10.

**12.** Polymerlegierung, enthaltend mindestens ein Cycloolefincopolymer gemäß Anspruch 11.

**13.** Formkörper, enthaltend mindestens ein Cycloolefincopolymer gemäß Anspruch 11.

**14.** Formkörper, enthaltend eine Polymerlegierung gemäß Anspruch 12.

**15.** Verwendung einer stereorigiden Metallocenverbindung, die als Liganden zwei substituierte oder unsubstituierte Cyclopentadienylgruppen aufweist, die über ein mono- oder polycyclisches Ringsystem miteinander verbunden sind, worin sich eine Cyclopentadienylgruppe als Substituent an dem mono- oder polycyclischen Ringsystem befindet, während eine weitere Cyclopentadienylgruppe an das mono- oder polycyclische Ringsystem anelliert ist, zur Herstellung eines Cycloolefincopolymers.

## Claims

**1.** A stereorigid metallocene compound containing, as ligands, two substituted or unsubstituted cyclopentadienyl groups which are bonded to one another via a monocyclic or polycyclic ring system, in which one cyclopentadienyl group is located, as substituent, on the monocyclic or polycyclic ring system, while a further cyclopentadienyl group is fused to the monocyclic or polycyclic ring system, and metallocenes containing a 4-($\eta^5$-3'-alkylcyclopentadienyl)-4,6,6-trimethyl($\eta^5$-2-alkyl-4,5-tetrahydropentalene) as ligand system are excluded.

**2.** A stereorigid metallocene compound as claimed in claim 1, in which the monocyclic or polycyclic ring system has at least six ring atoms.

**3.** A stereorigid metallocene compound as claimed in claim 1, which has the formula I

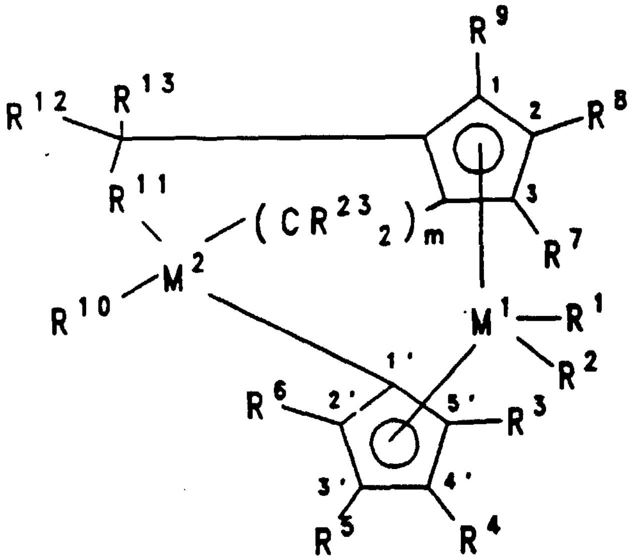

(I)

in which

$M^1$ is a metal from group IIIb, IVb, Vb or VIb of the Periodic Table,

$M^2$ is carbon, silicon, or germanium,

$R^1$ and $R^2$ are identical or different and are a hydrogen atom, a $C_1$-$C_{40}$-hydrocarbon-containing group, such as a $C_1$-$C_{10}$-alkyl group, a $C_1$-$C_{10}$-alkoxy group, a $C_6$-$C_{10}$-aryl group, a $C_6$-$C_{25}$-aryloxy group, a $C_2$-$C_{10}$-alkenyl group, a $C_7$-$C_{40}$-arylalkyl group or a $C_7$-$C_{40}$-arylalkenyl group, an OH group, a halogen atom or $NR^{14}_2$, in which $R^{14}$ is a halogen atom, a $C_1$-$C_{10}$-alkyl group or a $C_6$-$C_{10}$-aryl group, or $R^1$ and $R^2$, together with the atoms connecting them, form a ring system,

$R^3$, $R^4$, $R^5$, $R^6$, $R^7$, $R^8$ and $R^9$ are identical or different and are a hydrogen atom, a halogen atom, a $C_1$-$C_{20}$-hydrocarbon-containing group, such as a $C_1$-$C_{10}$-alkyl group, which may be halogenated, a $C_6$-$C_{20}$-aryl group, a $C_6$-$C_{20}$-aryloxy group, a $C_2$-$C_{12}$-alkenyl group, a $C_7$-$C_{40}$-arylalkyl group, a $C_7$-$C_{40}$-alkylaryl group or a $C_8$-$C_{40}$-arylalkenyl group, a $-SiR^{14}_3$, $-NR^{14}_2$, $-SiOR^{14}_3$, $-SiSR^{14}_3$ or $-PR^{14}_2$ radical, in which $R^{14}$ is a halogen atom, a $C_1$-$C_{10}$-alkyl group or a $C_6$-$C_{10}$-aryl group, or two or more adjacent radicals $R^3$, $R^4$, $R^5$, $R^6$, $R^7$, $R^8$ and $R^9$, together with the atoms connecting them, form a ring system preferably containing 4-40, particularly preferably 6-15, carbon atoms,

$R^{10}$ is a hydrogen atom, a $C_1$-$C_{40}$-hydrocarbon-containing group, such as a $C_1$-$C_{20}$-alkyl group, a $C_1$-$C_{10}$-alkoxy group, a $C_6$-$C_{20}$-aryl group, a $C_6$-$C_{20}$-aryloxy group, a $C_2$-$C_{12}$-alkenyl group, a $C_7$-$C_{40}$-arylalkyl group, a $C_7$-$C_{40}$-alkylaryl group or a $C_8$-$C_{40}$-arylalkenyl group, each of which may carry $-NR^{14}_3$, $-SiR^{14}_3$, $-SR^{14}_2$ or $-OSiR^{14}_3$ radicals, in which $R^{14}$ is a halogen atom, a $C_1$-$C_{10}$-alkyl group or a $C_6$-$C_{10}$-aryl group, or $R^{10}$ is connected to one or more of the radicals $R^3$, $R^4$, $R^5$ and $R^6$

$R^{11}$ is

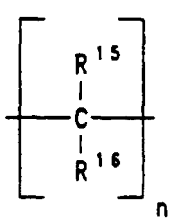 , 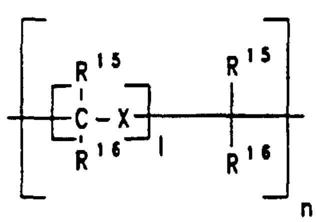 , 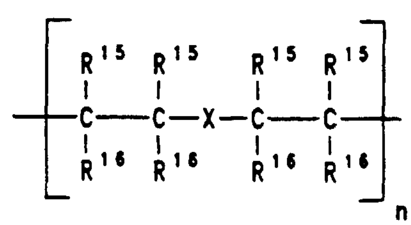 ,

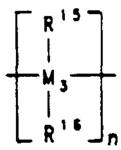 , 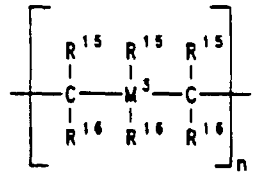 , 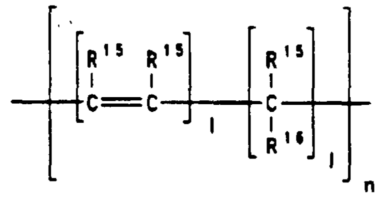

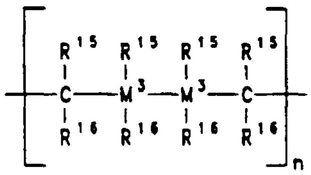 or 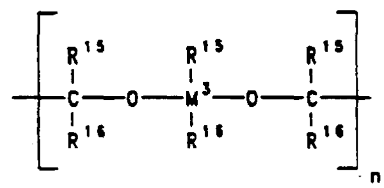

where n is an integer from 1 to 20, l is an integer from 0 to 20, X is O, $=NR^{14}$, =CO, $=PR^{14}$, $=P(O)R^{14}$, =SO, $=SO_2$ or -S-, in which $R^{14}$ is a halogen atom, a $C_1$-$C_{10}$-alkyl group or a $C_6$-$C_{10}$-aryl group,
$R^{15}$ and $R^{16}$ are identical or different and are a hydrogen atom, a halogen atom or a $C_1$-$C_{40}$-hydrocarbon-containing group, such as a $C_1$-$C_{10}$-alkyl group, a $C_1$-$C_{10}$-fluoroalkyl group, a $C_1$-$C_{10}$-alkoxy group, a $C_6$-$C_{10}$-aryl group, a $C_6$-$C_{10}$-fluoroaryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, or a $C_8$-$C_{40}$-arylalkenyl group or two radicals $R^{15}$, two radicals $R^{16}$ or $R^{15}$ and $R^{16}$, in each case together with the atoms connecting them, form one or more rings, and $M^3$ is silicon, germanium or tin,
$R^{12}$ and $R^{13}$ are identical or different and are a hydrogen atom, a $C_1$-$C_{40}$-hydrocarbon-containing group, such as a $C_1$-$C_{20}$-alkyl group, a $C_1$-$C_{10}$-alkoxy group, a $C_6$-$C_{20}$-aryl group, a $C_6$-$C_{20}$-aryloxy group, a $C_2$-$C_{12}$-alkenyl group, a $C_7$-$C_{40}$-arylalkyl group, a $C_7$-$C_{40}$-alkylaryl group or a $C_8$-$C_{40}$-arylalkenyl group, each of which may carry $-NR^{14}_3$, $-SR^{14}_2$,
$-SiR^{14}_3$ or $-OSiR^{14}_3$ radicals, in which $R^{14}$ is a halogen atom, a $C_1$-$C_{10}$-alkyl group or a $C_6$-$C_{10}$-aryl group, or may carry halogen,
$R^{23}$ is identical or different and is a hydrogen atom, a halogen atom or a $C_1$-$C_{40}$-hydrocarbon-containing group, such as a $C_1$-$C_{10}$-alkyl group, a $C_1$-$C_{10}$-alkoxy group, a $C_6$-$C_{10}$-aryl group, a $C_6$-$C_{25}$-aryloxy group, a $C_2$-$C_{10}$-alkenyl group, a $C_7$-$C_{40}$-arylalkyl group or a $C_7$-$C_{40}$-arylalkenyl group, or one or more radicals $R^{23}$ are bonded to one or both radicals $R^{15}$ and $R^{16}$ and/or to one or more radicals $R^{10}$, $R^{11}$, $R^{12}$ and $R^{13}$, and m is an integer from 0 to 24, where, in the case where $M^2$ is C, m is 0 and $R^{11}$ is $CH_2$, at least one of the radicals $R^4$, $R^8$, $R^{10}$, $R^{12}$ and $R^{13}$ is not alkyl and/or at least one of the radicals $R^3$, $R^5$, $R^6$, $R^7$ and $R^9$ is not hydrogen.

**4.** A stereorigid metallocene compound as claimed in claim 3, in which $M^1$ is zirconium, $R^1$ and $R^2$ are identical and are a halogen atom, $R^3$, $R^4$, $R^5$, $R^6$, $R^7$, $R^8$ and $R^9$ are identical or different and are hydrogen or a $C_1$-$C_4$-alkyl group or a $C_6$-$C_{14}$-aryl group, or $R^8$ and $R^9$ and $R^3$ and $R^4$ and/or $R^5$ and $R^6$, together with the atoms connecting them, form an aromatic hydrocarbon ring system, $M^2$ is a carbon atom, $R^{10}$ is a $C_1$-$C_6$-alkyl group, $R^{11}$ is $-CH_2$-$CH_2$-, $R^{12}$ and $R^{13}$ are identical or different and are a methyl or phenyl group, and m is 0.

**5.** A catalyst component comprising at least one stereorigid metallocene compound as claimed in one or more of claims 1 to 4, which is supported and/or prepolymerized.

**6.** A process for the preparation of a cycloolefin copolymer by polymerization of a) at least one polycyclic olefin, b) at least one acyclic 1-olefin and c), if desired, one or more monocyclic olefins, in the presence of a catalyst comprising at least one cocatalyst and at least one stereorigid metallocene compound, where the stereorigid metallocene compound contains, as ligands, two substituted or unsubstituted cyclopentadienyl groups which are bonded to one another via a monocyclic or polycyclic ring system, in which one cyclopentadienyl group is located, as substituent, on the monocyclic or polycyclic ring system, whereas a further cyclopentadienyl group is fused to the monocyclic or polycyclic ring system.

**7.** The process as claimed in claim 6, in which the monocyclic or polycyclic ring system of the stereorigid metallocene

compound has at least six ring atoms.

**8.** The process as claimed in claim 6, in which the stereorigid metallocene compound is a compound of the formula I

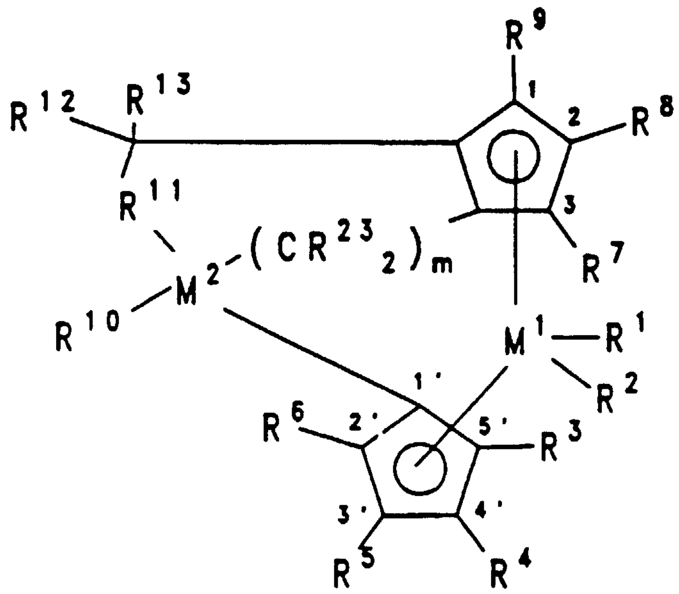

(I)

in which

$M^1$ is a metal from group IIIb, IVb, Vb or VIb of the Periodic Table,
$M^2$ is carbon, silicon, or germanium,
$R^1$ and $R^2$ are identical or different and are a hydrogen atom, a $C_1$-$C_{40}$-hydrocarbon-containing group, such as a $C_1$-$C_{10}$-alkyl group, a $C_1$-$C_{10}$-alkoxy group, a $C_6$-$C_{10}$-aryl group, a $C_6$-$C_{25}$-aryloxy group, a $C_2$-$C_{10}$-alkenyl group, a $C_7$-$C_{40}$-arylalkyl group or a $C_7$-$C_{40}$-arylalkenyl group, an OH group, a halogen atom or $NR^{14}_2$, in which $R^{14}$ is a halogen atom, a $C_1$-$C_{10}$-alkyl group or a $C_6$-$C_{10}$-aryl group, or $R^1$ and $R^2$, together with the atoms connecting them, form a ring system,
$R^3$, $R^4$, $R^5$, $R^6$, $R^7$, $R^8$ and $R^9$ are identical or different and are a hydrogen atom, a halogen atom, a $C_1$-$C_{20}$-hydrocarbon-containing group, such as a $C_1$-$C_{10}$-alkyl group, which may be halogenated, a $C_6$-$C_{20}$-aryl group, a $C_6$-$C_{20}$-aryloxy group, a $C_2$-$C_{12}$-alkenyl group, a $C_7$-$C_{40}$-arylalkyl group, a $C_7$-$C_{40}$-alkylaryl group or a $C_8$-$C_{40}$-arylalkenyl group, a $-SiR^{14}_3$, $-NR^{14}_2$, $-SiOR^{14}_3$, $-SiSR^{14}_3$ or $-PR^{14}_2$ radical, in which $R^{14}$ is a halogen atom, a $C_1$-$C_{10}$-alkyl group or a $C_6$-$C_{10}$-aryl group, or two or more adjacent radicals $R^3$, $R^4$, $R^5$, $R^6$, $R^7$, $R^8$ and $R^9$, together with the atoms connecting them, form a ring system preferably containing 4-40, particularly preferably 6-15, carbon atoms,
$R^{10}$ is a hydrogen atom, a $C_1$-$C_{40}$-hydrocarbon-containing group, such as a $C_1$-$C_{20}$-alkyl group, a $C_1$-$C_{10}$-alkoxy group, a $C_6$-$C_{20}$-aryl group, a $C_6$-$C_{20}$-aryloxy group, a $C_2$-$C_{12}$-alkenyl group, a $C_7$-$C_{40}$-arylalkyl group, a $C_7$-$C_{40}$-alkylaryl group or a $C_8$-$C_{40}$-arylalkenyl group, each of which may carry $-NR^{14}_3$, $-SiR^{14}_3$, $-SR^{14}_2$ or $-OSiR^{14}_3$ radicals, in which $R^{14}$ is a halogen atom, a $C_1$-$C_{10}$-alkyl group or a $C_6$-$C_{10}$-aryl group, or $R^{10}$ is connected to one or more of the radicals $R^3$, $R^4$, $R^5$ and $R^6$,
$R^{11}$ is

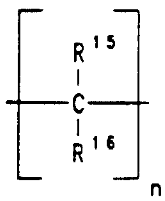 , 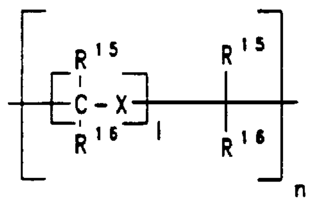 , 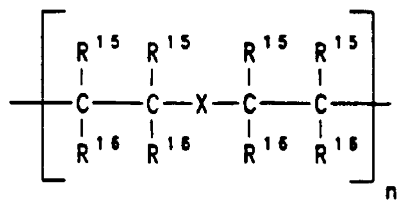 ,

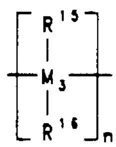 , 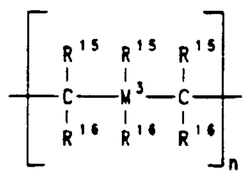 , 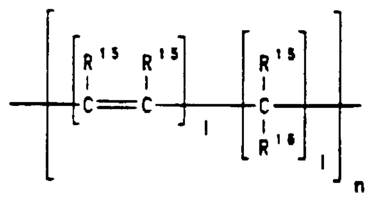

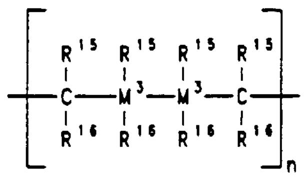 or 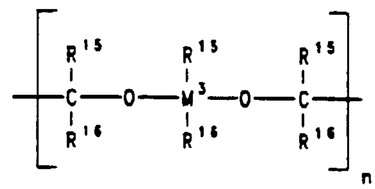

where n is an integer from 1 to 20, l is an integer from 0 to 20, X is O, $=NR^{14}$, =CO, $=PR^{14}$, $=P(O)R^{14}$, =SO, $=SO_2$ or -S-, in which $R^{14}$ is a halogen atom, a $C_1$-$C_{10}$-alkyl group or a $C_6$-$C_{10}$-aryl group,

$R^{15}$ and $R^{16}$ are identical or different and are a hydrogen atom, a halogen atom or a $C_1$-$C_{40}$-hydrocarbon-containing group, such as a $C_1$-$C_{10}$-alkyl group, a $C_1$-$C_{10}$-fluoroalkyl group, a $C_1$-$C_{10}$-alkoxy group, a $C_6$-$C_{10}$-aryl group, a $C_6$-$C_{10}$-fluoroaryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, or a $C_8$-$C_{40}$-arylalkenyl group or two radicals $R^{15}$, two radicals $R^{16}$ or $R^{15}$ and $R^{16}$, in each case together with the atoms connecting them, form one or more rings, and $M^3$ is silicon, germanium or tin,

$R^{12}$ and $R^{13}$ are identical or different and are a hydrogen atom, a $C_1$-$C_{40}$-hydrocarbon-containing group, such as a $C_1$-$C_{20}$-alkyl group, a $C_1$-$C_{10}$-alkoxy group, a $C_6$-$C_{20}$-aryl group, a $C_6$-$C_{20}$-aryloxy group, a $C_2$-$C_{12}$-alkenyl group, a $C_7$-$C_{40}$-arylalkyl group, a $C_7$-$C_{40}$-alkylaryl group or a $C_8$-$C_{40}$-arylalkenyl group, each of which may carry $-NR^{14}_3$, $-SR^{14}_2$, $-SiR^{14}_3$ or $-OSiR^{14}_3$ radicals, in which $R^{14}$ is a halogen atom, a $C_1$-$C_{10}$-alkyl group or a $C_6$-$C_{10}$-aryl group, or may carry halogen,

$R^{23}$ is identical or different and is a hydrogen atom, a halogen atom or a $C_1$-$C_{40}$-hydrocarbon-containing group, such as a $C_1$-$C_{10}$-alkyl group, a $C_1$-$C_{10}$-alkoxy group, a $C_6$-$C_{10}$-aryl group, a $C_6$-$C_{25}$-aryloxy group, a $C_2$-$C_{10}$-alkenyl group, a $C_7$-$C_{40}$-arylalkyl group or a $C_7$-$C_{40}$-arylalkenyl group, or one or more radicals $R^{23}$ are bonded to one or both radicals $R^{15}$ and $R^{16}$ and/or to one or more radicals $R^{10}$, $R^{11}$, $R^{12}$ and $R^{13}$, and m is an integer from 0 to 24.

**9.** The process as claimed in claim 8, in which $M^1$ is zirconium, $R^1$ and $R^2$ are identical and are a halogen atom, $R^3$, $R^4$, $R^5$, $R^6$, $R^7$, $R^8$ and $R^9$ are identical or different and are hydrogen or a $C_1$-$C_4$-alkyl group or a $C_6$-$C_{14}$-aryl group, or $R^8$ and $R^9$ and $R^3$ and $R^4$ and/or $R^5$ and $R^6$, together with the atoms connecting them, form an aromatic hydrocarbon ring system, $M^2$ is a carbon atom, $R^{10}$ is a $C_1$-$C_6$-alkyl group, $R^{11}$ is $-CH_2-CH_2-$, $R^{12}$ and $R^{13}$ are identical or different and are a methyl or phenyl group, and m is 0.

**10.** The process as claimed in one or more of claims 6 to 9, in which the cocatalyst is an aluminoxane.

**11.** A cycloolefin copolymer which can be prepared by the process as claimed in one or more of claims 6 to 10.

**12.** A polymer alloy comprising at least one cycloolefin copolymer as claimed in claim 11.

**13.** A molding comprising at least one cycloolefin copolymer as claimed in claim 11.

**14.** A molding comprising a polymer alloy as claimed in claim 12.

**15.** The use of a stereorigid metallocene compound containing, as ligands, two substituted or unsubstituted cyclopentadienyl groups which are bonded to one another via a monocyclic or polycyclic ring system, in which one cyclopentadienyl group is located, as substituent, on the monocyclic or polycyclic ring system, whereas a further cyclopentadienyl group is fused to the monocyclic or polycyclic ring system, for the preparation of a cycloolefin copolymer.

**Revendications**

**1.** Composé de métallocéne stéréorigide, qui présente, à titre de ligands, deux groupes cyclopentadiényle substitués ou non substitués, qui sont mutuellement reliés par l'intermédiaire d'un système monocyclique polycyclique, où un groupe cyclopentadiényle se trouve, à titre de substituant, sur le système monocyclique ou polycyclique, cependant qu'un autre groupe cyclopentadiényle est annelé au système monocyclique ou polycyclique et d'où sont exclus des métallocènes qui présentent 4-($\eta^5$-3'-alkylcyclopentadiényl)-4,6,6-triméthyl-($\eta^5$-2-alkyl-4,5-tétrahydropentalène) à titre de système ligand.

**2.** Composé de métallocène stéréorigide suivant la revendication 1, où le système monocyclique ou polycyclique présente au moins six atomes cycliques.

**3.** Composé de métallocène stéréorigide suivant la revendication 1, qui présente la formule I

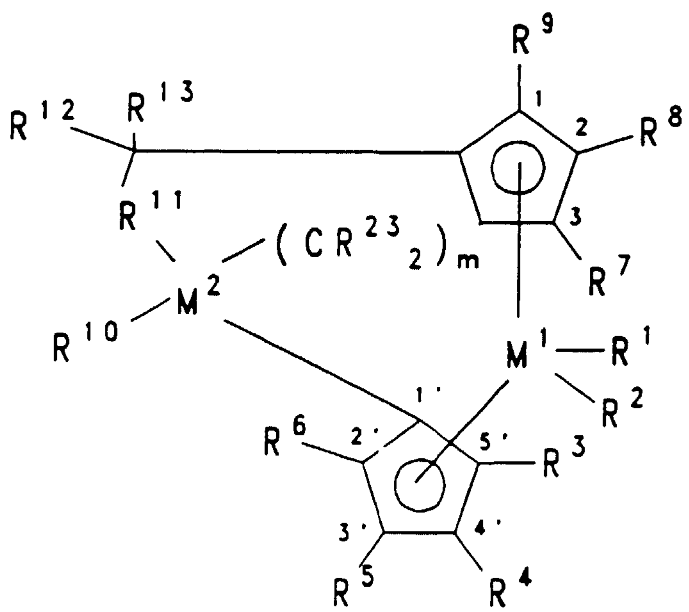

(I)

dans laquelle

| | |
|---|---|
| $M^1$ | représente un métal du groupe IIIb, IVb, Vb ou VIb du système périodique, |
| $M^2$ | représente le carbone, le silicium, ou le germanium, |
| $R^1$ et $R^2$ | sont identiques ou différents et représentent chacun un atome d'hydrogène, un groupe hydrocarboné en $C_1$ à $C_{40}$, comme un groupe alkyle en $C_1$ à $C_{10}$, un groupe alcoxy en $C_1$ à $C_{10}$, un groupe aryle en $C_6$ à $C_{10}$, un groupe aryloxy en $C_6$ à $C_{25}$, un groupe alcényle en $C_2$ à $C_{10}$, un groupe arylalkyle en $C_7$ à |

$C_{40}$, ou un groupe arylalcényle en $C_7$ à $C_{40}$, un groupe OH, un atome d'halogène ou un groupe $NR^{14}_2$, où $R^{14}$ représente un atome d'halogène, un groupe alkyle en $C_1$ à $C_{10}$, ou un groupe aryle en $C_6$ à $C_{10}$, ou bien $R^1$ et $R^2$ forment ensemble un système cyclique avec les atomes qui les relient,

$R^3$, $R^4$, $R^5$, $R^6$, $R^7$, $R^8$ et $R^9$ sont identiques ou différents et représentent chacun un atome d'hydrogène, un atome d'halogène, un groupe hydrocarboné en $C_1$ à $C_{20}$, comme un groupe alkyle en $C_1$ à $C_{10}$, qui peut être halogéné, un groupe aryle en $C_6$ à $C_{20}$, un groupe aryloxy en $C_6$ à $C_{20}$, un groupe alcényle en $C_2$ à $C_{12}$, un groupe arylalkyle en $C_7$ à $C_{40}$, un groupe alkylaryle en $C_7$ à $C_{40}$, ou un groupe arylalcényle en $C_8$ à $C_{40}$, un groupe $-R^{14}-SiR^{14}_3-$, $-NR^{14}_2-$, $-SiOR^{14}_3-$, $-SiOR^{14}_3-$ ou $-PR^{14}_2$, où $R^{14}$ représente un atome d'halogène, un groupe alkyle en $C_1$ à $C_{10}$, ou un groupe aryle en $C_6$ à $C_{10}$, ou bien deux ou plus de deux restes voisins $R^3$, $R^4$, $R^5$, $R^6$, $R^7$, $R^8$ et $R^9$ forment ensemble un système cyclique avec des atomes qui les relient, qui contient, de préférence, de 4 à 40, de manière bien plus avantageuse encore, de 6 à 15, atomes de carbone,

$R^{10}$ représente un atome d'hydrogène ou un groupe hydrocarboné en $C_1$ à $C_{40}$, comme un groupe alkyle en $C_1$ à $C_{20}$, un groupe alcoxy en $C_1$ à $C_{10}$, un groupe aryle en $C_6$ à $C_{20}$, un groupe aryloxy en $C_6$ à $C_{20}$, un groupe alcényle en $C_2$ à $C_{12}$, un groupe arylalkyle en $C_7$ à $C_{40}$, un groupe alkylaryle en $C_7$ à $C_{40}$, ou un groupe arylalcényle en $C_8$ à $C_{40}$, qui peuvent chaque fois porter des restes $-NR^{14}_3$, $-SiR^{14}_3$, $-SR^{14}_2$ ou $-OSiR^{14}_3$, ou $R^{14}$ représente un atome d'halogène, un groupe alkyle en $C_1$ à $C_{10}$, ou un groupe aryle en $C_6$ à $C_{10}$, ou bien $R^{10}$ est lié à un ou plusieurs des restes $R^3$, $R^4$, $R^5$ et $R^6$.

$R^{11}$ représente un groupe

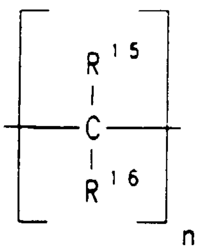,
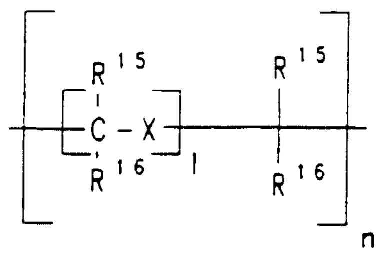,
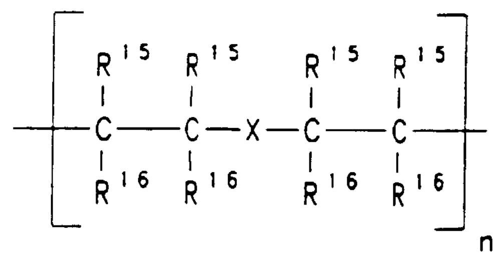,

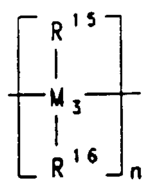,
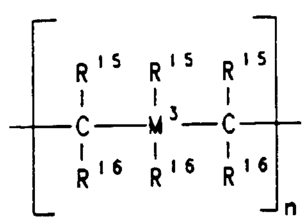,
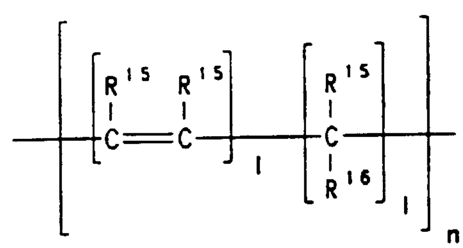

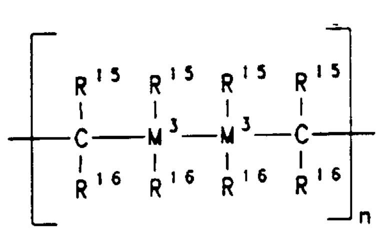

ou

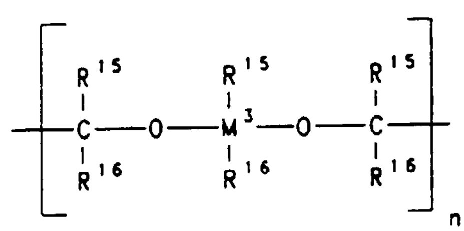

où n est un nombre entier dont la valeur varie de 1 à 20, l est un nombre entier dont la valeur varie de 0 à 20, X représente O, $=NR^{14}$, =CO, $=PR^{14}$, $=P(O)R^{14}$, =SO, $=SO_2$ ou -S-, où $R^{14}$ représente un atome d'halogène, un groupe alkyle en $C_1$ à $C_{10}$, ou un groupe aryle en $C_6$ à $C_{10}$,

$R^{15}$ et $R^{16}$ sont identiques ou différents et représentent chacun un atome d'hydrogène, un atome d'halogène, ou un groupe hydrocarboné en $C_1$ à $C_{40}$, comme un groupe alkyle en $C_1$ à $C_{10}$, un groupe fluoralkyle en $C_1$ à $C_{10}$, un groupe alcoxy en $C_1$ à $C_{10}$, un groupe aryle en $C_6$ à $C_{10}$, un groupe fluoraryle en $C_6$ à $C_{10}$, un groupe aryloxy en $C_6$ à $C_{10}$, un groupe alcényle en $C_2$ à $C_{10}$, un groupe arylalkyle en $C_7$ à $C_{40}$, un groupe alkylaryle en $C_7$ à $C_{40}$, ou un groupe arylalcényle en $C_8$ à $C_{40}$, ou bien deux restes $R^{15}$, deux restes $R^{16}$, ou bien

$R^{15}$ et $R^{16}$ forment un ou plusieurs noyaux avec les atomes qui les relient et $M^3$ représente le silicium, le germanium, ou l'étain.

$R^{12}$ et $R^{16}$ sont identiques ou différents et représentent chacun un atome d'hydrogène, un radical hydrocarboné en $C_1$ à $C_{40}$, comme un radical alkyle en $C_1$ à $C_{20}$, un radical alcoxy en $C_1$ à $C_{10}$, un groupe aryle en $C_6$ à $C_{20}$, un groupe aryloxy en $C_6$ à $C_{20}$, un groupe alcényle en $C_2$ à $C_{12}$, un groupe arylalkyle en $C_7$ à $C_{40}$, un groupe alkylaryle en $C_7$ à $C_{40}$, ou un groupe arylalcényle en $C_8$ à $C_{40}$, qui peuvent à chaque fois porter des restes $-NR^{14}_3$, $-SR^{14}_2$, $-SiR^{14}_3$ ou $-OSiR^{14}_3$, représente un atome d'halogène, un groupe alkyle en $C_1$ à $C_{10}$, ou un groupe aryle en $C_6$ à $C_{10}$, ou un atome d'halogène,

$R^{23}$ sont des symboles identiques ou différents et représentent à chaque fois un atome d'hydrogène, un atome d'halogène ou un groupe hydrocarboné en $C_1$ à $C_{40}$, comme un groupe alkyle en $C_1$ à $C_{10}$, un groupe alcoxy en $C_1$ à $C_{10}$, un groupe aryle en $C_6$ à $C_{10}$, un groupe aryloxy en $C_6$ à $C_{25}$, un groupe alcényle en $C_2$ à $C_{10}$, un groupe arylalkyle en $C_7$ à $C_{40}$, ou un groupe arylalcényle en $C_7$ à $C_{40}$, ou bien un ou plusieurs des restes $R^{23}$ sont liés avec un ou plusieurs restes $R^{15}$ et $R^{16}$ et/ou un ou plusieurs restes $R^{10}$, $R^{11}$, $R^{12}$ et $R^{13}$ et m représente un nombre entier dont la valeur varie de 0 à 24, où dans le cas où $M^2$ représente C, m est égal à 0 et $R^{11}$ représente $CH_2$, au moins l'un des restes $R^4$, $R^8$, $R^{10}$, $R^{12}$, $R^{13}$ diffère d'un radical alkyle et/ou au moins l'un des restes $R^3$, $R^5$, $R^6$, $R^7$ et $R^9$ diffère de l'hydrogène.

**4.** Composé de métallocène stéréorigide suivant la revendication 3, où $M^1$ représente le zirconium, $R^1$ et $R^2$ sont identiques et désignent un atome d'halogène, $R^3$, $R^4$, $R^5$, $R^6$, $R^7$, $R^8$ et $R^9$, sont identiques ou différents et représentent des atomes d'hydrogène ou un groupe alkyle en $C_1$ à $C_4$ ou un groupe aryle en $C_6$ à $C_{14}$, ou bien $R^8$ et $R^9$ ainsi que $R^3$ et $R^4$ et/ou $R^5$ et $R^6$ forment ensemble avec les atomes qui les relient, un système cyclique hydrocarboné aromatique, $M^2$ représente un atome de carbone, $R^{10}$ représente un groupe alkyle en $C_1$ à $C_6$, $R^{11}$ représente un groupe $-CH_2-CH_2-$, $R^{12}$ et $R^{13}$ sont identiques ou différents et représentent chacun un radical méthyle ou un radical phényle et m est égal à 0.

**5.** Composant catalytique, qui contient au moins un composé du métallocène stéréorigide suivant une ou plusieurs des revendications 1 à 4, qui est supporté et/ou qui est prépolymérisé.

**6.** Procédé de préparation d'un polymère d'une cyclooléfine par la polymérisation a) d'au moins une oléfine polycyclique, b) d'au moins une 1-oléfine acyclique et c) éventuellement d'une ou plusieurs oléfines monocycliques, en présence d'un catalyseur, qui contient au moins un cocatalyseur et au moins un composé de métallocène stéréorigide, où le composé de métallocène stéréorigide présente, à titre de ligands, deux groupes cyclopentadiényle substitués ou non substitués, qui sont mutuellement reliés par l'intermédiaire d'un système monocyclique ou polycyclique, où un groupe cyclopentadiényle se trouve, à titre de substituant, sur le système monocyclique ou polycyclique, cependant qu'un autre groupe cyclopentadiényle est annelé au système monocyclique ou polycyclique.

**7.** Procédé suivant la revendication 6, où le système monocyclique ou polycyclique du composé de métallocène stéréorigide présente au moins six atomes cycliques.

**8.** Procédé suivant la revendication 6, caractérisé en ce que le composé de métallocène stéréorigide est un composé de la formule I

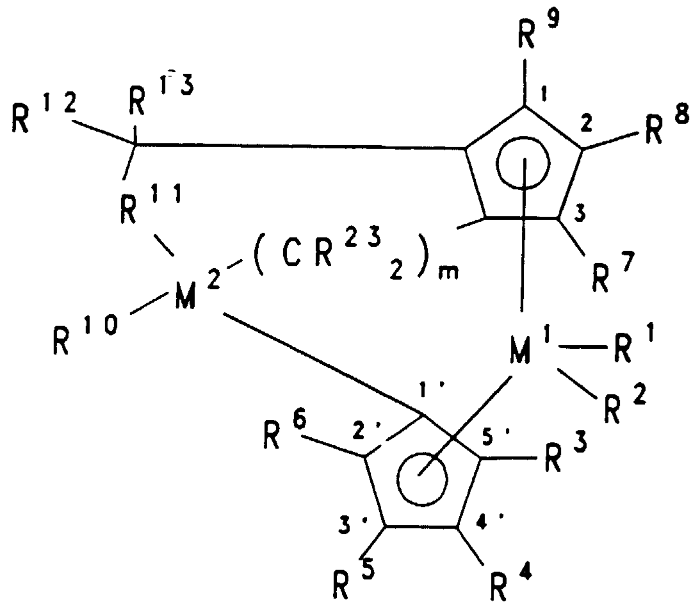

(I)

dans laquelle

$M^1$ représente un métal du groupe IIIb, IVb, Vb ou VIb du système périodique,

$M^2$ représente le carbone, le silicium, ou le germanium,

$R^1$ et $R^2$ sont identiques ou différents et représentent chacun un atome d'hydrogène, un groupe hydrocarboné en $C_1$ à $C_{40}$, comme un groupe alkyle en $C_1$ à $C_{10}$, un groupe alcoxy en $C_1$ à $C_{10}$, un groupe aryle en $C_6$ à $C_{10}$, un groupe aryloxy en $C_6$ à $C_{25}$, un groupe alcényle en $C_2$ à $C_{10}$, un groupe arylalkyle en $C_7$ à $C_{40}$, ou un groupe arylalcényle en $C_7$ à $C_{40}$, un groupe OH, un atome d'halogène ou un groupe $NR^{14}_2$, où $R^{14}$ représente un atome d'halogène, un groupe alkyle en $C_1$ à $C_{10}$, ou un groupe aryle en $C_6$ à $C_{10}$, ou bien $R^1$ et $R^2$ forment ensemble un système cyclique avec les atomes qui les relient,

$R^3$, $R^4$, $R^5$, $R^6$, $R^7$, $R^8$ et $R^9$ sont identiques ou différents et représentent chacun un atome d'hydrogène, un atome d'halogène, un groupe hydrocarboné en $C_1$ à $C_{20}$, comme un groupe alkyle en $C_1$ à $C_{10}$, qui peut être halogéné, un groupe aryle en $C_6$ à $C_{20}$, un groupe aryloxy en $C_6$ à $C_{20}$, un groupe alcényle en $C_2$ à $C_{12}$, un groupe arylalkyle en $C_7$ à $C_{40}$, un groupe alkylaryle en $C_7$ à $C_{40}$, ou un groupe arylalcényle en $C_8$ à $C_{40}$, un groupe $-R^{14}-SiR^{14}_3-$, $-NR^{14}_2-$, $-SiOR^{14}_3-$, $-SiOR^{14}_3-$ ou $-PR^{14}_2$, où $R^{14}$ représente un atome d'halogène, un groupe alkyle en $C_1$ à $C_{10}$, ou un groupe aryle en $C_6$ à $C_{10}$, ou bien deux ou plus de deux restes voisins $R^3$, $R^4$, $R^5$, $R^6$, $R^7$, $R^8$ et $R^9$ forment ensemble un système cyclique avec des atomes qui les relient, qui contient, de préférence, de 4 à 40, de manière bien plus avantageuse encore, de 6 à 15, atomes de carbone,

$R^{10}$ représente un atome d'hydrogène ou un groupe hydrocarboné en $C_1$ à $C_{40}$, comme un groupe alkyle en $C_1$ à $C_{20}$, un groupe alcoxy en $C_1$ à $C_{10}$, un groupe aryle en $C_6$ à $C_{20}$, un groupe aryloxy en $C_6$ à $C_{20}$, un groupe alcényle en $C_2$ à $C_{12}$, un groupe arylalkyle en $C_7$ à $C_{40}$, un groupe alkylaryle en $C_7$ à $C_{40}$, ou un groupe arylalcényle en $C_8$ à $C_{40}$, qui peuvent chaque fois porter des restes $-NR^{14}_3$, $-SiR^{14}_3$, $-SR^{14}_2$ ou $-OSiR^{14}_3$, ou $R^{14}$ représente un atome d'halogène, un groupe alkyle en $C_1$ à $C_{10}$, ou un groupe aryle en $C_6$ à $C_{10}$, ou bien $R^{10}$ est lié à un ou plusieurs des restes $R^3$, $R^4$, $R^5$ et $R^6$.

$R^{11}$ représente un groupe

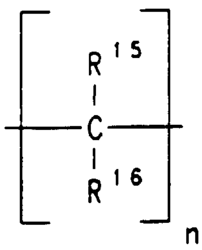 , 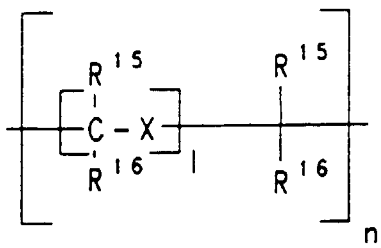 , 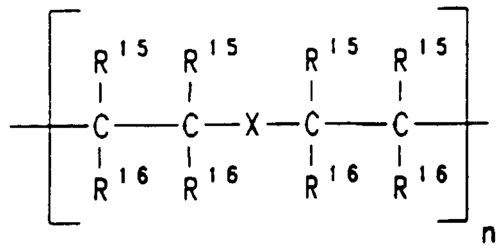 ,

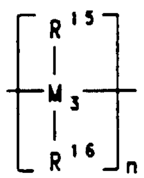 , 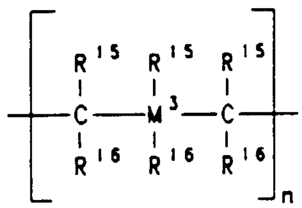 , 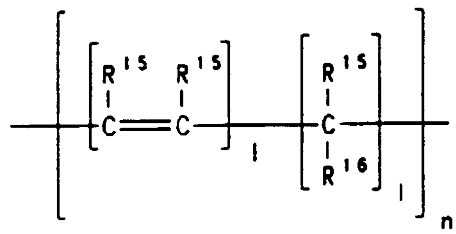

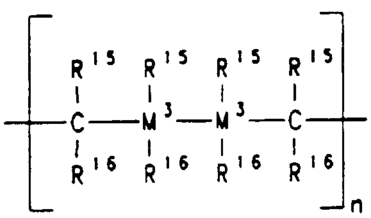 ou 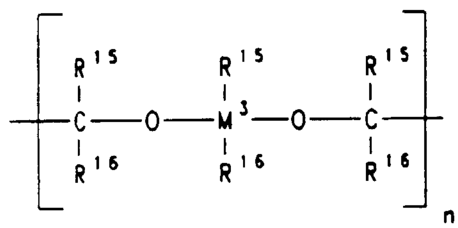

où n est un nombre entier dont la valeur varie de 1 à 20, l est un nombre entier dont la valeur varie de 0 à 20, X représente O, $=NR^{14}$, =CO, $=PR^{14}$, $=P(O)R^{14}$, =SO, $=SO_2$ ou -S-, où $R^{14}$ représente un atome d'halogène, un groupe alkyle en $C_1$ à $C_{10}$, ou un groupe aryle en $C_6$ à $C_{10}$,

$R^{15}$ et $R^{16}$ sont identiques ou différents et représentent chacun un atome d'hydrogène, un atome d'halogène, ou un groupe hydrocarboné en $C_1$ à $C_{40}$, comme un groupe alkyle en $C_1$ à $C_{10}$, un groupe fluoralkyle en $C_1$ à $C_{10}$, un groupe alcoxy en $C_1$ à $C_{10}$, un groupe aryle en $C_6$ à $C_{10}$, un groupe fluoraryle en $C_6$ à $C_{10}$, un groupe aryloxy en $C_6$ à $C_{10}$, un groupe alcényle en $C_2$ à $C_{10}$, un groupe arylalkyle en $C_7$ à $C_{40}$, un groupe alkylaryle en $C_7$ à $C_{40}$, ou un groupe arylalcényle en $C_8$ à $C_{40}$, ou bien deux restes $R^{15}$, deux restes $R^{16}$, ou bien

$R^{15}$ et $R^{16}$ forment un ou plusieurs noyaux avec les atomes qui les relient et $M^3$ représente le silicium, le germanium, ou l'étain,

$R^{12}$ et $R^{16}$ sont identiques ou différents et représentent chacun un atome d'hydrogène, un radical hydrocarboné en $C_1$ à $C_{40}$, comme un radical alkyle en $C_1$ à $C_{20}$, un radical alcoxy en $C_1$ à $C_{10}$, un groupe aryle en $C_6$ à $C_{20}$, un groupe aryloxy en $C_6$ à $C_{20}$, un groupe alcényle en $C_2$ à $C_{12}$, un groupe arylalkyle en $C_7$ à $C_{40}$, un groupe alkylaryle en $C_7$ à $C_{40}$, ou un groupe arylalcényle en $C_8$ à $C_{40}$, qui peuvent à chaque fois porter des restes $-NR^{14}_3$, $-SR^{14}_2$, $-SiR^{14}_3$ ou $-OSiR^{14}_3$, où $R^{14}$ représente un atome d'halogène, un groupe alkyle en $C_1$ à $C_{10}$, ou un groupe aryle en $C_6$ à $C_{10}$, ou un atome d'halogène,

$R^{23}$ sont des symboles identiques ou différents et représentent à chaque fois un atome d'hydrogène, un atome d'halogène ou un groupe hydrocarboné en $C_1$ à $C_{40}$, comme un groupe alkyle en $C_1$ à $C_{10}$, un groupe alcoxy en $C_1$ à $C_{10}$,

un groupe aryle en $C_6$ à $C_{10}$, un groupe aryloxy en $C_6$ à $C_{25}$, un groupe alcényle en $C_2$ à $C_{10}$, un groupe arylalkyle en $C_7$ à $C_{40}$, ou un groupe arylalcényle en $C_7$ à $C_{40}$, ou bien un ou plusieurs des restes $R^{23}$ sont liés avec un ou plusieurs restes $R^{15}$ et $R^{16}$ et/ou un ou plusieurs restes $R^{10}$, $R^{11}$, $R^{12}$ et $R^{13}$ et m représente un nombre entier dont la valeur varie de 0 à 24.

**9.** Procédé suivant la revendication 8, où $M^1$ représente le zirconium, $R^1$ et $R^2$ sont identiques et désignent un atome d'halogène, $R^3$, $R^4$, $R^5$, $R^6$, $R^7$, $R^8$ et $R^9$, sont identiques ou différents et représentent des atomes d'hydrogène ou un groupe alkyle en $C_1$ à $C_4$ ou un groupe aryle en $C_6$ à $C_{14}$, ou bien $R^8$ et $R^9$ ainsi que $R^3$ et $R^4$ et/ou $R^5$ et $R^6$ forment ensemble avec les atomes qui les relient, un système cyclique hydrocarboné aromatique, $M^2$ représente un atome de carbone,
$R^{10}$ représente un groupe alkyle en $C_1$ à $C_6$, $R^{11}$ représente un groupe $-CH_2-CH_2-$, $R^{12}$ et $R^{13}$ sont identiques ou différents et représentent chacun un radical méthyle ou un radical phényle et m est égal à 0.

**10.** Procédé suivant une ou plusieurs des revendications 6 à 9, où le cocatalyseur est un aluminoxane.

**11.** Copolymère de cyclooléfine, que l'on peut préparer par mise en oeuvre du procédé suivant une ou plusieurs des revendications 6 à 10.

**12.** Alliage de polymères qui contient au moins un copolymère de cyclooléfine suivant la revendication 11.

**13.** Articles moulés contenant au moins un polymère de cyclooléfine suivant la revendication 11.

**14.** Articles moulés contenant un alliage de polymères suivant la revendication 12.

**15.** Utilisation d'un composé de métallocène stéréorigide qui présente, à titre de ligands, deux groupes cyclopentadiényle substitués ou non substitués, qui sont mutuellement reliés par l'intermédiaire d'un système monocyclique ou polycyclique, où un groupe cyclopentadiényle se trouve, à titre de substituant, sur le système monocyclique ou polycyclique, cependant qu'un autre groupe cyclopentadiényle est annelé au système monocyclique ou polycyclique, en vue de la préparation d'un copolymère de cyclooléfine.